(19) Europäisches Patentamt
European Patent Office
Office européen des brevets

(11) **EP 2 862 706 B1**

(12) **EUROPEAN PATENT SPECIFICATION**

(45) Date of publication and mention of the grant of the patent:
**23.12.2020 Bulletin 2020/52**

(21) Application number: **13803571.2**

(22) Date of filing: **14.06.2013**

(51) Int Cl.:
*B32B 3/30* (2006.01)          *G02B 1/11* (2015.01)
*G09F 9/00* (2006.01)

(86) International application number:
**PCT/JP2013/066480**

(87) International publication number:
**WO 2013/187506 (19.12.2013 Gazette 2013/51)**

(54) **LAMINATE**

LAMINAT

STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.04.2015 Bulletin 2015/17**

(73) Proprietor: **Mitsubishi Chemical Corporation**
**Tokyo 100-8251 (JP)**

(72) Inventors:
• **FUJIYAMA, Kousuke**
**Otake-shi**
**Hiroshima 739-0693 (JP)**
• **MORI, Seiichiro**
**Toyohashi-shi**
**Aichi 440-8601 (JP)**
• **OTANI, Go**
**Otake-shi**
**Hiroshima 739-0693 (JP)**
• **IKAWA, Masashi**
**Otake-shi**
**Hiroshima 739-0693 (JP)**
• **NAKAI, Yusuke**
**Otake-shi**
**Hiroshima 739-0693 (JP)**
• **JIGAMI, Tetsuya**
**Otake-shi**
**Hiroshima 739-0693 (JP)**

(74) Representative: **Hoffmann Eitle**
**Patent- und Rechtsanwälte PartmbB**
**Arabellastraße 30**
**81925 München (DE)**

(56) References cited:
EP-A1- 2 128 659          EP-A1- 2 447 740
WO-A1-2008/096872      WO-A1-2012/133943
JP-A- 2012 163 723        JP-A- 2013 018 910
JP-A- 2013 018 910        US-A1- 2009 246 494

**Description**

TECHNICAL FIELD

The present embodiment relates to a laminate having a fine relief structure, and an antireflection article, an image display device, and a touch panel which use the same.

This application is based upon and claims the benefit of priority of the prior Japanese Patent Application Nos. 2012-135981 and 2012-135983, filed on June 15, 2012, Japanese Patent Application No. 2012-201734, filed on September 13, 2012, and Japanese Patent Application No. 2012-249312, filed on November 13, 2012.

BACKGROUND ART

There has been a problem that the visibility decreases at the interface (surface) where various displays, lenses, show windows and the like are in contact with air due to the reflection of sunlight, the illumination or the like from the surface. As a method for attenuating the reflection, a method is known in which several layers of films having different refractive indices are laminated so that the light reflected from the film surface and the light reflected from the interface between the film and the substrate are canceled out by interference. These films are usually produced by a method such as sputtering, vapor deposition, or coating. However, there has been a limit to decrease the reflectivity and the wavelength dependency of reflectivity although the number of laminated films is increased in such a method. In addition, a material having a lower refractive index has been demanded for decreasing the number of laminated films in order to curtail the manufacturing cost.

It is effective to introduce air into the material in some way in order to lower the refractive index of the material. In addition, as one of the methods to lower the refractive index of the film surface, for example, a method is widely known in which a fine relief structure is formed on the surface of the film. According to these methods, it is possible to significantly lower the refractive index since the refractive index of the entire layer of the surface having a fine relief structure formed thereon is determined by the volume ratio between the air and the material forming the fine relief structure. As a result, it is possible to decrease the reflectivity with less number of laminated films.

In addition, there has been proposed an antireflection film formed on a glass substrate in which a pyramidal convex portion is continuously and entirely formed on the antireflection film (for example, see Patent Document 1). As described in Patent Document 1, the antireflection film having a pyramidal convex portion (fine relief structure) formed thereon is an effective antireflection means since the cross-sectional area when the fine relief structure is cut by a plane parallel to the film surface continuously changes and the refractive index gradually increases from the air side toward the substrate side. In addition, the antireflection film exhibits excellent optical performance.

It is preferable that the antireflection film having such a fine relief structure as described above exhibit antifouling property since it is in contact with air.

Examples of the method for imparting antifouling property may include a method in which a film composed of polytetrafluoroethylene is formed on the surface having a fine relief structure (for example, see Patent Document 2) and a method in which a layer formed of a resin composition containing a fluorine-containing compound is shaped by pressure welding with a stamper having a fine relief structure (for example, see Patent Document 3). In these methods, antifouling property is imparted by lowering the surface energy so as to repel dirt.

In addition, a method in which a photocatalytic layer (such as titanium oxide) having a fine relief structure is coated on the substrate surface (for example, see Patent Document 4), a method in which a hydrophilic film composed of an inorganic oxide such as a silicon oxide is formed on the substrate surface by sputtering (for example, see Patent Document 5), and a method in which an inorganic fine particle solution is spin-coated on the surface of soda glass and then cured by heating (for example, see Patent Document 6) are also proposed. In these methods, the surface is made hydrophilic so that the attached dirt is suspended in water and easily wiped off.

In addition, in Patent Document 7, there is disclosed a photocurable composition which is composed of a specific fluorine-based surfactant and a polymerizable compound having a specific constitution as a coating material for optical disk.

In addition, there has been proposed a method in which the dirt that has entered the concave portion is forced out by decreasing the elastic modulus of the material constituting the fine relief structure as described in Patent Document 8.

Patent Document 9 describes a transparent molded body including a transparent substrate and an uneven layer, which may have a pitch of 200 nm. This document does not disclose that the surface layer includes a layer composed of a cured product of an active energy ray-curable resin composition, which comprises a bifunctional (meth)acrylate in a content of 20 - 80 parts by mass, based on 100 parts by mass of a total of polymerizable components.

Patent Document 10 describes a structure having a specific surface shape and physical properties, which may have a storage elastic modulus of about 0.15 GPa at a temperature of 190°C and about 1.4 GPa at a temperature of 25°C.

Patent Document 11 describes an antireflection article which includes a base body and an antireflection film having a plurality of convex portions on a surface. This document does not disclose that the antireflection film has an elastic modulus of less than 160 MPa.

PRIOR ART DOCUMENTS

PATENT DOCUMENT

Patent Document 1: JP 63-75702 A
Patent Document 2: JP 2003-172808 A
Patent Document 3: JP 2005-97371 A
Patent Document 4: JP 2001-183506 A
Patent Document 5: JP 2001-315247 A
Patent Document 6: JP 11-217560 A
Patent Document 7: JP 7-316468 A
Patent Document 8: JP 2011-76072 A
Patent Document 9: EP 2 128 659 A1
Patent Document 10: US 2009/246494 A1
Patent Document 11: EP 2 447 740 A1

DISCLOSURE OF THE INVENTION

PROBLEM TO BE SOLVED BY THE INVENTION

Dirt hardly adheres when the surface energy is lowered as described in Patent Documents 2 and 3. However, there is a case in which dirt enters the concave portion at the time of use, and it is difficult to remove dirt in some cases when the dirt is once adhered.

In addition, there is a case in which the decomposition of dirt hardly proceeds by the indoor light in the case of using a photocatalyst as described in Patent Document 4. Moreover, there is a case in which the resin film is also decomposed when a resin film or the like is used as a substrate and a photocatalytic layer is coated on the surface thereof.

In addition, with regard to the antifouling article having a fine relief structure obtained using the manufacturing method by sputtering described in Patent Documents 5 and 6, it is difficult to adjust the distance between the adjacent convex portions and the height of the convex portion in some cases and thus there is a case in which the antireflection property is not sufficiently obtained.

In addition, antifouling property is not sufficiently imparted in some cases even though the method to blend a fluorine-based surfactant described in Patent Document 7 is applied to the fine relief structure.

In addition, the effect of the method described in Patent Document 8 is confirmed for the laminate having a pitch of the fine relief structure is 250 nm or more but the surface layer thereof is inferior in excoriation resistance in some cases, and thus there is room for improvement in terms of practicality, for example, as an antireflection article such as a building material or a display application.

An object of the present embodiment is to provide a laminate equipped with a surface layer excellent in antifouling property that dirt can be easily removed and excoriation resistance.

MEANS FOR SOLVING PROBLEM

(1) An aspect of the invention is a laminate including a surface layer having a surface formed in a fine relief structure, wherein the surface layer includes a layer composed of a cured product of an active energy ray-curable resin composition,
wherein the active energy ray-curable resin composition contains a tri- or higher functional (meth)acrylate (A) and a bifunctional (meth)acrylate (B),
wherein a content of the tri- or higher functional (meth)acrylate (A) is from 5 to 40 parts by mass and a content of the bifunctional (meth)acrylate (B) is from 20 to 80 parts by mass (provided that a total of polymerizable components in the active energy ray-curable resin composition is 100 parts by mass), wherein an elastic modulus of the surface layer is less than 160 MPa and a slope of a friction coefficient of the surface layer is $1,8 \times 10^{-3}$ or less, wherein the slope of the friction coefficient $\mu_s$ is calculated by the following Equation:

$$\mu_s = (\mu_{50} - \mu_1)/(50 - 1)$$

wherein $\mu_1$ is a value of the dynamic friction coefficient at the first friction and $\mu_{50}$ is a value of the dynamic friction coefficient at the fiftieth friction, and wherein the dynamic friction coefficient of the laminate is measured by using a friction tester under the following conditions: a load of 1000 g is applied to the BEMCOT® M-3II having an area of 2 cm$^2$ which is placed on the surface of the laminate and the reciprocating friction is performed 50 times at a reciprocating distance of 30 mm and a head speed of 30 mm/sec.

(2) An aspect of the invention is the laminate according to (1), in which the slope of the friction coefficient of the surface layer is $-2.0 \times 10^{-3}$ or more, and wherein preferably the slope of the friction coefficient of the surface layer is $-1.8 \times 10^{-3}$ or more and $1.0 \times 10^{-3}$ or less.

(3) An aspect of the invention is the laminate according to (1) or (2), in which the elastic modulus of the surface layer is less than 100 MPa.

(4) An aspect of the invention is the laminate according to any one of (1) to (3), in which a contact angle of water on the surface layer is 25° or less or 130° or more.

(5) An aspect of the invention is the laminate according to any one of (1) to (4), in which a content of the tri- or higher functional (meth)acrylate (A) is from 10 to 30 parts by mass and a content of the bifunctional (meth)acrylate (B) is from 30 to 70 parts by mass.

(6) An aspect of the invention is the laminate according to any one of (1) to (5), in which the active energy ray-curable resin composition further contains a silicone (meth)acrylate (C) at from 3 to 85 parts by mass (provided that a total of polymerizable components in the active energy ray-curable resin composition is 100 parts by mass and each (A) and (B) excludes (C)).

(7) An aspect of the invention is the laminate according to (5), in which the active energy ray-curable resin composition further contains a silicone (meth)acrylate (C) at from 7 to 70 parts by mass (provided that a total of polymerizable components in the active energy ray-curable resin composition is 100 parts by mass and each (A) and (B) excludes (C)).

(8) An aspect of the invention is the laminate according to any one of (1) to (5), in which the active energy ray-curable resin composition contains a compound (D) having a SH group.

(9) An aspect of the invention is the laminate according to (8), in which the active energy ray-curable resin composition contains a bi- or higher functional (meth)acrylate (E) at from 0 to 95 parts by mass, a silicone (meth)acrylate (C) at from 0 to 75 parts by mass, and the compound (D) having a SH group at from 1 to 60 parts by mass (provided that a total of polymerizable components is 100 parts by mass).

(10) An aspect of the invention is the laminate according to any one of (1) to (9), in which (i) the surface layer is constituted by a layer composed of a cured product of the active energy ray-curable resin composition or (ii) the surface layer is constituted by a layer composed of a cured product of the active energy ray-curable resin composition and a surface treatment layer formed on the layer composed of the cured product of the active energy ray-curable resin composition as an outermost surface layer.

(11) An aspect of the invention is the laminate according to any one of (1) to (9), in which a pitch of the fine relief structure is 100 nm or more and 250 nm or less.

(12) An aspect of the invention is an antireflection article including the laminate according to any one of (1) to (11).

(13) An aspect of the invention is an image display device including the laminate according to any one of (1) to (11).

(14) An aspect of the invention is a touch panel including the laminate according to any one of (1) to (11).

EFFECT OF THE INVENTION

According to the present embodiment, it is possible to provide a laminate equipped with a surface layer excellent in antifouling property that dirt can be easily removed and excoriation resistance. In addition, according to the present embodiment, it is possible to preferably obtain a laminate exhibiting favorable antifouling property that dirt can be easily removed without applying water or an alcohol to the surface. In addition, according to the present embodiment, it is possible to preferably obtain a laminate exhibiting favorable excoriation resistance that the surface layer is not scratched when the dirt is wiped off with a cloth or the like.

BRIEF DESCRIPTION OF DRAWINGS

Fig. 1 is a schematic cross-sectional diagram illustrating an example of the configuration of the laminate according to the present embodiment;

Fig. 2 is a schematic cross-sectional diagram illustrating an example of the configuration of the laminate according to the present embodiment;

Fig. 3 is a schematic cross-sectional diagram illustrating an example of the configuration of the laminate according to the present embodiment; and

Fig. 4 is a schematic cross-sectional diagram illustrating an example of the configuration of the laminate according to the present embodiment.

MODE(S) FOR CARRYING OUT THE INVENTION

Hereinafter, the present embodiment will be described in detail.

(Embodiment 1)

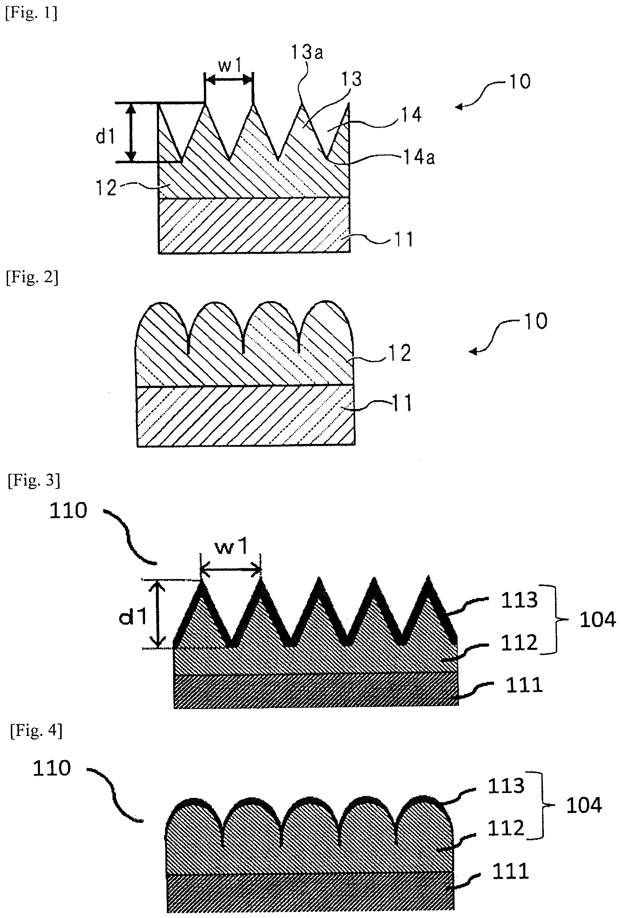

Fig. 1 is a schematic cross-sectional diagram illustrating an example of the configuration of a laminate 10 according to the present embodiment. In Fig. 1, a surface layer 12 composed of a cured product of an active energy ray-curable resin composition is formed on the surface of a transparent substrate 11. In the laminate 10, a fine relief structure is formed on the surface of the surface layer 12.

In the laminate 10, it is preferable that the fine relief structure be formed on the entire surface of the surface layer but the fine relief structure may be formed on a part of the surface of the surface layer. In addition, the fine relief structure may be formed on both surfaces of the laminate 10 in a case in which the laminate 10 has a film shape.

In the laminate of the present embodiment, the elastic modulus in the fine relief structure region, that is, the elastic modulus of the surface layer is less than 160 MPa. In addition, the elastic modulus of the surface layer is preferably 50 MPa or more and 100 MPa or less. For example, it is possible to easily force out the dirt that has entered the concave portion since the fine relief structure is soft when the elastic modulus of the surface layer is less than 250 MPa. In accordance with the present invention, it is possible to more easily force out the dirt that has entered the concave portion since the fine relief structure is softer when the elastic modulus of the surface layer is less than 160 MPa. It is possible to effectively prevent the projection coalescence of the convex portions since the fine relief structure has a sufficient hardness when the elastic modulus of the surface layer is 50 MPa or more. The fine relief structure is sufficiently soft when the elastic modulus of the surface layer is 100 MPa or less, and thus it is possible to freely deform the fine relief structure and to more easily remove the dirt that has entered the concave portion.

In the laminate of the present embodiment, the slope of the friction coefficient of the fine relief structure region, that is, the slope of the friction coefficient of the surface layer is $1.8 \times 10^{-3}$ or less. In addition, the slope of the friction coefficient of the surface layer is preferably $-2.0 \times 10^{-3}$ or more and is preferably $-1.8 \times 10^{-3}$ or more and $1.0 \times 10^{-3}$ or less. An increase in the friction coefficient at the time of rubbing the surface layer with a cloth or the like is small when the slope of the friction coefficient of the surface layer is 0.0018 or less, and thus the fracture of the surface layer does not occur. The coalescence of the convex portions of the fine relief structure at the time of rubbing the surface layer with a cloth or the like does not occur when the slope of the friction coefficient of the surface layer is $-1.8 \times 10^{-3}$ or more, and thus it is possible to maintain the equal antireflection performance before and after excoriation . An increase in the friction coefficient at the time of rubbing the surface layer with a cloth or the like is smaller when the slope of the friction coefficient of the surface layer is $1.0 \times 10^{-3}$ or less, and thus the surface layer is not scratched.

The contact angle of water in the fine relief structure region, that is, the contact angle of water on the surface layer is not particularly limited but is preferably 25° or less or 130° or more and more preferably 15° or less or 135° or more. It is possible to easily wipe off dirt when the contact angle of water on the surface layer is 25° or less since the surface is hydrophilic. It is possible to easily wipe off dirt when the contact angle of water on the surface layer is 130° or more since the surface energy of the surface layer is low. It is possible to more easily wipe off dirt when the contact angle of water on the surface layer is 15° or less since the surface is highly hydrophilic. It is possible to suppress the attachment of dirt when the contact angle of water on the surface layer is 135° or more since the surface energy of the surface layer is sufficiently low. The lower limit of the contact angle of water on the surface layer is not particularly limited, but the contact angle of water on the surface layer is preferably 5° or more and more preferably 7° or more. The upper limit of the contact angle of water on the surface layer is not particularly limited, but the contact angle of water on the surface layer is preferably 150° or less and more preferably 145° or less.

In the laminate of the present embodiment, the surface layer can be constituted by a cured product of an active energy ray-curable resin composition. In addition, it is also possible that the surface layer consists of a layer composed of a cured product of an active energy ray-curable resin composition and a surface treatment layer formed on the layer composed of a cured product of the active energy ray-curable resin composition as an outermost surface layer as described below.

The active energy ray-curable resin composition contains a tri- or higher functional (meth)acrylate (A) at from 5 to 40 parts by mass and a bifunctional (meth)acrylate (B) at from 20 to 80 parts by mass (provided that the total of polymerizable components in the active energy ray-curable resin composition is 100 parts by mass).

It is preferable that the active energy ray-curable resin composition further contains a silicone (meth)acrylate (C) at from 3 to 85 parts by mass. In other words, it is preferable that the active energy ray-curable resin composition contain, for example, the tri- or higher functional (meth)acrylate (A) at from 5 to 40 parts by mass, the bifunctional (meth)acrylate (B) at from 20 to 80 parts by mass, and the silicone (meth)acrylate (C) at from 3 to 85 parts by mass (provided that the total of polymerizable components in the active energy ray-curable resin composition is 100 parts by mass). Meanwhile, the silicone (meth)acrylate (C) is excluded from the tri- or higher functional (meth)acrylate (A) and the bifunctional (meth)acrylate (B).

Here, the tri- or higher functional (meth)acrylate means a compound which has at least three groups selected from an acryloyl group ($CH_2$=CHCO-) and a methacryloyl group ($CH_2$=C($CH_3$)CO-) in the molecule. In addition, the bifunctional (meth)acrylate means a compound which has two of the group selected from an acryloyl group ($CH_2$=CHCO-) and a methacryloyl group ($CH_2$=C($CH_3$)CO-) in the molecule.

The tri- or higher functional (meth)acrylate (A) is preferably tetrafunctional or higher and more preferably pentafunctional or higher. Examples of the tri- or higher functional (meth)acrylate (A) may include ditrimethylolpropane tetra(meth)acrylate, pentaerythritol tetra(meth)acrylate, pentaerythritolethoxy tetra(meth)acrylate, dipentaerythritolhydroxy penta(meth)acrylate, dipentaerythritol hexa(meth)acrylate, a condensation reaction product of succinic acid/trimethylolethane/acrylic acid at a molar ratio of 1: 2: 4, a urethane acrylate, a polyether acrylate, an modified epoxy acrylate, and a polyester acrylate. Examples of the urethane acrylate may include "EBECRYL220", "EBECRYL1290", "EBECRYL1290K", "EBECRYL5129", "EBECRYL8210", "EBECRYL8301 ", and "KRM8200" manufactured by DAICEL-CYTEC COMPANY LTD. Examples of the polyether acrylate may include "EBECRYL81" manufactured by DAICEL-CYTEC COMPANY LTD. Examples of the modified epoxy acrylate may include "EBECRYL3416" manufactured by DAICEL-CYTEC COMPANY LTD. Examples of the polyester acrylate may include "EBECRYL450", "EBECRYL657", "EBECRYL800", "EBECRYL810", "EBECRYL811", "EBECRYL812", "EBECRYL1830", "EBECRYL845", "EBECRYL846", and "EBECRYL1870" manufactured by DAICEL-CYTEC COMPANY LTD. In addition, other examples of the tri- or higher functional (meth)acrylate (A) may include a monomer obtained by adding ethylene oxide or propylene oxide to the above monomer. One kind of these polyfunctional (meth)acrylates (A) may be used singly or two or more kinds thereof may be used concurrently.

The tri- or higher functional (meth)acrylate (A) is contained at from 5 to 40 parts by mass, and preferably from 10 to 30 parts by mass when the total of the polymerizable components in the active energy ray-curable resin composition is 100 parts by mass. For example, it is possible to impart the elastic modulus enough to transfer the fine relief structure onto the surface layer when the content of the tri- or higher functional (meth)acrylate (A) is 1 part by mass or more. In addition, for example, it is possible to suppress an increase in the elastic modulus of the surface layer when the content of the tri- or higher functional (meth)acrylate (A) is 55 parts by mass or less. As a result, dirt is easily forced out from the concave portion and thus it is possible to impart sufficient antifouling property to the laminate. In accordance with the present invention, it is possible to impart a favorable elastic modulus to the surface layer when the content is 5 parts by mass or more, and thus it is possible to suppress the projection coalescence of the convex portions of the fine relief structure. In accordance with the present invention, a decrease in mobility of the convex portion is suppressed when the content is 40 parts by mass or less, and thus antifouling property that dirt can be easily removed without using water or an alcohol is effectively exerted. Meanwhile, in the present specification, the projection coalescence of the projections or the convex portions means that the adjacent projections or convex portions are combined to form one unit.

As the bifunctional (meth)acrylate (B), a bifunctional acrylate having a polyalkylene glycol such as a bifunctional acrylate having polyethylene glycol, a bifunctional acrylate having polypropylene glycol, and a bifunctional acrylate having polybutylene glycol is preferable. Specific examples of the bifunctional acrylate having polyethylene glycol may include Aronix M-240 and Aronix M-260 (manufactured by TOAGOSEI CO., LTD.), NK ester AT-20E and NK ester ATM-35E (manufactured by SHIN-NAKAMURA CHEMICAL CO., LTD.). Specific examples of the bifunctional acrylate having polypropylene glycol may include APG-400 and APG-700 (manufactured by SHIN-NAKAMURA CHEMICAL CO., LTD.). Specific examples of the bifunctional acrylate having polybutylene glycol may include A-PTMG-650 (manufactured by SHIN-NAKAMURA CHEMICAL CO., LTD.). The elastic modulus of the surface layer is suppressed when a bifunctional acrylate having a polyalkylene glycol is used as the bifunctional (meth)acrylate (B), and thus it is easy to force out dirt from the concave portion and antifouling property is effectively exerted. Polyethylene glycol diacrylate is suitably used among the bifunctional acrylates having a polyalkylene glycol from the viewpoint of obtaining further favorable antifouling property. The molecular mobility of the resin of the surface layer is improved when polyethylene glycol diacrylate is used as the bifunctional (meth)acrylate (B), and thus it is easier to force out the dirt that has entered the concave portion and favorable antifouling property is exerted.

The total of the average repeating units of the polyethylene glycol chain present in one molecule of polyethylene glycol diacrylate is preferably from 6 to 40, more preferably from 9 to 30, and even more preferably from 12 to 20. The mobility of the molecules is maintained and thus favorable antifouling property can be exerted when the average repeating unit of the polyethylene glycol chain is 6 or more. The compatibility with tri- or higher functional (meth)acrylate (A) is favorable when the average repeating unit of the polyethylene glycol chain is 40 or less. In addition, among the bifunctional acrylates having a polyalkylene glycol, polypropylene glycol diacrylate and polybutylene glycol diacrylate are also suitably used in terms of compatibility. The compatibility with the silicone (meth)acrylate (C) such as silicone di(meth)acrylate which is less hydrophilic is improved when polypropylene glycol diacrylate or polybutylene glycol diacrylate is used as the bifunctional (meth)acrylate (B), and thus it is possible to obtain a transparent active energy ray-curable resin composition. One kind of these bifunctional (meth)acrylates (B) may be used singly or two or more kinds thereof may be used concurrently. In addition, it is preferable to concurrently use polyethylene glycol and polypropylene glycol diacrylate and/or polybutylene glycol diacrylate in terms of exhibiting both antifouling property and compatibility.

The bifunctional (meth)acrylate (B) is contained at from 20 to 80 parts by mass, and preferably from 30 to 70 parts by mass when the total of the polymerizable components in the active energy ray-curable resin composition is 100 parts by mass. For example, an increase in the elastic modulus of the surface layer is suppressed when the content of the bifunctional (meth)acrylate (B) is 10 parts by mass or more, thus it is easy to force out the dirt from the concave portion, and sufficient antifouling property is exerted as a result. Furthermore, for example, it is possible to keep the elastic modulus enough to transfer the fine relief structure onto the surface layer when the content of the bifunctional (meth)acrylate (B) is 95 parts by mass or less. In accordance with the present invention, it is possible to impart mobility to the convex portion when the content is 20 parts by mass or more, and thus antifouling property is effectively exerted. Furthermore, in accordance with the present invention, a decrease in the elastic modulus is suppressed when the content is 80 parts by mass or less, and thus it is possible to suppress the projection coalescence of the convex portions.

The silicone (meth)acrylate (C) is not particularly limited as long as it is a compound having at least one group selected from an acryloyl group ($CH_2$=CHCO-) and a methacryloyl group ($CH_2$=C($CH_3$)CO-) at the side chain and/or terminal of the compound having an organosiloxane structure. It is desirable to select the silicone (meth)acrylate (C) from the viewpoint of the compatibility with the tri- or higher functional (meth)acrylate (A) and the bifunctional (meth)acrylate (B), and it is preferable to use a compound having a compatible segment which contributes to the compatibility with (A) and (B) as the silicone (meth)acrylate (C). Examples of the compatible segment may include a polyalkylene oxide structure, a polyester structure and a polyamide structure. One kind of these compatible segments may be contained in the silicone (meth)acrylate (C) singly or two or more kinds thereof may be contained. In addition, the silicone (meth)acrylate (C) may be used by being diluted in terms of handling. As the diluent, those having reactivity is preferable in terms of bleed-out from the cured product, or the like. In addition, it is also possible to improve the handling of the silicone (meth)acrylate (C) by mixing the tri- or higher functional (meth)acrylate (A) or the bifunctional (meth)acrylate (B) with the silicone (meth)acrylate (C).

Specific examples of such a silicone (meth)acrylate (C) may suitably include SILAPLANE series manufactured by CHISSO CORPORATION, silicone diacrylate "X-22-164" and "X-22-1602" manufactured by Shin-Etsu Chemical Co., Ltd., "BYK-UV3500" and "BYK-UV3570" manufactured by BYK Japan KK, and TEGO Rad series manufactured by Evonik Degussa Japan Co., Ltd. One kind of these silicone (meth)acrylates (C) may be used singly or two or more kinds thereof may be used concurrently.

The silicone (meth)acrylate (C) is contained at preferably from 3 to 85 parts by mass, more preferably from 7 to 70 parts by mass, and even more preferably from 20 to 70 parts by mass when the total of the polymerizable components in the active energy ray-curable resin composition is 100 parts by mass. The contact angle of water on the surface layer having a fine relief structure is likely to be 130° or more when the content of the silicone (meth)acrylate (C) is 3 parts by mass or more, and thus antifouling property is imparted to the laminate. In addition, it is possible to impart the elastic modulus enough to transfer the fine relief structure onto the surface layer when the content of the silicone (meth)acrylate (C) is 85 parts by mass or less. In addition, the contact angle of water on the surface layer is likely to be 135° or more when the content is 7 parts by mass or more, and thus the antifouling property of the laminate is improved. In addition, the viscosity of the active energy ray-curable resin composition is suppressed when the content is 70 parts by mass or less, and thus handling is improved. Moreover, the compatibility with respect to the components in the active energy ray-curable resin composition, particularly (A) and (B) is favorable and the water repellency of the surface layer and the flexibility of the projections are improved when the content is 20 parts by mass or more, and thus excellent antifouling property is exerted.

The active energy ray-curable resin composition may contain a monofunctional monomer other than these. It is desirable to select the monofunctional monomer in consideration of the compatibility with the tri- or higher functional (meth)acrylate (A) and the bifunctional (meth)acrylate (B). From this point of view, examples the monofunctional monomer may preferably include a hydrophilic monofunctional monomer such as a monofunctional (meth)acrylate having a polyethylene glycol chain in an ester group, a monofunctional (meth)acrylate having a hydroxyl group in an ester group such as a hydroxyalkyl (meth)acrylate, a monofunctional acrylamide, and a cationic monomer such as methacrylamidopropyl trimethylammonium methyl sulfate or methacryloyloxyethyl trimethylammonium methyl sulfate. As the monofunctional monomer, it is possible to use "M-20G", "M-90G", and "M-230G" (manufactured by SHIN-NAKAMURA CHEMICAL CO., LTD.) of a monofunctional (meth)acrylate, specifically.

In addition, it is also possible to add a viscosity modifier such as acryloylmorpholine or vinylpyrrolidone or an adhesion improving agent such as acryloyl isocyanate to improve the adhesion to the transparent substrate to the active energy ray-curable resin composition.

The content of the monofunctional monomer in the active energy ray-curable resin composition is, for example, preferably from 0.1 to 20 parts by mass and more preferably from 5 to 15 parts by mass when the total of the polymerizable components in the active energy ray-curable resin composition is 100 parts by mass. The adhesion between the substrate and the surface layer (resin cured by active energy ray) is improved when the monofunctional monomer is contained. The contents of the tri- or higher functional (meth)acrylate (A) and the bifunctional (meth)acrylate (B) are adjusted when the content of the monofunctional monomer is 20 parts by mass or less, and thus antifouling property is likely to be sufficiently exerted. One kind of the monofunctional monomers may be used singly or two or more kinds thereof may be mixed and used.

In addition, a polymer (oligomer) having a low polymerization degree prepared by polymerizing one kind or two or more kinds of monofunctional monomers may be added to the active energy ray-curable resin composition. Specific examples of such a polymer having a low polymerization degree may include a monofunctional (meth)acrylate having a polyethylene glycol chain in an ester group (for example, "M-230G" manufactured by SHIN-NAKAMURA CHEMICAL CO., LTD.) or a 40/60 copolymerized oligomer of methacrylamidopropyl trimethylammonium methyl sulfate (for example, "MG polymer" manufactured by MRC UNITECH Co., Ltd.).

Furthermore, the active energy ray-curable resin composition may contain an antistatic agent, a mold releasing agent, an ultraviolet absorber, and fine particles such as colloidal silica other than the various monomers or the polymer having a low polymerization degree described above.

The active energy ray-curable resin composition may contain a mold releasing agent. It is possible to maintain favorable releasability at the time of continuously producing a laminate when the mold releasing agent is contained in the active energy ray-curable resin composition. Examples of the mold releasing agent may include a (poly)oxyalkylene alkyl phosphoric acid compound. Particularly, in the case of using an anodic alumina mold, the mold releasing agent is easily adsorbed on the surface of the mold since the (poly)oxyalkylene alkyl phosphoric acid compound and alumina interact with each other.

Examples of the commercially available product of the (poly)oxyalkylene alkyl phosphoric acid compound may include "JP-506H" (trade name) manufactured by JOHOKU CHEMICAL CO., LTD., "Moldwiz INT-1856" (trade name) manufactured by Axel Plastics Research Laboratories, Inc., and "TDP-10", "TDP-8", "TDP-6", "TDP-2", "DDP-10", "DDP-8", "DDP-6", "DDP-4", "DDP-2", "TLP-4", "TCP-5", and "DLP-10" (trade names) manufactured by Nikko Chemicals Co., Ltd.

As the mold releasing agent contained in the active energy ray-curable resin composition, one kind of the mold releasing agents may be used singly or two or more kinds thereof may be used concurrently.

The content of the mold releasing agent contained in the active energy ray-curable resin composition is preferably from 0.01 to 2.0 parts by mass and more preferably from 0.05 to 0.2 part by mass with respect to 100 parts by mass of the polymerizable component. The releasability of the article having a fine relief structure on the surface from a mold is favorable when the content of the mold releasing agent is 0.01 part by mass or more. On the other hand, the adhesion between the cured product of the active energy ray-curable resin composition and the substrate is favorable and the hardness of the cured product is adequate when the proportion of the mold releasing agent is 2.0 parts by mass or less, and thus the fine relief structure can be sufficiently maintained.

In the fine relief structure, the distance w1 (pitch) between the adjacent convex portions of the fine relief structure is preferably equal to or less than the wavelength of visible light, more preferably 100 nm or more and 300 nm or less, even more preferably 150 nm or more and 250 nm or less, and particularly preferably 170 nm or more and 230 nm or less. It is possible to effectively prevent the projection coalescence of the convex portions when the distance is 100 nm or more. The distance is sufficiently smaller than the wavelength of visible light when it is 300 nm or less, and thus the scattering of visible light is effectively suppressed and it is easy to impart excellent antireflection property as a result.

Meanwhile, the "wavelength of visible light" in the present embodiment means a wavelength of 400 nm.

The height d1 of the convex portion 13 is preferably 100 nm or more and more preferably 150 nm or more. It is possible to prevent an increase in the minimum reflectivity and an increase in the reflectivity of a specific wavelength and thus it is easy to impart favorable antireflection property when the height d1 is 100 nm or more.

The aspect ratio (height of convex portion 13/interval between adjacent convex portions) is preferably from 0.5 to 5.0, more preferably from 0.6 to 2.0, and even more preferably from 0.8 to 1.2. It is possible to prevent an increase in the minimum reflectivity and an increase in the reflectivity of a specific wavelength and thus favorable antireflection property is exerted when the aspect ratio is 0.5 or more. The convex portion of the fine relief structure is not likely to be folded at the time of rubbing the surface layer when the aspect ratio is 5 or less, and thus favorable excoriation resistance or antireflection property is exerted.

Meanwhile, the "height of the convex portion" in the present embodiment refers to the vertical distance from the tip 13a of the convex portion 13 to the bottom portion 14a of the adjacent concave portion 14 as illustrated in Fig. 1. In addition, the shape of the convex portion 13 of the fine relief structure is not particularly limited, but it is preferably a structure in which the occupancy of the cross-sectional area when the convex portion is cut by a plane parallel to the film surface continuously increases toward the substrate side such as a substantially conical shape as illustrated in Fig. 1 or a bell shape as illustrated in Fig. 2 in order to continuously increase the refractive index so as to obtain an antireflection function having both a low reflectivity and low wavelength dependency. In addition, a plurality of finer convex portions may be projection coalesced to form the fine relief structure described above.

The method of forming the fine relief structure on the surface of the laminate is not particularly limited, and examples thereof may include a method in which injection molding or press molding is mentioned using a stamper having a fine relief structure formed thereon. In addition, as the method of forming the fine relief structure, for example, a method is also mentioned in which an active energy ray-curable resin composition is filled between stamper having a fine relief structure formed thereon and a transparent substrate, the active energy ray-curable resin composition is cured by irradiating with an active energy ray so as to transfer the concave and convex shape of the stamper, and the stamper is then released therefrom. In addition, as the method of forming the fine relief structure, for example, a method is also mentioned in which an active energy ray-curable resin composition is filled between a stamper having a fine relief structure formed thereon and a transparent substrate, the concave and convex shape of the stamper is transferred to the active energy ray-curable resin composition and the stamper is then released therefrom, and thereafter the active energy ray-curable resin composition is cured by irradiating with an active energy ray. Among these, a method in which an active energy ray-curable resin composition is filled between a stamper having a fine relief structure formed thereon and a transparent substrate, the active energy ray-curable resin composition is cured by irradiating with an active energy ray so as to transfer the concave and convex shape of the stamper, and the stamper is then released therefrom is preferably used in consideration of transferring property of the relief structure and the degree of freedom in the surface constitution.

The substrate is not particularly limited but is preferably a transparent substrate. The transparent substrate is not particularly limited as long as a substrate transmits light. Examples of the transparent substrate may include a methyl methacrylate (co)polymer, polycarbonate, a styrene (co)polymer, a methyl methacrylate-styrene copolymer, cellulose diacetate, cellulose triacetate, cellulose acetate butyrate, polyester, polyamide, polyimide, polyether sulfone, polysulfone, polypropylene, polymethylpentene, polyvinyl chloride, polyvinyl acetal, polyether ketone, polyurethane, glass, and quartz. The transparent substrate may be fabricated by any method of injection molding, extrusion molding, and casting.

The shape of the transparent substrate is not particularly limited and may be appropriately selected depending on the application. The shape is preferably a sheet or a film, for example, in a case in which the application is an antireflection film. In addition, the surface of the transparent substrate may be subjected to, for example, various kinds of coating or the corona discharge treatment in order to improve the adhesion with the active energy ray-curable resin composition or antistatic properties, excoriation resistance, and weather resistance.

The method of fabricating a stamper having a fine relief structure formed thereon is not particularly limited, and examples thereof may include an electron beam lithography method or a laser beam interference method. For example, a mold having a fine relief structure is formed by coating a proper photoresist film on a proper supporting substrate, then exposing the film-coated substrate using light such as an ultraviolet laser, an electron beam, or X-ray and subsequently developing it. It is also possible to use this mold directly as a stamper. In addition, it is also possible to form the fine relief structure directly on the supporting substrate itself by selectively etching the support substrate by dry etching via the photoresist layer and then removing the photoresist layer.

In addition, it is also possible to use anodic porous alumina as a stamper. For example, an alumina nano hole array obtained by a method in which aluminum is anodized by a predetermined voltage in an electrolytic solution such as oxalic acid, sulfuric acid, or phosphoric acid may be utilized as a stamper as disclosed in JP 2005-156695 A. According to this method, it is possible to form pores having significantly high regularity in self-assembly manner by anodizing high purity aluminum by a constant voltage for a long period of time, then removing the oxide film once, and anodizing again. Furthermore, it is also possible to form a fine relief structure having a concave portion in a bell shape in addition to a substantially conical shape by combining the anodic oxidation treatment with the pore size enlargement treatment when anodizing again. In addition, a replicative form is fabricated from the original mold having a fine relief structure by the electroforming method or the like, and this may be used as a stamper.

The shape of the stamper fabricated in this manner is not particularly limited and may be tabular or roll-shaped. A roll shape is preferable from the viewpoint of being able to continuously transfer the fine relief structure to the active energy ray-curable resin composition.

The active energy ray-curable resin composition of the present embodiment can appropriately contain a monomer having a radically polymerizable and/or cationically polymerizable bond in the molecule, a polymer having a low polymerization degree, and a reactive polymer and is cured by a polymerization initiator to be described below. In addition, the active energy ray-curable resin composition may contain a nonreactive polymer.

Specific examples of the active energy ray used when curing the active energy ray-curable resin composition may include visible light, ultraviolet light, an electron beam, plasma, and infrared rays.

The light irradiation of the active energy ray is performed, for example, using a high pressure mercury lamp. The integrated amount of photoirradiation energy is not particularly limited as long as the amount of energy is enough to cure the active energy ray-curable resin composition but, for example, is preferably from 100 to 5000 mJ/cm$^2$, more preferably from 200 to 4000 mJ/cm$^2$, and even more preferably from 400 to 3200 mJ/cm$^2$. The integrated amount of the active energy ray irradiation affects the degree of cure of the active energy ray-curable resin composition in some cases, and thus it is desirable to appropriately select the amount of energy and to irradiate light.

The polymerization initiator (photopolymerization initiator) used in the curing (photocuring) of the active energy ray-curable resin composition is not particularly limited, and examples thereof may include: an acetophenone such as 2,2-diethoxy-acetoxyphenone, p-dimethylacetophenone, 1-hydroxy-dimethyl phenyl ketone, 1-hydroxy-cyclohexyl phenyl ketone, 2-methyl-4-methylthio-2-morpholinopropiophenone, and 2-benzyl-2-dimethylamino-1-(4-morpholinophenyl)butanone; a benzoin such as benzoin methyl ether, benzoin toluenesulfonic acid ester, benzoin methyl ether, benzoin ethyl ether, and benzoin isopropyl ether; a benzophenone such as benzophenone, 2,4-dichlorobenzophenone, 4,4-dichlorobenzophenone,and p-chlorobenzophenone; a phosphine oxide such as 2,4,6-trimethylbenzoyldiphenylphosphine oxide; a ketal; an anthraquinone; a thioxanthone; an azo compound; a peroxide; a 2,3-dialkyl-dione compound; a disulfide compound; a fluoroamine compound; and an aromatic sulfonium. One kind of these photopolymerization initiators may be used singly or two or more kinds thereof may be used concurrently.

In addition, the active energy ray-curable resin composition may be cured by concurrently using photocuring and thermal curing. The thermal polymerization initiator added in the case of concurrently using the thermal curing is not particularly limited, and examples thereof may include: an azo compound such as 2,2'-azobis(4-methoxy-2,4-dimethylvaleronitrile), 2,2'-azobis(2,4-dimethylvaleronitrile), 2,2'-azobis(2-methylpropionitrile), 2,2'-azobis(2-methylbutyronitrile), 1,1'-azobis(cyclohexane-1 -carbonitrile), 1-[(1-cyano-1-methylethyl)azo]formamide, 2-phenylazo-4-methoxy-2,4-dimethylvaleronitrile, and dimethyl 2,2'-azobis(2-methyl propionate); a peroxide such as benzoyl peroxide, t-hexyl peroxy neodecanoate, di(3-methyl-3-methoxybutyl) peroxy dicarbonate, t-butyl peroxy neodecanoate, 2,4-dichlorobenzoyl peroxide, t-hexyl peroxy pivalate, t-butyl peroxy pivalate, 3,5,5-trimethylhexanoyl peroxide, octanoyl peroxide, decanoyl peroxide, lauroyl peroxide, cumylperoxy octate, succinic acid peroxide, acetyl peroxide, t-butyl peroxy isobutyrate, 1,1'-bis(t-butyl peroxy)3,3,5-trimethylcyclohexane, 1,1'-bis(t-butyl peroxy)cyclohexane, t-butyl peroxy benzoate, and dicumyl peroxide. One kind of the thermal polymerization initiator may be used singly or two or more kinds thereof may be used concurrently.

The laminate of the present embodiment can be used in applications such as an antireflection article such as an antireflection film (including an antireflective film) and an antireflector, an optical article such as an image display device, a touch panel, an optical waveguide, a relief hologram, a solar cell, a lens, a polarization separation element, a member for improving the light extraction efficiency of the organic electroluminescence, and a cell culture sheet. The laminate of the present embodiment is particularly suitable for an antireflection article such as an antireflection film (including an antireflective film) and an antireflector.

The laminate of the present embodiment is a laminate equipped with a surface layer excellent in antifouling property that dirt can be easily removed and excoriation resistance, and thus dirt such as sebum to be attached at the time of use hardly adheres and is easily removed and favorable antireflection performance can be exerted when the laminate of the present embodiment is mounted on the outermost surface of an antireflection article, an image display device, a touch panel, and the like. Furthermore, an article excellent in practical use is obtained since it is possible to easily remove dirt without applying water or an alcohol to the surface.

For example, the laminate is pasted on the surface of the object such as an image display device such as a liquid crystal display device, a plasma display panel, an electroluminescence display, and a cathode tube display device, a lens, a show window, an automobile meter cover, and a spectacle lens to use in a case in which an antireflection article is in a film shape.

It is also possible that a laminate is produced in advance using a transparent substrate having a shape corresponding to the application and this is used as a member constituting the surface of the object described above in a case in which an antireflection article has a three-dimensional shape.

In addition, the antireflection article may be pasted not only to the surface but also to the front plate or the front plate itself may be constituted by the laminate of the present embodiment in a case in which the object is an image display device.

(Embodiment 2)

As described above, the surface layer can be constituted by a cured product of an active energy ray-curable resin composition, and it is preferable that the active energy ray-curable resin composition contain a compound (D) having a SH group in the laminate of the present embodiment. The SH group refers to a thiol group, a sulfhydryl group, a mercapto group, or a sulfhydryl group. A chemical bond between a sulfur atom and a sulfur atom or carbon atom is obtained when the compound having a SH group is contained in the active energy ray-curable resin composition. In that case, it is possible to decrease the elastic modulus while maintaining the crosslinking density of the cured product and thus it is possible to impart flexibility to the projection while maintaining the shape of the projection and to remove the dirt accumulated in the concave portion, and as a result, antifouling property is improved.

In the laminate of the present embodiment, the active energy ray-curable resin composition preferably contains a bi- or higher functional (meth)acrylate (E) at from 0 to 95 parts by mass, the silicone (meth)acrylate (C) described above at from 0 to 75 parts by mass, and a compound (D) having a SH group at from 1 to 60 parts by mass (provided that the total of the polymerizable components is 100 parts by mass). Meanwhile, the silicone (meth)acrylate (C) is excluded from the bi- or higher functional (meth)acrylate (E).

Here, the bi- or higher functional (meth)acrylate (E) means a compound having at least two groups selected from an acryloyl group ($CH_2$=CHCO-) and a methacryloyl group ($CH_2$=C($CH_3$)CO-) in the molecule.

Examples of the bi- or higher functional (meth)acrylate (E) may include a bifunctional monomer such as ethylene glycol di(meth)acrylate, tripropylene glycol di(meth)acrylate, isocyanuric acid ethylene oxide-modified di(meth)acrylate, triethylene glycol di(meth)acrylate, diethylene glycol di(meth)acrylate, neopentyl glycol di(meth)acrylate, 1,6-hexanediol di(meth)acrylate, 1,5-pentanediol di(meth)acrylate, 1,3-butylene glycol di(meth)acrylate, polybutylene glycol di(meth)acrylate, 2,2-bis(4-(meth)acryloxypolyethoxyphenyl)propane, 2,2-bis(4-(meth)acryloxyethoxyphenyl)propane, 2,2-bis(4-(3-(meth)acryloxy-2-hydroxypropoxy)phenyl)propane, 1,2-bis(3-(meth)acryloxy-2-hydroxypropoxy)ethane, 1,4-bis(3-(meth)acryloxy-2-hydroxypropoxy)butane, dimethylol tricyclodecane (meth)acrylate , ethylene oxide adduct of bisphenol A di(meth)acrylate, propylene oxide adduct of bisphenol A di(meth)acrylate, hydroxypivalic acid neopentyl glycol di(meth)acrylate, divinylbenzene, and methylenebisacrylamide, a trifunctional monomer such as pentaerythritol tri(meth)acrylate, trimethylolpropane tri(meth)acrylate, trimethylolpropane ethylene oxide-modified tri(meth)acrylate, trimethylolpropane propylene oxide modified triacrylate, trimethylolpropane ethylene oxide modified triacrylate, and isocyanuric acid ethylene oxide-modified tri(meth)acrylate, a polyfunctional monomer such as a condensation reaction mixture of succinic acid/trimethylolethane/acrylic acid, dipentaerythritol hexa(meth)acrylate, dipentaerythritol penta(meth)acrylate, ditrimethylolpropane tetraacrylate, and tetramethylolmethane tetra(meth)acrylate, a bifunctional or higher urethane acrylate, and a bifunctional or higher polyester acrylate. One kind of these may be used singly or two or more kinds thereof may be used in combination.

The bi- or higher functional (meth)acrylate (E) is contained at preferably from 0 to 95 parts by mass, more preferably from 25 to 90 parts by mass, and particularly preferably from 40 to 90 parts by mass when the total of the polymerizable components in the active energy ray-curable resin composition is 100 parts by mass. An excessive decrease in the elastic modulus is suppressed when the content of the bi- or higher functional (meth)acrylate (E) is 0 parts by mass or more and 95 parts by mass or less, and thus the shape of the projection can be maintained. In addition, it is easy to suppress the elastic modulus when the bi- or higher functional (meth)acrylate (E) is added to the composition, that is, its content is more than 0 part by mass, and thus the shape of the projection is easily maintained. Moreover, a decrease in the elastic modulus is suppressed when the content of the bi- or higher functional (meth)acrylate (E) is 40 parts by mass or more, and thus it is possible to more effectively prevent the projection coalescence. In addition, the elastic modulus decreases when the content of the bi- or higher functional (meth)acrylate (E) is 95 parts by mass or less, and thus it is possible to more effectively remove dirt. Moreover, the elastic modulus sufficiently decreases when the content is 90 parts by mass or less, and thus it is possible to more effectively remove the dirt accumulated in the concave portion. As a result, it is easy to force out the dirt from the concave portion and thus it is possible to impart sufficient antifouling property to the laminate.

In the present embodiment, the silicone (meth)acrylate (C) is contained at preferably from 0 to 75 parts by mass and more preferably from 5 to 70 parts by mass when the total of the polymerizable components in the active energy ray-curable resin composition is 100 parts by mass. Water repellency is imparted and antifouling property is further improved when the content of the silicone (meth)acrylate (C) is 0 part by mass or more and 75 parts by mass or less. Furthermore, water repellency is more effectively imparted and antifouling property is improved when the silicone (meth)acrylate (C) is added to the composition, that is, its content is more than 0 part by mass. In addition, the surface energy of the surface layer decreases and the contact angle of water is 130° or more when the content of the silicone (meth)acrylate (C) is 5 parts by mass or more, and thus antifouling property is further improved. In addition, the compatibility with other components is improved when the content of the silicone (meth)acrylate (C) is 75 parts by mass or less, and thus the transparency is improved. Moreover, the viscosity of the active energy ray-curable resin composition is suppressed when the content of the silicone (meth)acrylate (C) is 70 parts by mass or less, and thus handling is improved.

The compound (D) containing a SH group is not particularly limited as long as it is a compound containing a SH group. A compound containing two or more SH groups is preferable in order to increase the crosslinking density of the surface layer and to maintain the strength, and the SH group is more preferably a secondary thiol from the viewpoint of the storage stability of the active energy ray-curable resin composition.

Examples of the compound containing two or more SH groups may include: a dithiol compound such as 1,2-ethanedithiol, 1,2-propanedithiol, 1,3-propanedithiol, 1,4-butanedithiol, 1,6-hexanedithiol, 1,7-heptanedithiol, 1,8-octanedithiol, 1,9-nonanedithiol, 1,10-decanedithiol, 1,12-dodecanedithiol, 2,2-dimethyl-1,3-propanedithiol, 3-methyl-1,5-pentanedithiol, 2-methyl-1,8-octanedithiol, 1,4-cyclohexanedithiol, 1,4-bis(mercaptomethyl)cyclohexane, 1,1-cyclohexanedithiol, 1,2-cyclohexanedithiol, bicyclo[2,2,1]hept-exo-cis-2,3-dithiol, 1,1-bis(mercaptomethyl)cyclohexane, bis(2-mercaptoethyl) ether, ethylene glycol bis(2-mercaptoacetate), and ethylene glycol bis(3-mercaptopropionate); a trithiol compound such as 1,1,1-tris(mercaptomethyl)ethane, 2-ethyl-2-mercapto-1,3-propanediol, 1,2,3-propanetrithiol, trimethylolpropane tris(2-mercaptoacetate), trimethylolpropane tris(3-mercaptopropionate), and tris((mercaptopropionyloxy)-ethyl) isocyanurate; and a thiol compound having four or more SH groups such as pentaerythritol tetrakis(2-mercaptoacetate), pentaerythritol tetrakis(3-mercaptopropionate), pentaerythritol tetrakis(3-mercaptobutanate), and dipentaerythritol hexa-3-mercaptopropionate.

Examples of the compound having a secondary thiol may include Karenz MT PE1, Karenz MT NR1, and Karenz MT BD1 (trade names, manufactured by SHOWA DENKO K. K.).

Specific examples of such a compound (D) containing a SH group may suitably include "Karenz MT PE1", "Karenz MT BD1", and "Karenz MTNR1" (all of them are trade names) manufactured by SHOWA DENKO K. K.

The compound (D) containing a SH group is contained at preferably from 1 to 60 parts by mass and more preferably from 1 to 15 parts by mass when the total of the polymerizable components in the active energy ray-curable resin composition is 100 parts by mass. It is possible to decrease the elastic modulus of the surface layer while maintaining the crosslinking density when the content of the compound (D) containing a SH group is 1 part by mass or more, and thus it is easy to force out the dirt from the concave portion, as a result, it is possible to impart sufficient antifouling property to the laminate and to maintain the resilience of the shape of the convex portion. In addition, it is possible to maintain the storage stability of the active energy ray-curable resin composition when the content of the compound (D) containing a SH group is 60 parts by mass or less. In addition a decrease in the elastic modulus of the surface layer is more effectively suppressed when the content of the compound (D) containing a SH group is 15 parts by mass or less, and thus it is possible to prevent the coalescence of the convex portions.

The active energy ray-curable resin composition may contain a monofunctional monomer other than these. It is desirable to select the monofunctional monomer in consideration of the compatibility with the bi- or higher functional (meth)acrylate (E) and the silicone (meth)acrylate (C). From this point of view, examples of the monofunctional monomer may preferably include a hydrophilic monofunctional monomer such as a monofunctional (meth)acrylate having a polyethylene glycol chain in an ester group, a monofunctional (meth)acrylate having a hydroxyl group in an ester group such as hydroxyalkyl (meth)acrylate, a monofunctional acrylamide, and a cationic monomer such as methacrylamidopropyltrimethylammonium methyl sulfate or methacryloyloxyethyltrimethyl ammonium methyl sulfate. As the monofunctional monomer, it is possible to use "M-20G", "M-90G", and "M-230G" (all of them are trade names, manufactured by SHIN-NAKAMURA CHEMICAL CO., LTD.) of a monofunctional (meth)acrylate, specifically. In addition, an alkyl mono(meth)acrylate, a silicone (meth)acrylate, and an alkyl fluoride(meth)acrylate are suitably used from the viewpoint of improving antifouling property. As such a monofunctional monomer, it is possible to use "BLEMMER LA", "BLEMMER CA", and "BLEMMER SA" (all of them are trade names) manufactured by NOF CORPORATION, "X-24-8201" and "X-22-174DX" (both of them are trade names) manufactured by Shin-Etsu Chemical Co., Ltd., and "C10GACRY" (trade name) manufactured by Exfluor Research Corporation, specifically.

(Embodiment 3)

The surface layer can also be constituted by a layer composed of a cured product of the active energy ray-curable resin composition described above and a surface treatment layer formed on the layer composed of a cured product of the active energy ray-curable resin composition as the outermost surface layer.

Fig. 3 is a schematic cross-sectional diagram illustrating an example of the configuration of a laminate 110 according to the present embodiment. In Fig. 3, a layer (hereinafter, also referred to as the cured product layer) 112 composed of a cured product of an active energy ray-curable resin composition is formed on a transparent substrate 111, and a surface treatment layer 113 is formed on the cured product layer 112 as the outermost layer. In the laminate 110, a fine relief structure is formed on the surface side of the cured product layer 112, and the surface treatment layer 113 is formed along the fine relief structure. A surface layer 104 is constituted by the cured product layer 112 and the surface treatment layer 113. The shape of the fine relief structure is not limited to the shape illustrated in Fig. 3 and may be a shape illustrated in Fig. 4 or another shape.

In the laminate of the present embodiment, the contact angle of water in the fine relief structure region, that is, the contact angle of water on the surface treatment layer is preferably 130° or more and more preferably 135° or more. The surface energy is sufficiently low when the contact angle of water on the surface treatment layer is 130° or more, and thus dirt can be easily wiped off. The surface energy is sufficiently low when the contact angle of water on the surface treatment layer is 135° or more, and thus the attachment of dirt can be suppressed. The upper limit of the contact angle of water on the surface treatment layer is not particularly limited but is preferably 150° or less and more preferably 145° or less. A compound having an alkyl group, a polydimethylsiloxane structure or a fluorinated alkyl group is suitably used as the material of such a surface treatment layer which exhibits water repellency. The material of the surface treatment layer is preferably a compound having a reactive group such as a silane, an alkoxysilane, a silazane, or a (meth)acrylate from the viewpoint of adhesion to the fine relief structure. Specific examples of such a compound may suitably include "KBM" series, "KBE" series, and "X" series manufactured by Shin-Etsu Chemical Co., Ltd., "BYK" series manufactured by BYK Japan KK, "TEGO Rad" series manufactured by Evonik Degussa Japan Co., Ltd., and "FG" series and "FS" series manufactured by Fluoro Technology.

The material of the surface treatment layer can be coated on the cured product by a general method such as dipping, spraying, brush coating, and spin coating. In addition, it is preferable to subject the fine relief structure region to a preliminary treatment in order to improve the adhesion between the surface treatment layer and the cured product layer having a fine relief structure. Examples of the preliminary treatment include the introduction of a functional group into the surface of the fine relief structure by the silica deposition, plasma or the like, and the coating of a primer containing a compound exhibiting favorable reactivity with the surface treatment layer. The thickness of the surface treatment layer is preferably 100 nm or less from the viewpoint of maintaining the antireflection performance of the fine relief structure. The existence of the surface treatment layer can be confirmed by the change in the spectrum depending on the angle of incidence in the variable angle ATR measurement or the cross-sectional observation by a TEM.

(Embodiment 4)

Hereinafter, the present embodiment will be described in detail.

The laminate according to the present embodiment is a laminate equipped with a surface layer having a fine relief structure on the surface, the elastic modulus of the surface layer is less than 160 MPa, and the contact angle of water on the surface is 25° or less.

It is preferable that the surface layer contains a cured product of an active energy ray-curable resin composition, and the cured product of the active energy ray-curable resin composition contains a polymer of polymerizable components (provided that the total of the polymerizable components is 100 parts by mass) including a tri- or higher functional (meth)acrylate at from 5 to 40 parts by mass and polyethylene glycol diacrylate (the average repeating unit of ethylene glycol is from 6 to 40) at from 45 to 80 parts by mass. The laminate according to the present embodiment is excellent in antifouling property since dirt can be easily removed therefrom without applying water or an alcohol to the surface.

Fig. 1 is a longitudinal cross-sectional diagram illustrating an example of the laminate according to the present embodiment. In a laminate 10 illustrated in Fig. 1, a surface layer 12 is formed on a transparent substrate 11 to be described below. A fine relief structure is formed on the surface of the surface layer 12. In addition, the surface layer 12 contains a cured product of an active energy ray-curable resin composition.

In the fine relief structure according to the present embodiment, the interval (pitch) wl between adjacent convex portions 13 in Fig. 1 is preferably equal to or less than the wavelength of visible light, more preferably 100 nm or more and 300 nm or less, even more preferably 150 nm or more and 250 nm or less, and particularly preferably 170 nm or more and 230 nm or less. It is possible to further prevent the projection coalescence of the convex portions 13 although the elastic modulus of the surface layer is less than 160 MPa particularly when the pitch is 150 nm or more. In addition, in particular, when it is 250 nm or less, the pitch is sufficiently smaller than the wavelength of visible light, and thus the scattering of visible light is further suppressed and the laminate can be suitably used as an antireflection article. Meanwhile, the "wavelength of visible light" in the present embodiment means a wavelength of 400 nm. In addition, the interval between the adjacent convex portions refers to the interval wl from the tip 13a of the convex portion to the tip 13a of the adjacent convex portion in Fig. 1.

In the fine relief structure according to the present embodiment, the height d1 of the convex portion 13 in Fig. 1 is preferably 100 nm or more, more preferably 120 nm or more, even more preferably 150 nm or more, and particularly preferably 170 nm or more. When the height d1 of the convex portion 13 is 100 nm or more, it is possible to prevent an increase in the minimum reflectivity and an increase in the reflectivity of a specific wavelength, and thus it is possible to obtain sufficient antireflection property even in the case of using the laminate as an antireflection article. The upper limit of the height d1 of the convex portion 13 is not particularly limited and can be, for example, 1 μm or less. Meanwhile, the height of the convex portion in the present embodiment refers to the vertical distance d1 from the tip 13a of the convex portion to the bottom portion 14a of an adjacent concave portion in Fig. 1.

The aspect ratio (height d1 of convex portion 13/interval wl between adjacent convex portions 13) is preferably from 0.5 to 5.0, more preferably from 0.6 to 2.0, even more preferably from 0.7 to 1.5, and particularly preferably from 0.8 to 1.2. When the aspect ratio is more than 0.5, it is possible to prevent an increase in the minimum reflectivity and an increase in the reflectivity of a specific wavelength, and thus it is possible to obtain sufficient antireflection property even in the case of using the laminate as an antireflection article. The convex portion is not likely to be folded at the time of rubbing when the aspect ratio is less than 5.0, and thus excoriation resistance is improved and sufficient antireflection property is exerted.

Meanwhile, the interval between the adjacent convex portions and the height of the convex portion are average values obtained by depositing platina on the fine relief structure for 10 minutes, then observing using a scanning electron microscope (trade name: "JSM-7400F" manufactured by JEOL Ltd.) under the condition of an acceleration voltage of 3.00 kV, and measuring 10 points for each.

The elastic modulus of the surface layer according to the present embodiment is less than 160 MPa. For example, the fine relief structure on the surface layer is harder when the elastic modulus is 200 MPa or more, and thus it is not possible to sufficiently force out the dirt that has entered the concave portion and antifouling property deteriorates. The elastic modulus of the surface layer is preferably 40 MPa or more and less than 160 MPa, more preferably 60 MPa or more and less than 160 MPa, more preferably 90 MPa or more and less than 160 MPa, and particularly preferably 100 MPa or more and 150 MPa or less. It is possible to prevent the projection coalescence of the convex portions of the fine relief structure when the elastic modulus of the surface layer is 40 MPa or more. In particular, when the elastic modulus of the surface layer is 90 MPa or more, the fine relief structure is sufficiently hard and thus the projection coalescence of the convex portions can be further prevented. In addition, in particular, when the elastic modulus of the surface layer is 150 MPa or less, the fine relief structure is sufficiently soft, and thus it is possible to freely deform the fine relief structure and to more conveniently remove the dirt that has entered the concave portion and antifouling property is favorable.

Meanwhile, the elastic modulus of the surface layer is a value measured by the following method. A load is applied to the irradiated surface of the surface layer using the "FISCHERSCOPE (R) HM2000" (trade name, manufactured by Fischer) while increasing the load under the condition of 50 mN/10 seconds, is held for 60 seconds at 50 mN, and is unloaded under the same condition as that when increasing the load. The elastic modulus is calculated by the extrapolation method using the points at which 65% and 95% of the load are applied during the operation. Alternatively, it is also possible that a cured product of an active energy ray-curable resin composition having a thickness of 500 $\mu$m is fabricated by sandwiching the active energy ray-curable resin composition which is the material of the surface layer between two glasses using a Teflon sheet having a thickness of 500 $\mu$m as a spacer and irradiating with ultraviolet light at energy of the integrated amount of photoirradiation of 3000 mJ/cm$^2$ to photocure the active energy ray-curable resin composition, and then the elastic modulus is calculated by performing the same measurement as the above for the irradiated surface of the cured product.

The contact angle of water on the surface layer according to the present embodiment is 25° or less, preferably 20° or less, more preferably 15° or less, and even more preferably 10° or less. When the contact angle of water on the surface layer is 25° or less, the surface of the laminate is hydrophilized, and thus it is possible to wipe off the attached dirt by suspending in water as described in JP 4,689,718 B1. It is more preferable as the contact angle of water on the surface layer is smaller, and the lower limit thereof is not particularly limited and can be, for example, 1° or more and is preferably 3° or more.

Meanwhile, the contact angle of water on the surface layer is the value obtained by dropping 1 $\mu$l of water on the surface of the surface layer and calculating the contact angle after 7 seconds by the $\theta/2$ method, using an automatic contact angle measuring device (manufactured by KRUSS GmbH).

The laminate according to the present embodiment can be equipped with a substrate. It is possible to equip a substrate 11 adjacent to the surface layer 12, for example, as the laminate 10 illustrated in Fig. 1.

The active energy ray-curable resin composition according to the present embodiment may be a composition which appropriately contains a monomer having a radically polymerizable and/or cationically polymerizable bond in the molecule, a polymer having a low polymerization degree, and a reactive polymer and is cured by the polymerization initiator to be described below. In addition, the active energy ray-curable resin composition according to the present embodiment may contain a nonreactive polymer.

The active energy ray-curable resin composition according to the present embodiment contains polymerizable components (provided that the total of the polymerizable components is 100 parts by mass) including a tri- or higher functional (meth)acrylate at from 5 to 40 parts by mass and polyethylene glycol diacrylate (the average repeating unit of ethylene glycol is from 6 to 40) at from 45 to 80 parts by mass. This makes it possible to have the elastic modulus of the surface layer of less than 160 MPa. Meanwhile, in the present specification, the (meth)acrylate represents an acrylate or a methacrylate. In addition, the polymerizable component represents a compound having a polymerizable functional group.

The tri- or higher functional (meth)acrylate is not particularly limited, and a tetrafunctional or higher polyfunctional (meth)acrylate is preferable and a pentafunctional or higher polyfunctional (meth)acrylate is more preferable. Examples thereof include a monomer obtained by adding ethylene oxide or propylene oxide to a monomer such as ditrimethylolpropane tetra(meth)acrylate, pentaerythritol tetra(meth)acrylate, pentaerythritolethoxy tetra(meth)acrylate, dipentaerythritolhydroxy penta(meth)acrylate, dipentaerythritol hexa(meth)acrylate (for example, KAYARAD DPEA (trade name, manufactured by Nippon Kayaku Co., Ltd.)), a condensation reaction mixture of succinic acid/trimethylolethane/acrylic acid at a molar ratio of 1 : 2 : 4, an urethane acrylate (for example, EBECRYL220, EBECRYL1290, EBECRYL1290K, EBECRYL5129, EBECRYL8210, EBECRYL8301, and KRM8200 (trade names, all manufactured by DAICEL-CYTEC COMPANY LTD.)), a polyether acrylate (for example, EBECRYL81 (trade name, manufactured by DAICEL-CYTEC COMPANY LTD.)), a modified epoxy acrylate (for example, EBECRYL3416 (trade name, manufactured by DAICEL-CYTEC COMPANY LTD.)), a polyester acrylate (for example, EBECRYL450, EBECRYL657, EBECRYL800, EBECRYL810, EBECRYL811, EBECRYL812, EBECRYL1830, EBECRYL845, EBECRYL846, and EBECRYL1870 (trade names, all manufactured by DAICEL-CYTEC CO., LTD.)), and ethylene oxide-modified dipentaerythritol hexaacrylate (for example, KAYARAD DPEA-12 (trade name, manufactured by Nippon Kayaku Co., Ltd.), and DPEA-18 (trade name, manufactured by DAI-ICHI KOGYO SEIYAKU CO., LTD.)). These may be used singly or two or more kinds thereof may be used concurrently.

The tri- or higher functional (meth)acrylate contained in the polymerizable component is from 5 to 40 parts by mass, preferably from 10 to 40 parts by mass, more preferably from 20 to 40 parts by mass, and particularly preferably from 25 to 40 parts by mass when the total of the polymerizable components is 100 parts by mass. When the content of tri- or higher functional (meth)acrylate is less than 5 parts by mass, an elastic modulus enough to transfer the fine relief structure may not be imparted onto the surface layer in some cases. For example, when the content of tri- or higher functional (meth)acrylate is more than 55 parts by mass, it is not possible to have the elastic modulus of the surface layer of less than 200 MPa and the fine relief structure becomes hard, and thus it is not possible to force out dirt in some cases. On the other hand, in particular, when the content of tri- or higher functional (meth)acrylate is 25 parts by mass or more, a sufficient elastic modulus is imparted to the surface layer, and thus it is possible to further suppress the projection coalescence of the convex portions of the fine relief structure. In addition, for example, when the content of tri- or higher functional (meth)acrylate is 45 parts by mass or less, a decrease in the mobility of the convex portion is more suppressed, and thus high antifouling property is exerted.

Examples of polyethylene glycol diacrylate (the average repeating unit of ethylene glycol is from 6 to 40) of the bifunctional (meth)acrylate include Aronix M-260 (manufactured by TOAGOSEI CO., LTD., average repeating unit of ethylene glycol: 13), and A-400 (average repeating unit of ethylene glycol: 9), A-600 (average repeating unit of ethylene glycol: 14), and A-1000 (average repeating unit of ethylene glycol: 23) (trade names, all manufactured by SHIN-NAKAMURA CHEMICAL CO., LTD.). These may be used singly or two or more kinds thereof may be used concurrently. The molecular mobility of the cured product contained in the surface layer is enhanced when a polymer contains the polyethylene glycol diacrylate unit, and thus it is possible to force out the dirt that has entered the concave portion.

The average repeating unit of ethylene glycol present in polyethylene glycol diacrylate is preferably from 6 to 40, more preferably from 9 to 30, even more preferably from 10 to 25, and particularly preferably from 12 to 20. When the average repeating unit of ethylene glycol is less than 6, it is not possible to have the contact angle of water on the surface layer of 25° or less, and thus sufficient antifouling property is not obtained in some cases. On the other hand, when the average repeating unit of ethylene glycol is more than 40, the compatibility with the tri- or higher functional (meth)acrylate may be insufficient.

The polyethylene glycol diacrylate contained in the polymerizable component is from 45 to 80 parts by mass, preferably from 50 to 80 parts by mass, more preferably from 53 to 80 parts by mass, and particularly preferably from 55 to 75 parts by mass when the total of the polymerizable components is 100 parts by mass. For example, in this embodiment, when the content of polyethylene glycol diacrylate is less than 45 parts by mass, it may not be possible to have the elastic modulus of the surface layer of less than 200 MPa. In addition, for example, when the content of polyethylene glycol diacrylate is more than 95 parts by mass, the elastic modulus enough to transfer the fine relief structure may not be kept onto the surface layer in some cases. On the other hand, in particular, when the content of polyethylene glycol diacrylate is 55 parts by mass or more, sufficient mobility is imparted to the convex portion, and thus sufficient antifouling property is exerted. In addition, in particular, when the content of polyethylene glycol diacrylate is 75 parts by mass or less, a decrease in the elastic modulus is more suppressed, and thus it is possible to more suppress the projection coalescence of the convex portions.

The polymerizable component may further contain a monofunctional monomer. The monofunctional monomer is not particularly limited as long as it is compatible with the tri- or higher functional (meth)acrylate and polyethylene glycol diacrylate above. As the monofunctional monomer, for example, a hydrophilic monofunctional monomer such as a monofunctional (meth)acrylate having a polyethylene glycol chain in an ester group such as M-20G, M-90G, and M-230G (trade names, manufactured by SHIN-NAKAMURA CHEMICAL CO., LTD.), a monofunctional (meth)acrylate having a hydroxyl group in an ester group such as a hydroxyalkyl (meth)acrylate, a monofunctional acrylamide, a cationic monomer such as methacrylamidopropyl trimethylammonium methyl sulfate and methacryloyloxyethyl trimethylammonium methyl sulfate is preferable. One kind of these may be used singly or two or more kinds thereof may be used concurrently.

The monofunctional monomer contained in the polymerizable component is preferably from 0 to 20 parts by mass and more preferably from 5 to 15 parts by mass when the total of the polymerizable components is 100 parts by mass. The adhesion between the substrate and the surface layer is improved when the monofunctional monomer unit is introduced into the polymer. The contents of the tri- or higher functional (meth)acrylate unit and the polyethylene glycol diacrylate unit in the polymer are not insufficient when the content of the monofunctional monomer is 20 parts by mass or less, and thus sufficient antifouling property is exerted.

In addition, a polymer having a low polymerization degree which is obtained by (co)polymerizing one kind or two or more kinds of the monofunctional monomer described above may be blended with the active energy ray-curable resin composition. It is possible to blend the polymer having a low polymerization degree into the active energy ray-curable resin composition, for example, at from 0 to 35 parts by mass when the total of the polymerizable components is 100 parts by mass. Examples of the polymer having a low polymerization degree may include a monofunctional (meth)acrylate having a polyethylene glycol chain in an ester group, a 40/60 copolymerized oligomer with methacrylamidopropyl trimethylammonium methyl sulfate (trade name: "MG Polymer" manufactured by MRC UNITECH Co., Ltd.).

In addition, the active energy ray-curable resin composition may contain an antistatic agent, a mold releasing agent, an ultraviolet absorber, and fine particles such as colloidal silica other than the various monomers or the polymer having a low polymerization degree described above. Furthermore, the active energy ray-curable resin composition may contain a viscosity modifier such as acryloylmorpholine or vinylpyrrolidone or an adhesion improving agent such as an acryloyl isocyanate to improve the adhesion to the substrate.

It is possible to maintain favorable releasability at the time of continuously producing a laminate according to the present embodiment when the mold releasing agent is contained in the active energy ray-curable resin composition. Particularly in the case of using an anodic alumina mold, the mold releasing agent is easily adsorbed on the surface of the mold since a (poly)oxyalkylene alkyl phosphoric acid compound and alumina interact.

Examples of the commercially available product of the (poly)oxyalkylene alkyl phosphoric acid compound may include "JP-506H" manufactured by JOHOKU CHEMICAL CO., LTD., "MoldWiz INT-1856" manufactured by Axel Plastics Research Laboratories, Inc., and "TDP-10", "TDP-8", "TDP-6", "TDP-2", "DDP-10", "DDP-8", "DDP-6", "DDP-4", "DDP-2", "TLP-4", "TCP-5", and "DLP-10" (trade names) manufactured by Nikko Chemicals Co., Ltd. As the mold releasing agent contained in the active energy ray-curable resin composition, one kind of the mold releasing agents may be used singly or two or more kinds thereof may be used concurrently.

The proportion of the mold releasing agent contained in the active energy ray-curable resin composition is preferably from 0.01 to 2.0 parts by mass and more preferably from 0.05 to 0.2 part by mass with respect to 100 parts by mass of the polymerizable component. The releasability of the article having a fine relief structure on the surface from a mold is favorable when the proportion of the mold releasing agent is 0.01 part by mass or more. On the other hand, the adhesion between the cured product of the active energy ray-curable resin composition and the substrate is favorable and the hardness of the cured product is adequate when the proportion of the mold releasing agent is 2.0% by mass or less, and thus the fine relief structure can be sufficiently maintained.

Specific examples of the active energy ray used when curing the active energy ray-curable resin composition may include visible light, ultraviolet light, an electron beam, plasma, and heat rays such as infrared rays.

In addition, the active energy ray-curable resin composition may be cured by concurrently using photocuring and thermal curing.

As described above, the laminate of the present embodiment is excellent in antifouling property since the laminate is equipped with a surface layer containing a cured product of an active energy ray-curable resin composition having a fine relief structure on the surface, the elastic modulus of the surface layer is less than 160 MPa, and the surface layer has a specific resin constitution. In addition, the laminate of the present embodiment can be particularly suitably used in an antireflection article since more excellent antireflection property is exerted when the interval between the adjacent convex portions of the fine relief structure is equal to or less than the wavelength of visible light (400 nm). In addition, more excellent antireflection property is exerted when the height of the convex portion is 100 nm or more.

Moreover, the antireflection article, the imaging device and the touch panel according to the present embodiment are equipped with the laminate according to the present embodiment and thus are excellent in antireflection performance and antifouling property. Dirt such as sebum to be attached at the time of use is not likely to adhere and is easily removed when the laminate of the present embodiment is mounted on the outermost surface of an antireflection article, an imaging device, and a touch panel, and thus it is possible to exert favorable antireflection performance.

(Embodiment 5)

Hereinafter, the present embodiment will be described in detail.

Fig. 1 is a schematic cross-sectional diagram illustrating an example of the configuration of a laminate 10 according to the present embodiment. In Fig. 1, a surface layer 12 composed of a cured product of an active energy ray-curable resin composition is formed on the surface of a transparent substrate 11. In the laminate 10, a fine relief structure is formed on the surface of the surface layer 12.

In the laminate of the present embodiment, the contact angle of water on the surface layer of the part where the fine relief structure is formed is 130° or more and preferably 135° or more. The surface energy is sufficiently low when the contact angle of water on the surface layer is 130° or more, and thus it is possible to easily wipe off dirt. In addition, the surface energy is sufficiently low when the contact angle of water on the surface layer is further 135° or more, and thus it is possible to suppress the attachment of dirt. The upper limit of the contact angle of water on the surface layer is not particularly limited but is preferably 150° or less and more preferably 145° or less.

In the laminate of the present embodiment, the elastic modulus of the surface of the fine relief structure, that is the elastic modulus of the surface layer is less than 160 MPa and preferably from 50 to 100 MPa. For example, the fine relief structure is soft when the elastic modulus of the surface layer is less than 200 MPa, and thus it is possible to force out the dirt that has entered the concave portion. In addition, the fine relief structure is sufficiently hard when the elastic modulus of the surface layer is 50 MPa or more, and thus it is possible to effectively prevent the projection coalescence of the convex portions. The fine relief structure is sufficiently soft when the elastic modulus of the surface layer is 100 MPa or less, and thus it is possible to freely deform the fine relief structure and to more easily remove the dirt that has entered the concave portion.

In the laminate of the present embodiment, the surface layer is constituted by the cured product of an active energy ray-curable resin composition. In addition, the active energy ray-curable resin composition preferably contains a tri- or higher functional (meth)acrylate (A) at from 5 to 40 parts by mass, a bifunctional (meth)acrylate (B) at from 20 to 80 parts by mass, and a silicone (meth)acrylate (C) at from 3 to 85 parts by mass. Meanwhile, the silicone (meth)acrylate (C) is excluded from the tri- or higher functional (meth)acrylate (A) and the bifunctional (meth)acrylate (B).

Here, the tri- or higher functional (meth)acrylate means a compound which has at least three groups selected from an acryloyl group ($CH_2$=CHCO-) and a methacryloyl group ($CH_2$=C($CH_3$)CO-) in the molecule. In addition, the bifunctional (meth)acrylate means a compound which has two of the group selected from an acryloyl group ($CH_2$=CHCO-) and a methacryloyl group ($CH_2$=C($CH_3$)CO-) in the molecule.

The tri- or higher functional (meth)acrylate (A) is preferably tetrafunctional or higher and more preferably pentafunctional or higher. Examples of the tri- or higher functional (meth)acrylate (A) may include ditrimethylolpropane tetra(meth)acrylate, pentaerythritol tetra(meth)acrylate, pentaerythritolethoxy tetra(meth)acrylate, dipentaerythritolhydroxy penta(meth)acrylate, dipentaerythritol hexa(meth)acrylate, a condensation reaction product of succinic acid/trimethylolethane/acrylic acid at a molar ratio of 1 : 2 : 4, a urethane acrylate, a polyether acrylate, a modified epoxy acrylate, and a polyester acrylate. Examples of the urethane acrylate may include "EBECRYL220", "EBECRYL1290", "EBECRYL1290K", "EBECRYL5129", "EBECRYL8210", "EBECRYL8301", and "KRM8200" manufactured by DAICEL-CYTEC COMPANY LTD. Examples of the polyether acrylate may include "EBECRYL81" manufactured by DAICEL-CYTEC COMPANY LTD. Examples of the modified epoxy acrylate may include "EBECRYL3416" manufactured by DAICEL-CYTEC COMPANY LTD. Examples of the polyester acrylate may include "EBECRYL450", "EBECRYL657", "EBECRYL800", "EBECRYL810", "EBECRYL811", "EBECRYL812", "EBECRYL1830", "EBECRYL845", "EBECRYL846", and "EBECRYL1870" manufactured by DAICEL-CYTEC COMPANY LTD. In addition, other examples of the tri- or higher functional (meth)acrylate (A) may include a monomer obtained by adding ethylene oxide or propylene oxide to the above monomer. One kind of these polyfunctional (meth)acrylates (A) may be used singly or two or more kinds thereof may be used concurrently.

The tri- or higher functional (meth)acrylate (A) is contained at from 5 to 40 parts by mass, and preferably from 11 to 30 parts by mass when the total of the polymerizable components in the active energy ray-curable resin composition is 100 parts by mass. For example, it is possible to impart the elastic modulus enough to transfer the fine relief structure onto the surface layer when the content of the tri- or higher functional (meth)acrylate (A) is 1 part by mass or more. In addition, for example, it is possible to suppress an increase in the elastic modulus of the surface layer when the content of the tri- or higher functional (meth)acrylate (A) is 55 parts by mass or less. As a result, dirt is easily forced out from the concave portion and thus it is possible to impart sufficient antifouling property to the laminate. In addition, it is possible to impart a favorable elastic modulus to the surface layer when the content is 11 parts by mass or more, and thus it is possible to suppress the projection coalescence of the convex portions in the fine relief structure. In addition, a decrease in mobility of the convex portion is suppressed when the content is 30 parts by mass or less, and thus antifouling property that dirt can be easily removed without using water or an alcohol is effectively exerted. Meanwhile, in the present specification, the projection coalescence of the projections or the convex portions means that the adjacent projections or convex portions are combined to form one unit.

As the bifunctional (meth)acrylate (B), a bifunctional acrylate having a polyalkylene glycol such as a bifunctional acrylate having polyethylene glycol, a bifunctional acrylate having polypropylene glycol, and a bifunctional acrylate having polybutylene glycol is preferable. Specific examples of the bifunctional acrylate having polyethylene glycol may include Aronix M-240 and Aronix M-260 (manufactured by TOAGOSEI CO., LTD.), NK ester AT-20E and NK ester ATM-35E (manufactured by SHIN-NAKAMURA CHEMICAL CO., LTD.). Specific examples of the bifunctional acrylate having polypropylene glycol may include APG-400 and APG-700 (manufactured by SHIN-NAKAMURA CHEMICAL CO., LTD.). Specific examples of the bifunctional acrylate having polybutylene glycol may include A-PTMG-650 (manufactured by SHIN-NAKAMURA CHEMICAL CO., LTD.). The elastic modulus of the surface layer is suppressed when a bifunctional acrylate having a polyalkylene glycol is used as the bifunctional (meth)acrylate (B), and thus it is easy to force out dirt from the concave portion and antifouling property is effectively exerted as a result. Polyethylene glycol diacrylate is suitably used among the bifunctional acrylates having a polyalkylene glycol from the viewpoint of obtaining further favorable antifouling property. The molecular mobility of the resin of the surface layer is improved when polyethylene glycol diacrylate is used as the bifunctional (meth)acrylate (B), and thus it is easier to force out the dirt that has entered the concave portion and favorable antifouling property is exerted as a result.

The total of the average repeating units of the polyethylene glycol chain present in one molecule of polyethylene glycol diacrylate is preferably from 6 to 40, more preferably from 9 to 30, and even more preferably from 12 to 20. The mobility of the molecules is maintained when the average repeating unit of the polyethylene glycol chain is 6 or more, and thus excellent antifouling property can be exerted. The compatibility with the tri- or higher functional (meth)acrylate (A) is favorable when the average repeating unit of the polyethylene glycol chain is 40 or less. In addition, among the bifunctional acrylates having a polyalkylene glycol, polypropylene glycol diacrylate and polybutylene glycol diacrylate are also suitably used in terms of compatibility. The compatibility with the silicone (meth)acrylate (C) such as silicone di(meth)acrylate which is less hydrophilic is improved when polypropylene glycol diacrylate or polybutylene glycol diacrylate is used as the bifunctional (meth)acrylate (B), and thus it is possible to obtain a transparent active energy ray-curable resin composition. One kind of these bifunctional (meth)acrylates (B) may be used singly or two or more kinds thereof may be used concurrently. In addition, it is preferable to concurrently use polyethylene glycol and polypropylene glycol diacrylate and/or polybutylene glycol diacrylate in terms of exhibiting both antifouling property and compatibility.

The bifunctional (meth)acrylate (B) is contained at from 20 to 80 parts by mass and preferably from 20 to 70 parts by mass when the total of the polymerizable components in the active energy ray-curable resin composition is 100 parts by mass. For example, an increase in the elastic modulus of the surface layer is suppressed when the content of the bifunctional (meth)acrylate (B) is 10 parts by mass or more, thus it is easy to force out the dirt from the concave portion, and sufficient antifouling property is exerted as a result. For example, it is possible to hold the elastic modulus enough to transfer the fine relief structure onto the surface layer when the content of the bifunctional (meth)acrylate (B) is 95 parts by mass or less. In addition, it is possible to impart mobility to the convex portion when the content is 20 parts by mass or more, and thus antifouling property is effectively exerted. In addition, a decrease in elastic modulus is suppressed when the content is 70 parts by mass or less, and thus it is possible to suppress the projection coalescence of the convex portions.

The silicone (meth)acrylate (C) is not particularly limited as long as it is a compound having at least one group selected from an acryloyl group ($CH_2$=CHCO-) and a methacryloyl group ($CH_2$=C($CH_3$)CO-) at the side chain and/or terminal of the compound having an organosiloxane structure. It is desirable to select the silicone (meth)acrylate (C) from the viewpoint of the compatibility with the tri- or higher functional (meth)acrylate (A) and the bifunctional (meth)acrylate (B), and it is preferable to use a compound having a compatible segment which contributes to the compatibility with (A) and (B) as the silicone (meth)acrylate (C). Examples of the compatible segment may include a polyalkylene oxide structure, a polyester structure and a polyamide structure. One kind of these compatible segments may be contained in the silicone (meth)acrylate (C) singly or two or more kinds thereof may be contained. In addition, the silicone (meth)acrylate (C) may be used by being diluted in terms of handling. As the diluent, those having reactivity is preferable in terms of bleed-out from the cured product, or the like. In addition, it is also possible to improve the handling of the silicone (meth)acrylate (C) by mixing the tri- or higher functional (meth)acrylate (A) or the bifunctional (meth)acrylate (B) with the silicone (meth)acrylate (C).

Specific examples of such a silicone (meth)acrylate (C) may suitably include SILAPLANE series manufactured by CHISSO CORPORATION, silicone diacrylate "X-22-164" and "X-22-1602" manufactured by Shin-Etsu Chemical Co., Ltd., "BYK-3500" and "BYK-3570" manufactured by BYK Japan KK, and TEGO Rad series manufactured by Evonik Degussa Japan Co., Ltd. One kind of these silicone (meth)acrylates (C) may be used singly or two or more kinds thereof may be used concurrently.

The silicone (meth)acrylate (C) is contained at preferably from 3 to 85 parts by mass, more preferably from 5 to 70 parts by mass, even more preferably from 45 to 70 parts by mass, and particularly preferably from 45 to 65 parts by mass when the total of the polymerizable components in the active energy ray-curable resin composition is 100 parts by mass. The contact angle of water on the surface layer having a fine relief structure is likely to be 130° or more when the content of the silicone (meth)acrylate (C) is 3 parts by mass or more, and thus antifouling property is imparted to the laminate. It is possible to impart the elastic modulus enough to transfer the fine relief structure onto the surface layer when the content of the silicone (meth)acrylate (C) is 85 parts by mass or less. In addition, the contact angle of water on the surface layer is likely to be 135° or more when the content is 5 parts by mass or more, and thus the antifouling property of the laminate is improved. In addition, the viscosity of the active energy ray-curable resin composition is suppressed when the content is 70 parts by mass or less, and thus handling is improved. Moreover, the compatibility with respect to the components in the active energy ray-curable resin composition, particularly (A) and (B) is favorable and the water repellency of the surface layer and the flexibility of the projections are improved when the content is 45 parts by mass or more, and thus excellent antifouling property is exerted. Furthermore, a decrease in the elastic modulus of the surface layer can be suppressed when the content is 65 parts by mass or less, and thus it is possible to suppress the projection coalescence of the convex portions of the fine relief structure.

The active energy ray-curable resin composition may contain a monofunctional monomer other than these. It is desirable to select the monofunctional monomer in consideration of the compatibility with the tri- or higher functional (meth)acrylate (A) and the bifunctional (meth)acrylate (B), and examples thereof may preferably include a hydrophilic monofunctional monomer such as a monofunctional (meth)acrylate having a polyethylene glycol chain in an ester group, a monofunctional (meth)acrylate having a hydroxyl group in an ester group such as a hydroxyalkyl (meth)acrylate, a monofunctional acrylamide, and a cationic monomer such as methacrylamidopropyl trimethylammonium methyl sulfate or methacryloyloxyethyl trimethylammonium methyl sulfate from this point of view. As the monofunctional monomer, it is possible to use "M-20G", "M-90G", and "M-230G" (manufactured by SHIN-NAKAMURA CHEMICAL CO., LTD.) of a monofunctional (meth)acrylate, specifically.

In addition, it is also possible to add a viscosity modifier such as acryloylmorpholine or vinylpyrrolidone or an adhesion improving agent such as acryloyl isocyanate to improve the adhesion to the transparent substrate to the active energy ray-curable resin composition.

The content of the monofunctional monomer in the active energy ray-curable resin composition is, for example, preferably from 0.1 to 20 parts by mass and more preferably from 5 to 15 parts by mass when the total of the polymerizable components in the active energy ray-curable resin composition is 100 parts by mass. The adhesion between the substrate and the surface layer (resin cured by active energy ray) is improved when the monofunctional monomer is contained. The contents of the tri- or higher functional (meth)acrylate (A) and the bifunctional (meth)acrylate (B) are adjusted when the content of the monofunctional monomer is 20 parts by mass or less, and thus antifouling property is likely to be sufficiently exerted. One kind of the monofunctional monomers may be used singly or two or more kinds thereof may be mixed and used.

In addition, a polymer (oligomer) having a low polymerization degree prepared by polymerizing one kind or two or more kinds of monofunctional monomers may be added to the active energy ray-curable resin composition. Specific examples of such a polymer having a low polymerization degree may include a monofunctional (meth)acrylate having a polyethylene glycol chain in an ester group (for example, "M-230G" manufactured by SHIN-NAKAMURA CHEMICAL CO., LTD.) or a 40/60 copolymerized oligomer of methacrylamidopropyl trimethylammonium methyl sulfate (for example, "MG polymer" manufactured by MRC UNITECH Co., Ltd.).

Furthermore, the active energy ray-curable composition may contain an antistatic agent, a mold releasing agent, an ultraviolet absorber, and fine particles such as colloidal silica other than the various monomers or the polymer having a low polymerization degree described above.

The active energy ray-curable resin composition may contain a mold releasing agent. It is possible to maintain favorable releasability at the time of continuously producing a laminate when the mold releasing agent is contained in the active energy ray-curable resin composition. Examples of the mold releasing agent may include a (poly)oxyalkylene alkyl phosphoric acid compound. Particularly in the case of using an anodic alumina mold, the mold releasing agent is easily adsorbed on the surface of the mold since the (poly)oxyalkylene alkyl phosphoric acid compound and alumina interact.

Examples of the commercially available product of the (poly)oxyalkylene alkyl phosphoric acid compound may include "JP-506H" (trade name) manufactured by JOHOKU CHEMICAL CO., LTD., "MoldWiz INT-1856" (trade name) manufactured by Axel Plastics Research Laboratories, Inc., and "TDP-10", "TDP-8", "TDP-6", "TDP-2", "DDP-10", "DDP-8", "DDP-6", "DDP-4", "DDP-2", "TLP-4", "TCP-5", and "DLP-10" (trade names) manufactured by Nikko Chemicals Co., Ltd.

As the mold releasing agent contained in the active energy ray-curable resin composition, one kind of the mold releasing agents may be used singly or two or more kinds thereof may be used concurrently.

The content of the mold releasing agent contained in the active energy ray-curable resin composition is preferably from 0.01 to 2.0 parts by mass and more preferably from 0.05 to 0.2 part by mass with respect to 100 parts by mass of the polymerizable component. The releasability of the article having a fine relief structure on the surface from a mold is favorable when the content of the mold releasing agent is 0.01 part by mass or more. On the other hand, the adhesion between the cured product of the active energy ray-curable resin composition and the substrate is favorable and the hardness of the cured product is adequate when the proportion of the mold releasing agent is 2.0 parts by mass or less, and thus the fine relief structure can be sufficiently maintained.

The active energy ray-curable resin composition of the present embodiment can appropriately contain a monomer having a radically polymerizable and/or cationically polymerizable bond in the molecule, a polymer having a low polymerization degree, and a reactive polymer and is cured by a polymerization initiator to be described below. In addition, the active energy ray-curable resin composition may contain a nonreactive polymer.

The laminate of the present embodiment is a laminate equipped with a surface layer excellent in antifouling property that dirt can be easily removed, and thus dirt such as sebum to be attached at the time of use is not likely to adhere and is easily removed and excellent antireflection performance can be exerted when the laminate of the present embodiment is mounted on the outermost surface of an antireflection article, an image display device, a touch panel and the like. Furthermore, an article excellent in an aspect of practical use is obtained since it is possible to easily remove dirt without applying water or an alcohol to the surface.

(Embodiment 6)

Hereinafter, the present embodiment will be described in detail.

Fig. 1 is a schematic cross-sectional diagram illustrating an example of the configuration of a laminate 10 according to the present embodiment. In Fig. 1, a surface layer 12 composed of a cured product of an active energy ray-curable resin composition is formed on the surface of a transparent substrate 11, and a surface treatment layer 13 is formed on the surface of the surface layer 12.

In the laminate of the present embodiment, the elastic modulus of the surface of the laminate, that is the elastic modulus of the fine relief structure layer including the surface treatment layer and the surface layer is less than 160 MPa, preferably from 50 to 100 MPa. For example, the fine relief structure is soft when the elastic modulus of the fine relief structure layer is 2000 MPa or less, and thus it is possible to move the dirt that has entered the concave portion with little external force. For example, the fine relief structure is far softer when the elastic modulus of the fine relief structure layer is 200 MPa or less, and thus it is possible to move the dirt that has entered the concave portion with significantly little external force. In addition, it is possible to effectively prevent the coalescence of the convex portions of the fine relief structure when the elastic modulus of the fine relief structure layer is 50 MPa or more. The fine relief structure is sufficiently soft when the elastic modulus of the surface layer is 100 MPa or less, and thus it is possible to freely deform the fine relief structure with significantly little external force and to easily remove the dirt that has entered the concave portion. Meanwhile, in the present specification, the projection coalescence of the projections or the convex portions means that the adjacent projections or convex portions are combined to form one unit.

In the laminate of the present embodiment, the surface layer is constituted by the cured product of an active energy ray-curable resin composition. In addition, the active energy ray-curable resin composition contains a tri- or higher functional (meth)acrylate (A) at from 25 to 40 parts by mass and a bifunctional (meth)acrylate (B) at from 30 to 75 parts by mass (provided that the total of polymerizable components in the active energy ray-curable resin composition is 100 parts by mass).

Here, the tri- or higher functional (meth)acrylate means a compound which has at least three groups selected from an acryloyl group ($CH_2$=CHCO-) and a methacryloyl group ($CH_2$=C($CH_3$)CO-) in the molecule. In addition, the bifunctional (meth)acrylate means a compound which has two of the group selected from an acryloyl group ($CH_2$=CHCO-) and a methacryloyl group ($CH_2$=C($CH_3$)CO-) in the molecule.

The tri- or higher functional (meth)acrylate (A) is preferably tetrafunctional or higher and more preferably pentafunctional or higher. Examples of the tri- or higher functional (meth)acrylate (A) may include ditrimethylolpropane tetra(meth)acrylate, pentaerythritol tetra(meth)acrylate, pentaerythritolethoxy tetra(meth)acrylate, dipentaerythritolhydroxy penta(meth)acrylate, dipentaerythritol hexa(meth)acrylate, a condensation reaction product of succinic acid/trimethylolethane/(meth)acrylic acid at a molar ratio of 1: 2: 4, a urethane (meth)acrylate, a polyether (meth)acrylate, a modified epoxy (meth)acrylate, a polyester (meth)acrylate, and a silicone (meth)acrylate. Examples of the urethane (meth)acrylate may include "EBECRYL220", "EBECRYL1290", "EBECRYL1290K", "EBECRYL5129", "EBECRYL8210", "EBECRYL8301 ", and "KRM8200" manufactured by DAICEL-CYTEC COMPANY LTD. Examples of the polyether (meth)acrylate may include "EBECRYL81" manufactured by DAICEL-CYTEC COMPANY LTD. Examples of the modified epoxy (meth)acrylate may include "EBECRYL3416" manufactured by DAICEL-CYTEC COMPANY LTD. Examples of the polyester (meth)acrylate may include "EBECRYL450", "EBECRYL657", "EBECRYL800", "EBECRYL810", "EBECRYL811", "EBECRYL812", "EBECRYL1830", "EBECRYL845", "EBECRYL846", and "EBECRYL1870" manufactured by DAICEL-CYTEC COMPANY LTD. Examples of the silicone (meth)acrylate may suitably include "BYK-3570" manufactured by BYK Japan KK and TEGO Rad series manufactured by Evonik Degussa Japan Co., Ltd. In addition, other examples of the tri- or higher functional (meth)acrylate (A) may include a monomer obtained by adding ethylene oxide or propylene oxide to the above monomer. One kind of these polyfunctional (meth)acrylates (A) may be used singly or two or more kinds thereof may be used concurrently.

The tri- or higher functional (meth)acrylate (A) is contained at from 25 to 40 parts by mass when the total of the polymerizable components in the active energy ray-curable resin composition is 100 parts by mass. It is possible to impart the elastic modulus enough to transfer the fine relief structure onto the surface layer when the content of the tri- or higher functional (meth)acrylate (A) is 25 parts by mass or more. In addition, for example, it is possible to suppress an increase in the elastic modulus of the surface layer when the content of the tri- or higher functional (meth)acrylate (A) is 70 parts by mass or less. As a result, dirt is easily forced out from the concave portion and thus it is possible to impart sufficient antifouling property to the laminate.

As the bifunctional (meth)acrylate (B), a bifunctional acrylate having a polyalkylene glycol such as a bifunctional acrylate having polyethylene glycol, a bifunctional acrylate having polypropylene glycol, and a bifunctional acrylate having polybutylene glycol is preferable. Specific examples of the bifunctional acrylate having polyethylene glycol may include Aronix M-240 and Aronix M-260 (manufactured by TOAGOSEI CO., LTD.), NK ester AT-20E and NK ester ATM-35E (manufactured by SHIN-NAKAMURA CHEMICAL CO., LTD.). Specific examples of the bifunctional acrylate having polypropylene glycol may include APG-400 and APG-700 (manufactured by SHIN-NAKAMURA CHEMICAL CO., LTD.).

Specific examples of the bifunctional acrylate having polybutylene glycol may include A-PTMG-650 (manufactured by SHIN-NAKAMURA CHEMICAL CO., LTD.). The elastic modulus of the surface layer is suppressed when a bifunctional acrylate having a polyalkylene glycol is used as the bifunctional (meth)acrylate (B), and thus it is easy to force out dirt from the concave portion and antifouling property is effectively exerted as a result. Polyethylene glycol diacrylate is preferably used among the bifunctional acrylate having a polyalkylene glycol from the viewpoint of obtaining further favorable antifouling property. The molecular mobility of the resin of the surface layer is improved when polyethylene glycol diacrylate is used as the bifunctional (meth)acrylate (B), and thus it is easier to force out the dirt that has entered the concave portion and favorable antifouling property is exerted as a result.

The total of the average repeating unit of the polyethylene glycol chain present in one molecule of polyethylene glycol diacrylate is preferably from 6 to 40, more preferably from 9 to 30, and even more preferably from 12 to 20. The mobility of the molecules is kept when the average repeating unit of the polyethylene glycol chain is 6 or more, and thus excellent antifouling property can be exerted. The compatibility with the tri- or higher functional (meth)acrylate (A) is favorable when the average repeating unit of the polyethylene glycol chain is 40 or less. In addition, among the bifunctional acrylates having a polyalkylene glycol, polypropylene glycol diacrylate and polybutylene glycol diacrylate are also suitably used in terms of compatibility. The compatibility with the silicone (meth)acrylate such as silicone di(meth)acrylate which is less hydrophilic is improved when polypropylene glycol diacrylate or polybutylene glycol diacrylate is used as the bifunctional (meth)acrylate (B), and thus it is possible to obtain a transparent active energy ray-curable resin composition. One kind of these bifunctional (meth)acrylates (B) may be used singly or two or more kinds thereof may be used concurrently. In addition, it is preferable to concurrently use polyethylene glycol and polypropylene glycol diacrylate and/or polybutylene glycol diacrylate in terms of exhibiting both antifouling property and compatibility.

In addition, a silicone (meth)acrylate is suitably used as the bifunctional (meth)acrylate (B) from the viewpoint of low surface free energy and an antifouling property improving effect. Specific examples of the silicone (meth)acrylate may suitably include SILAPLANE series manufactured by CHISSO CORPORATION, silicone diacrylate "X-22-164" and "X-22-1602" manufactured by Shin-Etsu Chemical Co., Ltd., "BYK-3500" manufactured by BYK Japan KK, and TEGO Rad series manufactured by Evonik Degussa Japan Co., Ltd. One kind of these bifunctional (meth)acrylates (B) may be used singly or two or more kinds thereof may be used concurrently.

The bifunctional (meth)acrylates (B) is contained at from 30 to 75 parts by mass when the total of the polymerizable components in the active energy ray-curable resin composition is 100 parts by mass. An increase in the elastic modulus of the surface layer is suppressed when the content of the bifunctional (meth)acrylate (B) is from 30 parts by mass or more, and thus it is easy to force out dirt from the concave portion and sufficient antifouling property is exerted as a result. A decrease in the elastic modulus is suppressed when the content of the bifunctional (meth)acrylates (B) is 75 parts by mass or less, and thus it is possible to suppress the coalescence of the convex portions.

The active energy ray-curable resin composition may contain a monofunctional monomer other than these. It is desirable to select the monofunctional monomer in consideration of the compatibility with the tri- or higher functional (meth)acrylate (A) and the bifunctional (meth)acrylate (B), and from this point of view, examples thereof may preferably include a hydrophilic monofunctional monomer such as a monofunctional (meth)acrylate having a polyethylene glycol chain in an ester group, a monofunctional (meth)acrylate having a hydroxyl group in an ester group such as a hydroxyalkyl (meth)acrylate, a monofunctional acrylamide, and a cationic monomer such as methacrylamidopropyl trimethylammonium methyl sulfate or methacryloyloxyethyl trimethylammonium methyl sulfate. As the monofunctional monomer, it is possible to use "M-20G", "M-90G", and "M-230G" (manufactured by SHIN-NAKAMURA CHEMICAL CO., LTD.) of a monofunctional (meth)acrylate, specifically. In addition, an alkyl mono(meth)acrylate, a silicone (meth)acrylate, and an alkyl fluoride (meth)acrylate are preferably used from the viewpoint of improving antifouling property. As such a monofunctional monomer, it is possible to use "BLEMMER LA", "BLEMMER CA", and "BLEMMER SA" manufactured by NOF CORPORATION, "X-24-8201" and "X-22-174DX" manufactured by Shin-Etsu Chemical Co., Ltd., and "C10GACRY" manufactured by Exfluor Research Corporation, specifically.

In addition, it is also possible to add a viscosity modifier such as acryloylmorpholine or vinylpyrrolidone, or an adhesion improving agent such as acryloyl isocyanate to improve the adhesion to the transparent substrate, to the active energy ray-curable resin composition.

The content of the monofunctional monomer in the active energy ray-curable resin composition is, for example, preferably from 0.1 to 20 parts by mass and more preferably from 5 to 15 parts by mass when the total of the polymerizable components in the active energy ray-curable resin composition is 100 parts by mass. The adhesion between the substrate and the surface layer (resin cured by active energy ray) is improved when the monofunctional monomer is contained. The contents of the tri- or higher functional (meth)acrylate (A) and the bifunctional (meth)acrylate (B) are adjusted when the content of the monofunctional monomer is 20 parts by mass or less, and thus antifouling property is likely to be sufficiently exerted. One kind of the monofunctional monomers may be used singly or two or more kinds thereof may be mixed and used.

In addition, a polymer (oligomer) having a low polymerization degree prepared by polymerizing one kind or two or more kinds of monofunctional monomers may be added to the active energy ray-curable resin composition. Specific examples of such a polymer having a low polymerization degree may include a monofunctional (meth)acrylate having a polyethylene glycol chain in an ester group (for example, "M-230G" manufactured by SHIN-NAKAMURA CHEMICAL CO., LTD.) or a 40/60 copolymerized oligomer of methacrylamidopropyl trimethylammonium methyl sulfate (for example, "MG polymer" manufactured by MRC UNITECH Co., Ltd.).

Furthermore, the active energy ray-curable composition may contain an antistatic agent, a mold releasing agent, an ultraviolet absorber, and fine particles such as colloidal silica other than the various monomers or the polymer having a low polymerization degree described above.

The active energy ray-curable resin composition may contain a mold releasing agent. It is possible to maintain favorable releasability at the time of continuously producing a laminate when the mold releasing agent is contained in the active energy ray-curable resin composition. Examples of the mold releasing agent may include a (poly)oxyalkylene alkyl phosphoric acid compound. Particularly, in the case of using an anodic alumina mold, the mold releasing agent is easily adsorbed on the surface of the mold since the (poly)oxyalkylene alkyl phosphoric acid compound and alumina interact.

Examples of the commercially available product of the (poly)oxyalkylene alkyl phosphoric acid compound may include "JP-506H" (trade name) manufactured by JOHOKU CHEMICAL CO., LTD., "MoldWiz INT-1856" (trade name) manufactured by Axel Plastics Research Laboratories, Inc., and "TDP-10", "TDP-8", "TDP-6", "TDP-2", "DDP-10", "DDP-8", "DDP-6", "DDP-4", "DDP-2", "TLP-4", "TCP-5", and "DLP-10" (trade names) manufactured by Nikko Chemicals Co., Ltd.

As the mold releasing agent contained in the active energy ray-curable resin composition, one kind of the mold releasing agents may be used singly or two or more kinds thereof may be used concurrently.

The content of the mold releasing agent contained in the active energy ray-curable resin composition is preferably from 0.01 to 2.0 parts by mass and more preferably from 0.05 to 0.2 part by mass with respect to 100 parts by mass of the polymerizable components. The releasability of the article having a fine relief structure on the surface from a mold is favorable when the content of the mold releasing agent is 0.01 part by mass or more. On the other hand, the adhesion between the cured product of the active energy ray-curable resin composition and the substrate is favorable and the hardness of the cured product is adequate when the proportion of the mold releasing agent is 2.0 parts by mass or less, and thus the fine relief structure can be sufficiently maintained.

In the laminate of the present embodiment, the contact angle of water on the surface treatment layer is preferably 120° or more and more preferably 130° or more. The surface energy is sufficiently low when the contact angle of water on the surface treatment layer is 120° or more, and thus dirt can be easily wiped off. The surface energy is sufficiently low when the contact angle of water on the surface treatment layer is 130° or more, and thus the attachment of dirt can be suppressed. The upper limit of the contact angle of water on the surface treatment layer is not particularly limited but is preferably 150° or less and more preferably 145° or less. A compound having an alkyl group, a polydimethylsiloxane structure or a fluorinated alkyl group is suitably used as such a surface treatment layer which exhibits water repellency, and it is preferable to have a reactive group such as a silane, an alkoxysilane, a silazane, or a (meth)acrylate from the viewpoint of adhesion to the fine relief structure. Specific examples of such a compound may suitably include "KBM" series, "KBE" series, and "X" series manufactured by Shin-Etsu Chemical Co., Ltd., "BYK" series manufactured by BYK Japan KK, "TEGO Rad" series manufactured by Evonik Degussa Japan Co., Ltd., and "FG" series and "FS" series manufactured by Fluoro Technology.

The surface treatment layer can be coated by a general method such as dipping, spraying, brush coating, and spin coating. In addition, it is preferable to subject the fine relief structure to a preliminary treatment in order to improve the adhesion between the surface treatment layer and the surface of the fine relief structure. Examples of the preliminary treatment may include the introduction of a functional group into the surface by the silica deposition, plasma or the like, and the coating of a primer containing a compound exhibiting favorable reactivity with the surface treatment layer. The thickness of the surface treatment layer is preferably 100 nm or less from the viewpoint of maintaining the antireflection performance of the fine relief shape. The existence of the surface treatment layer can be confirmed by the change in the spectrum depending on the angle of incidence in the variable angle ATR measurement or the cross-sectional observation by a TEM.

The active energy ray-curable resin composition of the present embodiment can appropriately contain a monomer having a radically polymerizable and/or cationically polymerizable bond in the molecule, a polymer having a low polymerization degree, and a reactive polymer and is cured by a polymerization initiator to be described below. In addition, the active energy ray-curable resin composition may contain a nonreactive polymer.

The laminate of the present embodiment is a laminate equipped with a surface layer excellent in antifouling property that dirt can be easily removed, and thus dirt such as sebum to be attached at the time of use hardly adheres and is easily removed and excellent antireflection performance can be exerted when the laminate of the present embodiment is mounted on the outermost surface of an antireflection article, an image display device, a touch panel and the like. Furthermore, an article excellent in practical use is obtained since it is possible to easily remove dirt without applying water or an alcohol to the surface.

(Embodiment 7)

Hereinafter, the present embodiment will be described in detail.

Fig. 1 is a schematic cross-sectional diagram illustrating an example of the configuration of a laminate 10 according to the present embodiment. In Fig. 1, a surface layer 12 composed of a cured product of an active energy ray-curable composition is formed on the surface of a transparent substrate 11. In the laminate 10, the fine relief structure is formed on the surface of the surface layer 12.

In the laminate of the present embodiment, the surface layer is a cured product of an active energy ray-curable composition, and the active energy ray-curable composition contains a compound (D) having a SH group. The SH group refers to a thiol group, a sulfhydryl group, a mercapto group, or a sulfhydryl group. A chemical bond between a sulfur atom and a sulfur atom or carbon atom is obtained when the compound (D) having a SH group is contained in the active energy ray-curable composition. In that case, it is possible to decrease the elastic modulus while maintaining the crosslinking density of the cured product and thus it is possible to impart flexibility to the projection while maintaining the shape of the projection and to remove the dirt accumulated in the concave portion, and as a result, antifouling property is improved.

In the laminate of the present embodiment, the surface layer is a cured product of an active energy ray-curable resin composition, and the active energy ray-curable resin composition preferably contains a bi- or higher functional (meth)acrylate (E) at from 0 to 95 parts by mass, a silicone (meth)acrylate (C) at from 0 to 75 parts by mass, and a compound (D) having a SH group at from 1 to 60 parts by mass (provided that the total of polymerizable components is 100 parts by mass). Meanwhile, the silicone (meth)acrylate (C) is excluded from the bi- or higher functional (meth)acrylate (E).

Here, the bi- or higher functional (meth)acrylate (E) means a compound which has at least two groups selected from an acryloyl group (CH$_2$=CHCO-) and a methacryloyl group (CH$_2$=C(CH$_3$)CO-) in the molecule.

Examples of the bi- or higher functional (meth)acrylate (E) may include a bifunctional monomer such as ethylene glycol di(meth)acrylate, tripropylene glycol di(meth)acrylate, isocyanuric acid ethylene oxide-modified di(meth)acrylate, triethylene glycol di(meth)acrylate, diethylene glycol di(meth)acrylate, neopentyl glycol di(meth)acrylate, 1,6-hexanediol di(meth)acrylate, 1,5-pentanediol di(meth)acrylate, 1,3-butylene glycol di(meth)acrylate, polybutylene glycol di(meth) acrylate, 2,2-bis(4-(meth)acryloxypolyethoxyphenyl)propane, 2,2-bis(4-(meth)acryloxyethoxy)propane, 2,2-bis(4-(3-(meth)acryloxy-2-hydroxypropoxy)phenyl)propane, 1,2-bis(3-(meth)acryloxy-2-hydroxypropoxy)ethane, 1,4-bis(3-(meth)acryloxy-2-hydroxypropoxy)butane, dimethyloltricyclodecane di(meth)acrylate, ethylene oxide adduct of bisphenol A di(meth)acrylate, propylene oxide adduct of bisphenol A di(meth)acrylate, hydroxypivalic acid neopentyl glycol di(meth) acrylate, divinylbenzene, and methylenebisacrylamide, a trifunctional monomer such as pentaerythritol tri(meth)acrylate, trimethylolpropane tri(meth)acrylate, trimethylolpropane ethylene oxide-modified tri(meth)acrylate, trimethylolpropane propylene oxide modified triacrylate, trimethylolpropane ethylene oxide modified triacrylate, and isocyanuric acid ethylene oxide-modified tri(meth)acrylate, a polyfunctional monomer such as a condensation reaction mixture of succinic acid/trimethylolethane/acrylic acid, dipentaerythritol hexa(meth)acrylate, dipentaerythritol penta(meth)acrylate, ditrimethylolpropane tetraacrylate, and tetramethylolmethane tetra(meth)acrylate, a bifunctional or higher urethane acrylate, and a bifunctional or higher polyester acrylate. One kind of these may be used singly or two or more kinds thereof may be used in combination.

The bi- or higher functional (meth)acrylate (E) is contained at preferably from 0 to 95 parts by mass, more preferably from 25 to 90 parts by mass, and particularly preferably from 40 to 90 parts by mass when the total of the polymerizable components in the active energy ray-curable composition is 100 parts by mass. An excessive decrease in the elastic modulus is suppressed when the content of the bi- or higher functional (meth)acrylate (E) is 0 parts by mass or more and 95 parts by mass or less, and thus the shape of the projection can be maintained. In addition, it is easy to suppress the elastic modulus when the bi- or higher functional (meth)acrylate (E) is added to the composition, that is, its content is more than 0 part by mass, and thus the shape of the projection is easily maintained. Moreover, a decrease in the elastic modulus is suppressed when the content of the bi- or higher functional (meth)acrylate (E) is 40 parts by weight or more, and thus it is possible to more effectively prevent the coalescence of the projections. In addition, the elastic modulus decreases when the content of the bi- or higher functional (meth)acrylate (E) is 95 parts by mass or less, and thus it is possible to more effectively remove dirt. Moreover, the elastic modulus sufficiently decreases when the content is 90 parts by mass or less, and thus it is possible to more effectively remove the dirt accumulated in the concave portion. As a result, it is easy to force out the dirt from the concave portion and thus it is possible to impart sufficient antifouling property to the laminate.

The silicone (meth)acrylate (C) is a compound having at least one group selected from an acryloyl group (CH$_2$=CHCO-) and a methacryloyl group (CH$_2$=C(CH$_3$)CO-) at the side chain and/or terminal of the compound having an organosiloxane structure. It is desirable to select the silicone (meth)acrylate (C) from the viewpoint of the compatibility with the bi- or higher functional (meth)acrylate (E), and it is preferable to use a compound having a compatible segment which contributes to the compatibility with polyfunctional (meth)acrylate (E) as the silicone (meth)acrylate (C). Examples of the compatible segment may include a polyalkylene oxide structure, a polyester structure and a polyamide structure. One kind of these compatible segments may be contained in the silicone (meth)acrylate (C) singly or two or more kinds thereof may be contained. In addition, the silicone (meth)acrylate (C) may be used by being diluted in terms of handling. As the diluent, those having reactivity is preferable in terms of bleed-out from the cured product, or the like. In addition, it is also possible to improve the handling of the silicone (meth)acrylate (C) by mixing the bi- or higher functional (meth)acrylate (E) with the silicone (meth)acrylate (C).

Specific examples of such a silicone (meth)acrylate (C) may suitably include SILAPLANE series (trade name) manufactured by CHISSO CORPORATION, silicone diacrylate "X-22-164" and "X-22-1602" (both of them are trade names) manufactured by Shin-Etsu Chemical Co., Ltd., "BYK-3500" and "BYK-3570" (both of them are trade names) manufactured by BYK Japan KK, and TEGO Rad series (trade name) manufactured by Evonik Degussa Japan Co., Ltd. One kind of these silicone (meth)acrylates (C) may be used singly or two or more kinds thereof may be used concurrently.

The silicone (meth)acrylate (C) is preferably contained at from 0 to 75 parts by mass and more preferably from 5 to 70 parts by mass when the total of the polymerizable components in the active energy ray-curable composition is 100 parts by mass. Water repellency is imparted and antifouling property is more improved when the content of the silicone (meth)acrylate (C) is 0 part by mass or more and 75 parts by mass or less. Water repellency is more efficiently imparted and antifouling property is improved when the silicone (meth)acrylate (C) is added to the composition, that is, its content is more than 0 part by mass. In addition, the surface energy of the surface layer decreases and the contact angle of water is 130° or more when the content of the silicone (meth)acrylate (C) is 5 parts by mass or more, and thus antifouling property is further improved. In addition, the compatibility with other components is improved when the content of the silicone (meth)acrylate (C) is 75 parts by mass or less, and thus the transparency is improved. Moreover, the viscosity of the active energy ray-curable composition is suppressed when the content of the silicone (meth)acrylate (C) is 70 parts by mass or less, and thus handling is improved.

The compound (D) containing a SH group is not particularly limited as long as it is a compound containing a SH group. A compound containing two or more SH groups is preferable in order to increase the surface crosslinking density and to maintain the strength, and the SH group is more preferably a secondary thiol from the viewpoint of the storage stability of the active energy ray-curable composition.

Examples of the compound containing two or more SH groups may include a dithiol compound such as 1,2-ethanedithiol, 1,2-propanedithiol, 1,3-propanedithiol, 1,4-butanedithiol, 1,6-hexanedithiol, 1,7-heptanedithiol, 1,8-octanedithiol, 1,9-nonanedithiol, 1,10-decanedithiol, 1,12-dodecanedithiol, 2,2-dimethyl-1,3-propanedithiol, 3-methyl-1,5-pentanedithiol, 2-methyl-1,8-octanedithiol, 1,4-cyclohexanedithiol, 1,4-bis(mercaptomethyl)cyclohexane, 1,1-cyclohexanedithiol, 1,2-cyclohexanedithiol, bicyclo[2,2,1]hept-exo-cis-2,3-dithiol, 1,1-bis(mercaptomethyl)cyclohexane, bis(2-mercaptoethyl) ether, ethylene glycol bis(2-mercaptoacetate), and ethylene glycol bis(3-mercaptopropionate); a trithiol compound such as 1,1,1-tris(mercaptomethyl)ethane, 2-ethyl-2-mercaptomethyl-1,3-propanedithiol, 1,2,3-propanetrithiol, trimethylolpropane tris(2-mercaptoacetate), trimethylolpropane tris(3-mercaptopropionate), and tris((mercaptopropionyloxy)-ethyl) isocyanurate; and a thiol compound having four or more SH groups such as pentaerythritol tetrakis(2-mercaptoacetate), pentaerythritol tetrakis(3-mercaptopropionate), pentaerythritol tetrakis(3-mercaptobutanate), and dipentaerythritol hexa-3-mercaptopropionate.

Examples of the compound having a secondary thiol may include Karenz MT PE1, Karenz MT NR1, and Karenz MT BD1 (trade names, manufactured by SHOWA DENKO K. K.).

Specific examples of such a compound (D) containing a SH group may suitably include "Karenz MT PE1", "Karenz MT BD1", and "Karenz MTNR1" (all of them are trade names) manufactured by SHOWA DENKO K. K.

The compound (D) containing a SH group is contained at preferably from 1 to 60 parts by mass and more preferably from 1 to 15 parts by mass when the total of the polymerizable components in the active energy ray-curable composition is 100 parts by mass. It is possible to decrease the elastic modulus of the surface layer while maintaining the crosslinking density when the content of the compound (D) containing a SH group is 1 part by mass or more, thus it is easy to force out dirt from the concave portion, and as a result, it is possible to impart sufficient antifouling property to the laminate and to maintain the resilience of the shape of the convex portion. In addition, it is possible to maintain the storage stability of the active energy ray-curable composition when the content of the compound (D) containing a SH group is 60 parts by mass or less. In addition, a decrease in the elastic modulus of the surface layer is more effectively suppressed when the content of the compound (D) containing a SH group is 15 parts by mass or less, and thus it is possible to prevent the coalescence of the convex portions.

The active energy ray-curable composition may contain a monofunctional monomer other than these. It is desirable to select the monofunctional monomer in consideration of the compatibility with the bi- or higher functional (meth)acrylate (E) and the silicone (meth)acrylate (C). From this point of view, examples of the monofunctional monomer may preferably include a hydrophilic monofunctional monomer such as a monofunctional (meth)acrylate having a polyethylene glycol chain in an ester group, a monofunctional (meth)acrylate having a hydroxyl group in an ester group such as hydroxyalkyl (meth)acrylate, a monofunctional acrylamide, and a cationic monomer such as methacrylamidopropyltrimethylammonium methyl sulfate or methacryloyloxyethyltrimethyl ammonium methyl sulfate. As the monofunctional monomer, it is possible to use "M-20G", "M-90G", and "M-230G" (all of them are trade names, manufactured by SHIN-NAKAMURA CHEMICAL CO., LTD.) of a monofunctional (meth)acrylate, specifically. In addition, an alkyl mono(meth)acrylate, a silicone (meth)acrylate, and an alkyl fluoride(meth)acrylate are preferably used from the viewpoint of improving antifouling property. As such a monofunctional monomer, it is possible to use "BLEMMER LA", "BLEMMER CA", and "BLEMMER SA" (all of them are trade names) manufactured by NOF CORPORATION, "X-24-8201" and "X-22-174DX" (both of them are trade names) manufactured by Shin-Etsu Chemical Co., Ltd., and "C10GACRY" (trade name) manufactured by Exfluor Research Corporation, specifically.

In addition, it is also possible to add a viscosity modifier such as acryloylmorpholine or vinylpyrrolidone or an adhesion improving agent such as acryloyl isocyanate to improve the adhesion to the transparent substrate to the active energy ray-curable composition.

In the case of containing a monofunctional monomer, the content thereof is, for example, preferably from 0.1 to 20 parts by mass and more preferably from 5 to 15 parts by mass when the total of the polymerizable components in the active energy ray-curable composition is 100 parts by mass. It is possible to improve the adhesion between the substrate and the surface layer (active energy ray-curable composition) when the monofunctional monomer is contained. The contents of the bi- or higher functional (meth)acrylate (E), the silicone (meth)acrylate (C), and the compound (D) containing a SH group are adjusted when the content of the monofunctional monomer is 20 parts by mass or less, and thus antifouling property is likely to be sufficiently exerted. One kind of the monofunctional monomers may be used singly or two or more kinds thereof may be mixed and used.

In addition, a polymer (oligomer) having a low polymerization degree prepared by polymerizing one kind or two or more kinds of monofunctional monomers may be added to the active energy ray-curable composition. Specific examples of such a polymer having a low polymerization degree may include a monofunctional (meth)acrylate having a polyethylene glycol chain in an ester group (for example, "M-230G" (trade name) manufactured by SHIN-NAKAMURA CHEMICAL CO., LTD.) or a 40/60 copolymerized oligomer of methacrylamidopropyltrimethylammonium methyl sulfate (for example, "MG polymer" (trade name) manufactured by MRC UNITECH Co., Ltd.).

Furthermore, the active energy ray-curable composition may contain an antistatic agent, a mold releasing agent, an ultraviolet absorber, and fine particles such as colloidal silica other than the various monomers or the polymer having a low polymerization degree described above.

The active energy ray-curable composition may contain a mold releasing agent. It is possible to maintain favorable releasability at the time of continuously producing a laminate when the mold releasing agent is contained in the active energy ray-curable composition. Examples of the mold releasing agent may include a (poly)oxyalkylene alkyl phosphoric acid compound. Particularly, in the case of using an anodic alumina mold, the mold releasing agent is easily adsorbed on the surface of the mold since the (poly)oxyalkylene alkyl phosphoric acid compound and alumina interact.

Examples of the commercially available product of the (poly)oxyalkylene alkyl phosphoric acid compound may include "JP-506H" (trade name) manufactured by JOHOKU CHEMICAL CO., LTD., "MoldWiz INT-1856" (trade name) manufactured by Axel Plastics Research Laboratories, Inc., and "TDP-10", "TDP-8", "TDP-6", "TDP-2", "DDP-10", "DDP-8", "DDP-6", "DDP-4", "DDP-2", "TLP-4", "TCP-5", and "DLP-10" (all of them are trade names) manufactured by Nikko Chemicals Co., Ltd.

As the mold releasing agent contained in the active energy ray-curable composition, one kind of the mold releasing agents may be used singly or two or more kinds thereof may be used concurrently.

The content of the mold releasing agent contained in the active energy ray-curable composition is preferably from 0.01 to 2.0 parts by mass and more preferably from 0.05 to 0.2 part by mass with respect to 100 parts by mass of the polymerizable components. The releasability of the article having a fine relief structure on the surface from a mold is favorable when the content of the mold releasing agent is 0.01 part by mass or more. On the other hand, the adhesion between the cured product of the active energy ray-curable composition and the substrate is favorable and the hardness of the cured product is adequate when the proportion of the mold releasing agent is 2.0 parts by mass or less, and thus the fine relief structure can be sufficiently maintained.

In the laminate of the present embodiment, the elastic modulus of the surface of the fine relief structure, that is the elastic modulus of the surface layer is less than 160 MPa and preferably from 50 to 100 MPa. The fine relief structure is sufficiently hard when the elastic modulus of the surface layer is 50 MPa or more, and thus it is possible to effectively prevent the projection coalescence of the convex portions. For example, the fine relief structure is soft when the elastic modulus of the surface layer is 500 MPa or less, and thus it is possible to force out the dirt that has entered the concave portion. The fine relief structure is sufficiently soft when the elastic modulus of the surface layer is 100 MPa or less, and thus it is possible to freely deform the fine relief structure and to easily remove the dirt that has entered the concave portion.

In the laminate of the present embodiment, the contact angle of water on the surface layer of the part where the fine relief structure is formed is not particularly limited, but is preferably 130° or more. The surface energy is sufficiently low when the contact angle of water on the surface layer is 130° or more, and thus it is possible to easily wipe off dirt.

The upper limit of the contact angle of water on the surface layer is not particularly limited but is preferably 150° or less and more preferably 145° or less.

The active energy ray-curable composition of the present embodiment can appropriately contain a monomer having a radically polymerizable and/or cationically polymerizable bond in the molecule, a polymer having a low polymerization degree, and a reactive polymer. In addition, the active energy ray-curable composition can be cured by a polymerization initiator to be described below. Moreover, the active energy ray-curable composition may contain a nonreactive polymer.

The laminate of the present embodiment is a laminate equipped with a surface layer excellent in antifouling property that dirt can be easily removed, and thus dirt such as sebum to be attached at the time of use hardly adheres and is easily removed and excellent antireflection performance can be exerted when the laminate of the present embodiment is mounted on the outermost surface of an antireflection article, an image display device, a touch panel and the like. Furthermore, an article excellent in practical use is obtained since it is possible to easily remove dirt without applying water or an alcohol to the surface.

(Example A)

Hereinafter, the present embodiment will be specifically described with reference to Example A, but the invention is not limited thereto.

<Various kinds of evaluation and method for measurement>

(Determination of compatibility of curing liquid)

As the evaluation on the compatibility, the transparency of the active energy ray-curable resin composition (state before being cured) was visually observed under a fluorescent lamp.

A: transparent (favorable compatibility)
B: cloudy at room temperature but transparent when the active energy ray-curable resin composition is heated at 50 degrees.
C: cloudy at room temperature and 50 degrees (poor compatibility)

(Determination of contact angle of water)

The contact angle of the water droplet in 7 seconds after dropping 1 $\mu$l of water on the surface of the cured resins (resin cured by active energy ray) of the active energy ray-curable resin composition fabricated in Example A and Comparative Example A to be described below using an automatic contact angle measuring device (manufactured by KRUSS GmbH) was calculated by the $\theta/2$ method.

(Measurement of elastic modulus)

A load was applied to the surface of the surface layer using the "FISCHERSCOPE (R) HM2000" (trade name, manufactured by Fischer Technology, Inc.) while increasing the load under the condition of 50 mN/10 seconds, was held for 60 seconds at 50 mN, and was unloaded while decreasing the load under the condition of 50 mN/10 seconds. The elastic modulus was calculated by the extrapolation method using the points at which 65% and 95% of the load were applied during the operation. Meanwhile, it is also possible that a resin which is cured by an active energy ray and has a thickness of 500 $\mu$m is fabricated by sandwiching the active energy ray-curable resin composition between two glasses using a Teflon sheet having a thickness of 500 $\mu$m as a spacer and irradiating with ultraviolet light at the energy of the integrated amount of photoirradiation of 3000 mJ/cm$^2$ to photocure the active energy ray-curable resin composition, and then the elastic modulus may be calculated by performing the same measurement as the above for the irradiated surface (surface) of the cured resin.

(Antifouling property test)

First, the pseudo fingerprint was transferred onto the surface of the laminate by attaching an artificial fingerprint liquid (JIS K2246 manufactured by ISEKYU CO., LTD.) by the method described in JP 2006-147149 A. In this method, first, about 1 mL of the pseudo fingerprint component was taken while thoroughly stirring with a magnetic stirrer, and this pseudo fingerprint component was coated on a polycarbonate substrate (diameter of 120 mm, thickness of 1.2 mm) by a spin coating method. This substrate was heated at 60°C for 3 minutes so as to completely remove methoxypropanol which is the undesirable diluent. The resultant was adopted as the original plate for pseudo fingerprint transcription. Subsequently, the pseudo fingerprint transfer material was prepared by uniformly polishing the smaller end face of the NO. 1 silicone rubber plug (diameter of 12 mm) with #240 abrasive paper, and this polished end face was pressed against the above original plate at a load of 29 N for 10 seconds so as to shift the pseudo fingerprint component to the end face of the transfer material. Subsequently, the above end face of the transfer material was pressed against the surface of the translucent substrate of each of the above samples at a load of 29 N for 10 seconds so as to transfer the pseudo fingerprint component. Meanwhile, the fingerprint pattern was transferred to the position in the vicinity of a radius of 40 mm of the medium.

Next, the artificial fingerprint liquid was wiped off by rubbing backwards and forwards six times at a pressure of 39 KPa using the PROWIPE (trade name: Soft Super Wiper S132 manufactured by Daio Paper Corporation), and whether the dirt remained on the laminate was then visually observed under a fluorescent lamp. The evaluation was performed according to the following criteria.

    A: dirt is not visually confirmed.
    B: little dirt is visually confirmed.
    C: pseudo fingerprint is spread and extended, and dirt is not wiped off.

(Evaluation on projection coalescence)

The LED light was incident from the end face side (side face side) of the film, and whether a white spot was seen when observed from the incident direction was visually observed. The evaluation was performed according to the following criteria.

    A: a white spot is not seen when observed obliquely.
    B: a white spot is seen when observed obliquely but a white spot is not seen when observed perpendicularly.
    C: a white spot is seen when observed either obliquely or perpendicularly.

(Slope of friction coefficient)

A friction tester (trade name: HEIDON TRIBOGEAR HHS-2000 manufactured by SHINTO Scientific Co., Ltd.) was used for the measurement of the friction coefficient. A load of 1000 g was applied to the BEMCOT M-3II (trade name, manufactured by Asahi Kasei Fibers Corporation) of 2 cm square placed on the surface of the laminate and the reciprocating friction was performed 50 times at a reciprocating distance: 30 mm and a head speed: 30 mm/sec. The slope of the friction coefficient was calculated by the following Equation where the value of the dynamic friction coefficient at the first friction was $\mu_1$ and the value of the friction coefficient at the fiftieth friction was $\mu_{50}$.

$$\mu_s = (\mu_{50} - \mu_1)/(50 - 1)$$

(Excoriation resistance)

For the evaluation on the excoriation resistance, the reciprocating friction was performed 1,000 times using the method described above. For the appearance evaluation, the optical transparent article was pasted on one surface of the transparent black acrylic plate with a thickness of 2.0 mm (trade name: ACRYLITE manufactured by Mitsubishi Rayon Co., Ltd.), and the resultant was held to the fluorescent lamp in a room and was visually evaluated. The evaluation was performed according to the following criteria.

    A: scratch is not visually confirmed.
    B: few scratches are visually confirmed.
    C: a great number of scratches are visually confirmed.

(Observation of sample surface by electron microscope)

The fine relief structures formed on the surfaces of the stamper and the laminate were observed using a scanning electron microscope ("JSM-7400F" manufactured by JEOL Ltd.) under the condition of an acceleration voltage of 3.00 kV. Meanwhile, with regard to the observation of the laminate, the observation was performed after depositing platinum for 10 minutes. The distance between the adjacent convex portions and the height of the convex portion were measured from the image thus obtained. Ten points were measured for each, and the average values thereof were calculated, respectively.

<Fabrication of stamper>

An electropolished aluminum disk (purity of 99.99% by mass, thickness of 2 mm, $\phi$65 mm) was used as an aluminum substrate. The aluminum substrate was immersed in a 0.3 M aqueous solution of oxalic acid adjusted to 15°C, and a current was allowed to intermittently flow to the aluminum substrate by repeating ON/OFF of the power supply of the direct current stabilization equipment so as to anodize the aluminum substrate. Next, an operation of applying a constant voltage of 80 V for 5 seconds at intervals of 30 seconds was repeated 60 times so as to form an oxide film having pores. Subsequently, the aluminum substrate having an oxide film formed thereon was immersed in an aqueous solution prepared by mixing 6% by mass of phosphoric acid and 1.8% by mass of chromic acid at 70°C for 6 hours so that the oxide film was dissolved and removed. The aluminum substrate from which the oxide film had been dissolved and removed was immersed in a 0.05 M aqueous solution of oxalic acid adjusted to 16°C to perform the anodic oxidation at 80 V for 7 seconds. Subsequently, the aluminum substrate was immersed in a 5% by mass aqueous solution of phosphoric acid adjusted to 32°C for 20 minutes to perform the pore size enlargement treatment by which the pores of the oxide film are expanded. The anodic oxidation treatment and the pore size enlargement treatment were alternately repeated in this manner. Each of the anodic oxidation treatment and the pore size enlargement treatment was performed five times. The stamper thus obtained was immersed in a 0.1% by mass aqueous solution of the TDP-8 (manufactured by Nikko Chemicals Co., Ltd.) for 10 minutes, then withdrawn therefrom, and dried overnight, thereby performing the mold release treatment.

The surface of the porous alumina thus obtained was observed with an electron microscope to find that a fine relief structure consisting of a substantially conical tapered concave portion having a distance between the adjacent concave portions of 180 nm and a depth of 180 nm was formed.

[Example A]

<Production of laminate>

An active energy ray-curable resin composition was prepared by mixing the following materials.

- Ethylene oxide-modified dipentaerythritol hexaacrylate ("KAYARAD DPEA-12" manufactured by Nippon Kayaku Co., Ltd., number of ethylene oxide structural unit in one molecule n = 12): 40 parts by mass,
- Aronix M-260 (trade name, manufactured by TOAGOSEI CO., LTD., average repeating unit of polyethylene glycol chain of 13): 60 parts by mass,
- IRGACURE 184 (trade name, manufactured by Ciba Specialty Chemicals Inc.): 1 part by mass,
- IRGACURE 819 (trade name, manufactured by Ciba Specialty Chemicals Inc.): 0.5 part by mass and
- TDP-2 (trade name, manufactured by Nikko Chemicals Co., Ltd.): 0.1 part by mass

A few drops of the active energy ray-curable resin composition was dropped on the stamper and coated on the stamper while spreading out with a triacetyl cellulose film (FTTD80ULM (trade name) manufactured by FUJIFILM Corporation). Subsequently, the active energy ray-curable resin composition was photocured by irradiating with ultraviolet light at the energy of the integrated amount of photoirradiation of 1000 mJ/cm$^2$ from the film side. Thereafter, the stamper was peeled off from the film, thereby obtaining a laminate having a fine relief structure with a distance wl between the adjacent convex portions of 180 nm and a height dl of the convex portion of 180 nm as illustrated in Fig. 1.

<Evaluation>

The evaluation on each of the compatibility of the components contained in the active energy ray-curable resin composition and the contact angle of water, the elastic modulus, the antifouling property, the slope of the friction coefficient ($\mu_s$), the excoriation resistance, and the projection coalescence with regard to the laminate thus obtained was performed. The results are presented in Table 2.

[Table 1]

[Table 1]

| | Active energy ray-curable resin composition (part by mass) | | | | | | | | | | Surface treatment layer |
| | Polymerizable component | | | | | | | Initiator | | | |
| | DPHA | DPEA-12 | DPEA-18 | M-260 | APG700 | BYK-UV3570 | PE1 | IRG.184 | IRG.819 | TDP-2 | |
| Example A1 | | 40 | | 60 | | | | 1 | 0.5 | 0.1 | Absence |
| Example A2 | | 30 | | 70 | | | | 1 | 0.5 | 0.1 | Absence |
| Example A3 | | 20 | | 80 | | | | 1 | 0.5 | 0.1 | Absence |
| Example A4 * | | 10 | | 90 | | | | 1 | 0.5 | 0.1 | Absence |
| Example A5 * | | | 50 | 50 | | | | 1 | 0.5 | 0.1 | Absence |
| Example A6 * | 10 | | | 90 | | | | 1 | 0.5 | 0.1 | Absence |
| Example A7 | | 27 | | 64 | 0 | 9 | | 1 | 0.5 | 0.1 | Absence |
| Example A8 | | 24 | | 56 | 0 | 20 | | 1 | 0.5 | 0.1 | Absence |
| Example A9 | | 20 | | 47 | 0 | 33 | | 1 | 0.5 | 0.1 | Absence |
| Example A10 | | 17 | | 40 | 0 | 43 | | 1 | 0.5 | 0.1 | Absence |
| Example A11 | | 15 | | 35 | 0 | 50 | | 1 | 0.5 | 0.1 | Absence |
| Example A12 | | 12 | | 28 | 0 | 60 | | 1 | 0.5 | 0.1 | Absence |
| Example A13 | | 10 | | 23 | 0 | 67 | | 1 | 0.5 | 0.1 | Absence |
| Example A14 | | 27 | | 32 | 32 | 9 | | 1 | 0.5 | 0.1 | Absence |
| Example A15 | | 10 | | 70 | | 20 | | 1 | 0.5 | 0.1 | Absence |
| Example A16* | | 40 | | 40 | | 20 | | 1 | 0.5 | 0.1 | Absence |
| Example A17* | | 40 | | 20 | | 40 | | 1 | 0.5 | 0.1 | Absence |
| Example A18 | | 22 | | 32 | 32 | 9 | 5 | 1 | 0.5 | 0.1 | Absence |
| Example A19 | | 29 | | 70 | 0 | 1 | | 1 | 0.5 | 0.1 | Absence |
| Example A20 | | 15 | | 35 | 0 | 50 | | 1 | 0.5 | 0.1 | Presence |
| Comparative Example A1 | | 70 | | 30 | | | | 1 | 0.5 | 0.1 | Absence |
| Comparative Example A2 | | 60 | | 40 | | | | 1 | 0.5 | 0.1 | Absence |

(continued)

| | Active energy ray-curable resin composition (part by mass) | | | | | | | | | | Surface treatment layer |
| | Polymerizable component | | | | | | Initiator | | | | |
| | DPHA | DPEA-12 | DPEA-18 | M-260 | APG700 | BYK-UV3570 | PE1 | IRG.184 | IRG.819 | TDP-2 | |
| Comparative Example A3 | | 30 | | | 70 | | | 1 | 0.5 | 0.1 | Absence |
| *: Examples A4, A5, A6, A16 and A17 are Reference Examples. | | | | | | | | | | | |

[Table 2]

[Table 21]

| | | | | Evaluation | | | |
|---|---|---|---|---|---|---|---|
| | Compatibility | Contact angle | Elastic modulus (MPa) | Antifouling property — Artificial fingerprint liquid | Projection coalescence | μs — 1 to 50 times | Excoriation resistance |
| Example A1 | A | 10 | 149 | B | A | $-0.7 \times 10^{-3}$ | A |
| Example A2 | A | 7 | 110 | B | A | $-0.8 \times 10^{-3}$ | A |
| Example A3 | A | 6 | 74 | B | B | $-1.0 \times 10^{-3}$ | A |
| Example A4 | A | 7 | 50 | B | B | $0.3 \times 10^{-3}$ | B |
| Example A5 | A | 5 | 112 | B | A | $-0.6 \times 10^{-3}$ | B |
| Example A6 | A | 7 | 89 | B | B | $-0.9 \times 10^{-3}$ | A |
| Example A7 | B | 136 | 98 | B | A | $-1.6 \times 10^{-3}$ | A |
| Example A8 | B | 139 | 80 | B | A | $0.2 \times 10^{-3}$ | B |
| Example A9 | B | 140 | 68 | B | A | $-0.4 \times 10^{-3}$ | B |
| Example A10 | B | 140 | 66 | B | A | $0.8 \times 10^{-3}$ | B |
| Example A11 | A | 139 | 64 | A | A | $-1.7 \times 10^{-3}$ | B |
| Example A12 | A | 140 | 55 | A | A | $0.9 \times 10^{-3}$ | A |
| Example A13 | A | 140 | 49 | A | B | $0.7 \times 10^{-3}$ | B |
| Example A14 | A | 133 | 100 | B | A | $-0.1 \times 10^{-3}$ | A |
| Example A15 | B | 138 | 106 | A | B | $0.5 \times 10^{-3}$ | B |
| Example A16 | C | 139 | 245 | B | A | $0.5 \times 10^{-3}$ | A |
| Example A17 | B | 139 | 217 | B | A | $0.5 \times 10^{-3}$ | B |
| Example A18 | A | 137 | 68 | B | A | $06 \times 10^{-3}$ | A |
| Example A19 | B | 97 | 106 | B | A | $-1.5 \times 10^{-3}$ | A |
| Example A20 | A | 140 | 64 | A | A | $0.3 \times 10^{-3}$ | A |
| Comparative Example A1 | A | 6 | 518 | C | A | $-0.1 \times 10^{-3}$ | A |

| | Evaluation | | | | | | Excoriation resistance |
|---|---|---|---|---|---|---|---|
| | Compatibility | Contact angle | Elastic modulus (MPa) | Antifouling property | Projection coalescence | $\mu$S | |
| | | | | Artificial fingerprint liquid | | 1 to 50 times | |
| Comparative Example A2 | A | 7 | 268 | C | A | $-0.1\times10^{-3}$ | B |
| Comparative Example A3 | A | 48 | 116 | C | A | Unmeasurable at 33th time | C |
| Examples A4, A5, A6, A16 and A17 are Reference Examples. | | | | | | | |

The abbreviations in Table 1 are as follows.

DPHA: dipentaerythritol hexaacrylate ("KAYARAD DPHA" manufactured by Nippon Kayaku Co., Ltd.),
DPEA-12: ethylene oxide-modified dipentaerythritol hexaacrylate ("KAYARAD DPEA-12" manufactured by Nippon Kayaku Co., Ltd., number of ethylene oxide structural unit in one molecule n = 12),
DPEA-18 ("trade name: DPHA-18EO-modified" manufactured by DAI-ICHI KOGYO SEIYAKU CO., LTD., number of ethylene oxide structural unit in one molecule n = 18),
M-260: polyethylene glycol diacrylate ("Aronix M-260" manufactured by TOAGOSEI CO., LTD., average repeating unit of polyethylene glycol chain of 13),
APG-700: polypropylene glycol diacrylate (manufactured by SHIN-NAKAMURA CHEMICAL CO., LTD., average repeating unit of polypropylene glycol chain of 12),
BYK-UV3570: silicone acrylate propylene oxide-modified neopentyl glycol diacrylate diluted product (manufactured by BYK Japan KK),
PE1: Karenz MT PE1 (trade name, manufactured by SHOWA DENKO K. K., compound having four SH groups),
IRG. 184: hydroxycyclohexyl phenyl ketone ("IRGACURE 184" manufactured by Ciba Specialty Chemicals Inc.),
IRG. 819: phenylbis(2,4,6-trimethylbenzoyl)-phosphine oxide ("IRGACURE 819" manufactured by Ciba Specialty Chemicals Inc.), and
TDP-2: polyoxyethylene alkyl ether phosphoric acid (trade name, manufactured by Nikko Chemicals Co., Ltd.)

[Examples A2 to A19 (Examples A4, A5, A6, A16 and A17 are Reference Examples)]

The laminates were obtained in the same manner as in Example A1 except using the active energy ray-curable resin compositions having the constitutions presented in Table 1. The results are presented in Table 2.

[Example A20]

The laminate having a cured product layer was obtained in the same manner as in Example A1 except using the active energy ray-curable resin composition having the constitution presented in Table 1. The cured product layer having a fine relief structure thus obtained was coated with the PC-3B (trade name, manufactured by Fluoro Technology) as a primer by spin coating. Thereafter, the resultant was dried at room temperature for 90 minutes, and FG5070S135-0.1 (trade name, manufactured by Fluoro Technology) was then spin coated and dried at 60°C for 3 hours, thereby obtaining a laminate having a surface treatment layer. The results are presented in Table 2.

[Comparative Examples A1 to A3]

The laminates were obtained in the same manner as in Example A1 except using the active energy ray-curable resin compositions having the constitutions presented in Table 1. The results are presented in Table 2.

The laminates obtained in Examples A1 to A3, A7 to A15 and A18 to A20 and Reference Examples A4 to A6, A16 and A17 exhibited antifouling property that dirt can be easily removed and excellent excoriation resistance since the elastic modulus of the surface layer was less than 160 MPa and the slope of the friction coefficient was $1.8 \times 10^{-3}$ or less.

The laminates obtained in Examples A11 to A13 and A19 were particularly excellent in compatibility and antifouling property as the elastic modulus of the surface layer was from 45 to 65 MPa and the contact angle of water on the surface layer was 135° or more.

In particular, the laminates obtained in Examples A12 and A20 were significantly excellent in compatibility, antifouling property and excoriation resistance as the elastic modulus of the surface layer was from 50 to 65 MPa and the contact angle of water on the surface layer was 140° or more.

The laminates obtained in Comparative Examples A1 to A3 did not exhibit sufficient antifouling property.

The evaluation of Comparative Example A3 was discontinued since a great number of scratches were generated on the surface layer and the surface layer was fractured and peeled off in the middle of the evaluation due to its inferior excoriation resistance.

(Reference Example B) (not in accordance with the present invention)

Hereinafter, a reference embodiment will be described with reference to Reference Example B.

<Various kinds of evaluation and method for measurement>

(Measurement of contact angle of water)

On the surface of the surface layer of the laminates fabricated in Reference Example B and Comparative Example B to be described below, 1 µl of water was dropped using an automatic contact angle measuring device (manufactured by KRUSS GmbH). The contact angle in 7 seconds was calculated by the θ/2 method.

(Measurement of elastic modulus)

The active energy ray-curable resin composition was sandwiched between two glasses using a Teflon sheet having a thickness of 500 µm as a spacer and irradiated with ultraviolet light at the energy of 3000 mJ/cm$^2$. The active energy ray-curable resin composition was photocured in this manner, thereby fabricating a cured product of an active energy ray-curable resin composition having a thickness of 500 µm. A load was applied to the irradiated surface of the cured product using the "FISCHERSCOPE (R) HM2000" (trade name, manufactured by Fischer) while increasing the load under the condition of 50 mN/10 seconds, was held for 60 seconds, and was unloaded under the same condition as that when increasing the load. The elastic modulus was calculated by the extrapolation method using the points at which 65% and 95% of the loads were applied during the operation.

(Antifouling property test)

The pseudo fingerprint was transferred onto the surface of the laminate by attaching a artificial fingerprint liquid (JIS K2246 manufactured by ISEKYU CO., LTD.) by the method described in JP 2006-147149 A. Specifically, about 1 mL of the pseudo fingerprint component was taken while thoroughly stirring with a magnetic stirrer, and this pseudo fingerprint component was coated on a polycarbonate substrate (diameter of 120 mm, thickness of 1.2 mm) by a spin coating method. This substrate was heated at 60°C for 3 minutes so as to completely remove methoxypropanol which is the undesirable diluent. The resultant was adopted as the original plate for pseudo fingerprint transcription. Subsequently, the pseudo fingerprint transfer material was prepared by uniformly polishing the smaller end face of the NO. 1 silicone rubber plug (diameter of 12 mm) with #240 abrasive paper, and this polished end face was pressed against the above original plate at a load of 29 N for 10 seconds so as to shift the pseudo fingerprint component to the end face of the transfer material. Subsequently, the above end face of the transfer material was pressed against the surface of the translucent substrate of each of the above samples at a load of 29 N for 10 seconds so as to transfer the pseudo fingerprint component. Meanwhile, the fingerprint pattern was transferred to the position in the vicinity of a radius of 40 mm of the medium. Next, the artificial fingerprint liquid was wiped off by rubbing backwards and forwards six times at a pressure of 98 KPa using the PROWIPE (trade name: Soft Super Wiper S132 manufactured by Daio Paper Corporation), and whether the dirt remained on the laminate was then visually observed under a fluorescent lamp. The evaluation was performed according to the following criteria.
○: dirt is not visually confirmed.
× : pseudo fingerprint is spread and extended, and dirt is not wiped off.

(Observation of sample surface by electron microscope)

The fine relief structures formed on the surfaces of the stamper and the surface layer of the laminate were observed using a scanning electron microscope (trade name: "JSM-7400F" manufactured by JEOL Ltd.) under the condition of an acceleration voltage of 3.00 kV. Meanwhile, with regard to the observation of the surface layer of the laminate, the observation was performed after depositing platinum for 10 minutes. The distance between the adjacent convex portions and the height of the convex portion were measured from the image thus obtained.

(Evaluation on projection coalescence)

The LED light was incident from the end face side (side face side) of the film, and whether a white spot was seen when observed from the incident direction was visually observed. The evaluation was performed according to the following criteria.
○: a white spot is not seen when observed obliquely.
Δ: a white spot is not seen when observed perpendicularly.
× : a white spot is seen when observed perpendicularly.

<Fabrication of stamper>

An electropolished $\phi$65 mm aluminum disk having a purity of 99.99% by mass and a thickness of 2 mm was used as an aluminum substrate. The aluminum substrate was immersed in a 0.3 M aqueous solution of oxalic acid adjusted to 15°C, and ON/OFF of the power supply of the direct current stabilization equipment was repeated. A current was allowed to intermittently flow to the aluminum substrate in this manner, thereby performing the anodic oxidation. An operation of applying a constant voltage of 80 V for 5 seconds at intervals of 30 seconds was repeated 60 times so as to form an oxide film having pores. Subsequently, the aluminum substrate having an oxide film formed thereon was immersed in an aqueous solution prepared by mixing 6% by mass of phosphoric acid and 1.8% by mass of chromic acid at 70°C for 6 hours so that the oxide film was dissolved and removed. The aluminum substrate from which the oxide film had been dissolved and removed was immersed in a 0.05 M aqueous solution of oxalic acid adjusted to 16°C to perform the anodic oxidation at 80 V for 7 seconds. Subsequently, the aluminum substrate was immersed in a 5% by mass aqueous solution of phosphoric acid adjusted to 32°C for 20 minutes to perform the pore size enlargement treatment by which the pores of the oxide film are expanded. The anodic oxidation treatment and the pore size enlargement treatment were alternately repeated in this manner and performed total five times for each. The stamper thus obtained was immersed in a 0.1% by mass aqueous solution of the TDP-8 (trade name, manufactured by Nikko Chemicals Co., Ltd.) for 10 minutes, then withdrawn therefrom, and dried overnight, thereby performing the mold release treatment.
The surface of the stamper thus obtained was observed with an electron microscope to find that a fine relief structure consisting of a substantially conical tapered concave portion having a distance between the adjacent concave portions of 180 nm and a depth of 180 nm was formed.

[Reference Example B1]

<Production of laminate>

As the polymerizable components, 40 parts by mass of ethylene oxide-modified dipentaerythritol hexaacrylate (trade name: KAYARAD DPEA-12 manufactured by Nippon Kayaku Co., Ltd., number of ethylene oxide structural unit in one molecule n = 12) and 60 parts by mass of Aronix M-260 (trade name, manufactured by TOAGOSEI CO., LTD., average repeating unit of ethylene glycol of 13) were used. In the polymerizable components, 1 part by mass of IRGACURE 184 (trade name, manufactured by Ciba Specialty Chemicals Inc.), 0.5 part by mass of IRGACURE 819 (trade name, manufactured by Ciba Specialty Chemicals Inc.), and 0.1 part by mass of TDP-2 (trade name, manufactured by Nikko Chemicals Co., Ltd.) were dissolved. In this manner, the active energy ray-curable resin composition was obtained. A few drops of the active energy ray-curable resin composition was dropped on the above stamper and the active energy ray-curable resin composition was coated on the film while spreading out with a triacetyl cellulose film (trade name: FTTD80ULM manufactured by FUJIFILM Corporation, hereinafter, also referred to as the film). Thereafter, the active energy ray-curable resin composition was photocured by irradiating with ultraviolet light at the energy of 1000 mJ/cm$^2$ from the film side. The stamper was peeled off from the cured product of the active energy ray-curable resin composition, thereby obtaining the laminate 10 having a fine relief structure with a distance between the adjacent convex portions of 180 nm and a height dl of the convex portion of 180 nm on the surface of the surface layer 12 illustrated in Fig. 1.

<Evaluation>

The evaluation on each of the contact angle of water, the elastic modulus, the antifouling property, and the projection coalescence was performed based on the various kinds of evaluation and the methods for measurement described above. The results are presented in Table 3.

[Reference Examples B2 to B6 and Comparative Examples B1 to B3]

The laminates were produced in the same manner as in Reference Example B1 except that the kinds and blended amounts of the polymerizable components and polymerization initiator used were changed to those presented in Table 3 in the preparation of the active energy ray-curable resin compositions. The results are presented in Table 3.

[Table 3] (not in accordnce with the invention)

[Table 3]

| | Active energy ray-curable resin composition (part by mass) | | | | | | | | Evaluation | | | |
| --- | --- | --- | --- | --- | --- | --- | --- | --- | --- | --- | --- | --- |
| | Polymerizable component | | | | | Polymerization initiator | | TDP-2 | Contact angle of water | Elastic modulus | Antifouling property | Projection coalescence |
| | DPHA | DPEA-12 | DPEA-18 | M-260 | APG700 | IRG. 184 | IRG. 819 | | (°) | (MPa) | | |
| Example 1 | | 40 | | 60 | | 1 | 0.5 | 0.1 | 10 | 149 | ○ | ○ |
| Example 2 | | 30 | | 70 | | 1 | 0.5 | 0.1 | 6.5 | 110 | ○ | ○ |
| Example 3 | | 20 | | 80 | | 1 | 0.5 | 0.1 | 5.7 | 74 | ○ | Δ |
| Example 4 | | 10 | | 90 | | 1 | 0.5 | 0.1 | 6.9 | 50 | ○ | Δ |
| Example 5 | | | 50 | 50 | | 1 | 0.5 | 0.1 | 4.8 | 112 | ○ | ○ |
| Example 6 | 10 | | | 90 | | 1 | 0.5 | 0.1 | 6.9 | 89 | ○ | Δ |
| Comparative Example 1 | | 70 | | 30 | | 1 | 0.5 | 0.1 | 5.9 | 518 | × | ○ |
| Comparative Example 2 | | 60 | | 40 | | 1 | 0.5 | 0.1 | 6.7 | 268 | × | ○ |
| Comparative Example 3 | | 30 | | | 70 | 1 | 0.5 | 0.1 | 47.7 | 116 | × | ○ |
| Examples 1 to 6 are Reference Examples. | | | | | | | | | | | | |

The abbreviations in Table 3 are as follows.

DPHA: dipentaerythritol hexaacrylate (trade name: KAYARAD DPHA manufactured by Nippon Kayaku Co., Ltd.),
DPEA-12: ethylene oxide-modified dipentaerythritol hexaacrylate (trade name: KAYARAD DPEA-12 manufactured by Nippon Kayaku Co., Ltd., number of ethylene oxide structural unit in one molecule n = 12),
DPEA-18: ethylene oxide-modified dipentaerythritol hexaacrylate (trade name: DPHA-18 manufactured by DAI-ICHI KOGYO SEIYAKU CO., LTD., number of ethylene oxide structural unit in one molecule n = 18),
M-260: polyethylene glycol diacrylate (manufactured by TOAGOSEI CO., LTD., average repeating unit of ethylene glycol of 13),
APG700: polypropylene glycol diacrylate (manufactured by SHIN-NAKAMURA CHEMICAL CO., LTD., average repeating unit of propylene glycol of 12),
IRG. 184: IRGACURE 184 (trade name, manufactured by Ciba Specialty Chemicals Inc., hydroxycyclohexyl phenyl ketone),
IRG. 819: IRGACURE 819 (trade name, manufactured by Ciba Specialty Chemicals Inc., phenylbis(2,4,6-trimethylbenzoyl)-phosphine oxide), and
TDP-2: TDP-2 (trade name, manufactured by Nikko Chemicals Co., Ltd., polyoxyethylene alkyl ether phosphoric acid)

Meanwhile, in Table 3, Reference Examples 1 to 6 and Comparative Examples 1 to 3 denote Reference Examples B1 to B6, and Comparative Examples B1 to B3, respectively.

In Reference Examples B1 to B6, the elastic modulus was less than 160 MPa and thus excellent antifouling property that it was possible to easily remove dirt without using water or an alcohol was exhibited. Particularly in Reference Examples B1, B2 and B5, the elastic modulus was in the range of from 90 to 150 MPa and thus the projection coalescence of the convex portions of the fine relief structure did not occur and excellent antifouling property was exhibited.

On the other hand, in Comparative Examples B1 and B2, the elastic modulus was 200 MPa or more and thus antifouling property was insufficient and it was not possible to easily remove dirt without using water or an alcohol. In addition, in Comparative Example B3, polypropylene glycol diacrylate was used instead of polyethylene glycol diacrylate and thus the mobility of the molecule was low, antifouling property was insufficient, and it was not possible to easily remove dirt without using water or an alcohol.

(Reference Example C) (not in accordance with the present invention)

Hereinafter, a reference embodiment will be described with reference to Reference Example C.

<Various kinds of evaluation and method for measurement>

(Determination of compatibility of curing liquid)

As the evaluation on the compatibility, the transparency of the active energy ray-curable resin composition (state before being cured) was visually observed under a fluorescent lamp.
○: transparent (favorable compatibility)
Δ: cloudy at room temperature but transparent when the active energy ray-curable resin composition is heated at 50 degrees.
×: cloudy at room temperature and 50 degrees (poor compatibility)

(Determination of contact angle of water)

The contact angle of the water droplet in 7 seconds after dropping 1 $\mu$l of water on the surface of the cured resins (resin cured by active energy ray) of the active energy ray-curable resin composition fabricated in Example C and Comparative Example C to be described below using an automatic contact angle measuring device (manufactured by KRUSS GmbH) was calculated by the $\theta/2$ method.

(Measurement of elastic modulus)

A load was applied to the irradiated surface of the surface layer using the "FISCHERSCOPE (R) HM2000" (trade name, manufactured by Fischer) while increasing the load under the condition of 50 mN/10 seconds, was held for 60 seconds at 50 mN, and was unloaded while decreasing the load under the condition of 50 mN/10 seconds. The elastic modulus was calculated by the extrapolation method using the points at which 65% and 95% of the loads were applied during the operation. Meanwhile, it is also possible that a resin which is cured by an active energy ray and has a thickness of 500 μm is fabricated by sandwiching the active energy ray-curable resin composition between two glasses using a Teflon sheet having a thickness of 500 μm as a spacer and irradiating with ultraviolet light at the energy of the integrated amount of photoirradiation of 3000 mJ/cm$^2$ to photocure the active energy ray-curable composition, and then the elastic modulus is calculated by performing the same measurement as the above for the irradiated surface of the cured resin.

(Antifouling property test)

The pseudo fingerprint was transferred onto the surface of the laminate by attaching a artificial fingerprint liquid (JIS K2246 manufactured by ISEKYU CO., LTD.) by the method (about 1 mL of the pseudo fingerprint component was taken while thoroughly stirring with a magnetic stirrer and coated on a polycarbonate substrate (diameter of 120 mm, thickness of 1.2 mm) by a spin coating method. This substrate was heated at 60°C for 3 minutes so as to completely remove methoxypropanol which is the undesirable diluent. This was adopted as the original plate for pseudo fingerprint transcription. Subsequently, the pseudo fingerprint transfer material was prepared by uniformly polishing the smaller end face of the NO. 1 silicone rubber plug (diameter of 12 mm) with #240 abrasive paper, and this polished end face was pressed against the above original plate at a load of 29 N for 10 seconds so as to shift the pseudo fingerprint component to the end face of the transfer material. Subsequently, the above end face of the transfer material was pressed against the surface of the translucent substrate of each of the above samples at a load of 29 N for 10 seconds so as to transfer the pseudo fingerprint component. Meanwhile, the fingerprint pattern was transferred to the position in the vicinity of a radius of 40 mm of the medium) described in JP 2006-147149 A. Next, the artificial fingerprint liquid was wiped off by rubbing backwards and forwards six times at a pressure of 98 KPa using the PROWIPE (trade name: Soft Super Wiper S132 manufactured by Daio Paper Corporation), and whether the dirt remained on the laminate was then visually observed under a fluorescent lamp. The evaluation was performed according to the following criteria.
⊙: dirt is not visually confirmed.
○: little dirt is visually confirmed.
× : pseudo fingerprint is spread and extended, and dirt is not wiped off.

(Evaluation on projection coalescence)

The LED light was incident from the end face side (side face side) of the film, and whether a white spot was seen when observed from the incident direction was visually observed. The evaluation was performed according to the following criteria.
○: a white spot is not seen when observed obliquely.
Δ: a white spot is seen when observed obliquely but a white spot is not seen when observed perpendicularly.
× : a white spot is seen when observed either obliquely or perpendicularly.

(Observation of sample surface by electron microscope)

The fine relief structures formed on the surfaces of the stamper and the laminate were observed using a scanning electron microscope ("JSM-7400F" manufactured by JEOL Ltd.) under the condition of an acceleration voltage of 3.00 kV. Meanwhile, with regard to the observation of the laminate, the observation was performed after depositing platinum for 10 minutes. The distance between the adjacent convex portions and the height of the convex portion were measured from the image thus obtained. Ten points were measured for each, and the average values thereof were calculated, respectively.

<Fabrication of stamper>

An electropolished aluminum disk (purity of 99.99% by mass, thickness of 2 mm, φ65 mm) was used as an aluminum substrate. The aluminum substrate was immersed in a 0.3 M aqueous solution of oxalic acid adjusted to 15°C, and a current was allowed to intermittently flow to the aluminum substrate by repeating ON/OFF of the power supply of the direct current stabilization equipment so as to anodize the aluminum substrate. Next, an operation of applying a constant voltage of 80 V for 5 seconds at intervals of 30 seconds was repeated 60 times so as to form an oxide film having pores. Subsequently, the aluminum substrate having an oxide film formed thereon was immersed in an aqueous solution prepared by mixing 6% by mass of phosphoric acid and 1.8% by mass of chromic acid at 70°C for 6 hours so that the oxide film was dissolved and removed. The aluminum substrate from which the oxide film had been dissolved and removed was immersed in a 0.05 M aqueous solution of oxalic acid adjusted to 16°C to perform the anodic oxidation at 80 V for 7 seconds. Subsequently, the aluminum substrate was immersed in a 5% by mass aqueous solution of phosphoric acid adjusted to 32°C for 20 minutes to perform the pore size enlargement treatment by which the pores of the oxide film are expanded. The anodic oxidation treatment and the pore size enlargement treatment were alternately repeated in this manner. Each of the anodic oxidation treatment and the pore size enlargement treatment was performed five times. The stamper thus obtained was immersed in a 0.1% by mass aqueous solution of the TDP-8 (manufactured by Nikko Chemicals Co., Ltd.) for 10 minutes, then withdrawn therefrom, and dried overnight, thereby performing the mold release treatment.

The surface of the porous alumina thus obtained was observed with an electron microscope to find that a fine relief structure consisting of a substantially conical tapered concave portion having a distance between the adjacent concave portions of 180 nm and a depth of 180 nm was formed.

[Reference Example C1]

<Production of laminate>

An active energy ray-curable resin composition was prepared by mixing the following materials.

- Ethylene oxide-modified dipentaerythritol hexaacrylate ("KAYARAD DPEA-12" manufactured by Nippon Kayaku Co., Ltd., number of ethylene oxide structural unit in one molecule n = 12): 27 parts by mass,
- Aronix M-260 (trade name, manufactured by TOAGOSEI CO., LTD., average repeating unit of polyethylene glycol chain of 13): 64 parts by mass,
- BYK-3570 (trade name, manufactured by BYK Japan KK, tetrafunctional silicone acrylate/propylene oxide-modified neopentyl glycol diacrylate = 7/3): 9 parts by mass,
- IRGACURE 184 (trade name, manufactured by Ciba Specialty Chemicals Inc.): 1 part by mass,
- IRGACURE 819 (trade name, manufactured by Ciba Specialty Chemicals Inc.): 0.5 part by mass and
- TDP-2 (trade name, manufactured by Nikko Chemicals Co., Ltd.): 0.1 part by mass

A few drops of the active energy ray-curable resin composition was dropped on the stamper and coated while spreading out with a triacetyl cellulose film (FTTD80ULM (trade name) manufactured by FUJIFILM Corporation). Subsequently, the active energy ray-curable resin composition was photocured by irradiating with ultraviolet light at the energy of the integrated amount of photoirradiation of 1000 mJ/cm$^2$ from the film side. Thereafter, the stamper was peeled off from the film, thereby obtaining a laminate having a fine relief structure with a distance w1 between the adjacent convex portions of 180 nm and a height d1 of the convex portion of 180 nm as illustrated in Fig. 1.

<Evaluation>

The evaluation on each of the compatibility of the components contained in the active energy ray-curable resin composition and the contact angle of water, the elastic modulus, the antifouling property, and the projection coalescence with regard to the laminate thus obtained was performed. The results are presented in Table 4.

[Table 4] (not in accordance with invention)

[Table 4]

| | Resin raw material (part) | | | | | | | Evaluation | | | | |
|---|---|---|---|---|---|---|---|---|---|---|---|---|
| | Monomer component | | | | Initiator | | Mold releasing agent | Compatibility | Contact angle | Elastic modulus | Antifouling property | Projection coalescence |
| | DPEA-12 | M-260 | APG-700 | BYK-3570 | IRG. 184 | IRG. 819 | TDP-2 | | (°) | (MPa) | | |
| Example 1 | 27 | 64 | 0 | 9 | 1 | 0.5 | 0.1 | Δ | 136.3 | 98 | ○ | ○ |
| Example 2 | 24 | 56 | 0 | 20 | 1 | 0.5 | 0.1 | Δ | 139.4 | 80 | ○ | ○ |
| Example 3 | 20 | 47 | 0 | 33 | 1 | 0.5 | 0.1 | Δ | 139.7 | 68 | ○ | ○ |
| Example 4 | 17 | 40 | 0 | 43 | 1 | 0.5 | 0.1 | Δ | 139.5 | 66 | ○ | ○ |
| Example 5 | 15 | 35 | 0 | 50 | 1 | 0.5 | 0.1 | ○ | 139.2 | 64 | ◉ | ○ |
| Example 6 | 12 | 28 | 0 | 60 | 1 | 0.5 | 0.1 | ○ | 139.7 | 55 | ◉ | ○ |
| Example 7 | 10 | 23 | 0 | 67 | 1 | 0.5 | 0.1 | ○ | 139.9 | 49 | ◉ | Δ |
| Example 8 | 27 | 32 | 32 | 9 | 1 | 0.5 | 0,1 | ○ | 132.5 | 100 | ○ | ○ |
| Comparative Example 1 | 29 | 70 | 0 | 1 | 1 | 0.5 | 0.1 | Δ | 97.1 | 106 | × | ○ |
| Examples 1 to 8 are Reference Examples. | | | | | | | | | | | | |

The abbreviations in Table 4 are as follows.

DPEA-12: ethylene oxide-modified dipentaerythritol hexaacrylate ("KAYARAD DPEA-12" manufactured by Nippon Kayaku Co., Ltd., number of ethylene oxide structural unit in one molecule n = 12),
M-260: polyethylene glycol diacrylate ("Aronix M-260" manufactured by TOAGOSEI CO., LTD., average repeating unit of polyethylene glycol chain of 13),
APG-700: polypropylene glycol diacrylate (manufactured by SHIN-NAKAMURA CHEMICAL CO., LTD., average repeating unit of polypropylene glycol chain of 12),
BYK-3570: silicone acrylate propylene oxide-modified neopentyl glycol diacrylate diluted product (manufactured by BYK Japan KK),
IRG. 184: hydroxycyclohexyl phenyl ketone ("IRGACURE 184" manufactured by Ciba Specialty Chemicals Inc.),
IRG. 819: phenyl bis(2,4,6-trimethylbenzoyl)-phosphine oxide ("IRGACURE 819" manufactured by Ciba Specialty Chemicals Inc.), and
TDP-2: polyoxyethylene alkyl ether phosphoric acid (trade name, manufactured by Nikko Chemicals Co., Ltd.)

Meanwhile, in Table 4, Reference Examples 1 to 8 and Comparative Example 1 denote Reference Examples C1 to C8 and Comparative Example C1, respectively.

[Reference Examples C2 to C8]

The laminates were obtained in the same manner as in Reference Example C1 except that the constitutions were changed to those presented in Table 4, The results are presented in Table 4.

[Comparative Example C1]

The laminate was obtained in the same manner as in Reference Example C1 except that the constitution was changed to that presented in Table 4. The results are presented in Table 4.
In the laminates obtained in Reference Examples C1 to C8, the contact angle of water on the surface layer was 130° or more and antifouling property that it was possible to easily remove dirt without using water or an alcohol was exhibited. In the laminates obtained in Reference Examples C5 to C7, significantly favorable antifouling property was exhibited since silicone acrylate contained was 45 parts by mass or more. Furthermore, in the laminates obtained in Reference Example C5 and C6, the compatibility of the active energy ray-curable resin composition was favorable, the projection coalescence was suppressed, and significantly favorable antifouling property was exhibited since silicone acrylate contained was from 45 to 65 parts by mass.
Sufficient antifouling property was not exhibited in the laminate obtained in Comparative Example C1.

(Reference Example D) (not in accordance with the present invention)

Hereinafter, a reference embodiment will be described with reference to Reference Example D.

<Various kinds of evaluation and method for measurement>

(Determination of contact angle of water)

The contact angle of the water droplet in 7 seconds after dropping 1 μl of water on the surface of the laminate fabricated in Reference Example D and Comparative Example D to be described below using an automatic contact angle measuring device (manufactured by KRUSS GmbH) was calculated by the θ/2 method.

(Measurement of elastic modulus)

The active energy ray-curable composition was sandwiched between two glasses using a sheet which was coated with Teflon (registered trademark) and had a thickness of 500 μm as a spacer and irradiated with ultraviolet light at the energy of 3000 mJ/cm$^2$ so as to photocure the active energy ray-curable resin composition, thereby fabricating a resin which was cured by an active energy ray and had a thickness of 500 μm. The surface treatment layer was then coated on the irradiated surface side to obtain a laminate. A load was applied to the surface of the surface treatment layer of the laminate thus fabricated using the "FISCHERSCOPE (R) HM2000" (manufactured by Fischer) while increasing the load under the condition of 50 mN/10 seconds, was held for 60 seconds at 50 mN, and was unloaded while decreasing the load under the condition of 50 mN/10 seconds. The elastic modulus (indentation elastic modulus) of the cured resin was calculated by the extrapolation method using the points at which 65% and 95% of the loads were applied during the operation. Meanwhile, it is also possible that a resin which is cured by an active energy ray and has a thickness of 500 $\mu$m is fabricated by sandwiching the active energy ray-curable composition between two glasses using a sheet which is coated with Teflon (registered trademark) and has a thickness of 500 $\mu$m as a spacer and irradiating with ultraviolet light at the energy of the integrated amount of photo irradiation of 3000 mJ/cm$^2$ to photocure the active energy ray-curable resin composition, and then the elastic modulus is calculated by performing the same measurement as the above for the irradiated surface of the cured resin.

(Antifouling property test)

The pseudo fingerprint was transferred onto the surface of the laminate by attaching an artificial fingerprint liquid (JIS K2246 manufactured by ISEKYU CO., LTD.) by the method (In this method, about 1 mL of the pseudo fingerprint component was taken while thoroughly stirring with a magnetic stirrer, and coated on a polycarbonate substrate (diameter of 120 mm, thickness of 1.2 mm) by a spin coating method. This substrate was heated at 60°C for 3 minutes so as to completely remove methoxypropanol which is the undesirable diluent. This was adopted as the original plate for pseudo fingerprint transcription. Subsequently, the pseudo fingerprint transfer material was prepared by uniformly polishing the smaller end face of the NO. 1 silicone rubber plug (diameter of 12 mm) with #240 abrasive paper, and this polished end face was pressed against the above original plate at a load of 29 N for 10 seconds so as to shift the pseudo fingerprint component to the end face of the transfer material. Subsequently, the above end face of the transfer material was pressed against the surface of the translucent substrate of each of the above samples at a load of 29 N for 10 seconds so as to transfer the pseudo fingerprint component. Meanwhile, the fingerprint pattern was transferred to the position in the vicinity of a radius of 40 mm of the medium.) described in JP 2006-147149 A. Next, the artificial fingerprint liquid was wiped off by rubbing backwards and forwards six times at a pressure of 98 KPa using the PROWIPE (trade name: Soft Super Wiper S132 manufactured by Daio Paper Corporation), and whether the dirt remained on the laminate was then visually observed under a fluorescent lamp. The evaluation was performed according to the following criteria.

⊙: dirt is not visually confirmed.

○: little dirt is visually confirmed.

✕ : pseudo fingerprint is spread and extended, and dirt is not wiped off.

(Observation of surface of laminate by electron microscope)

The fine relief structures formed on the surfaces of the stamper and the laminate were observed using a scanning electron microscope ("JSM-7400F" manufactured by JEOL Ltd.) under the condition of an acceleration voltage of 3.00 kV. Meanwhile, with regard to the observation of the laminate, the observation was performed after depositing platinum for 10 minutes. The distance between the adjacent convex portions and the height of the convex portion were measured from the image thus obtained. Ten points were measured for each, and the average values thereof were calculated, respectively.

<Fabrication of stamper>

An electropolished aluminum disk (a purity of 99.99% by mass, a thickness of 2 mm, $\phi$65 mm) was used as an aluminum substrate. The aluminum substrate was immersed in a 0.3 M aqueous solution of oxalic acid adjusted to 15°C, and a current was allowed to intermittently flow to the aluminum substrate by repeating ON/OFF of the power supply of the direct current stabilization equipment so as to anodize the aluminum substrate. Next, an operation of applying a constant voltage of 80 V for 5 seconds at intervals of 30 seconds was repeated 60 times so as to form an oxide film having pores. Subsequently, the aluminum substrate having an oxide film formed thereon was immersed in an aqueous solution prepared by mixing 6% by mass of phosphoric acid and 1.8% by mass of chromic acid at 70°C for 6 hours so that the oxide film was dissolved and removed. The aluminum substrate from which the oxide film had been dissolved and removed was immersed in a 0.05 M aqueous solution of oxalic acid adjusted to 16°C to perform the anodic oxidation at 80 V for 7 seconds. Subsequently, the aluminum substrate was immersed in a 5% by mass aqueous solution of phosphoric acid adjusted to 32°C for 20 minutes to perform the pore size enlargement treatment by which the pores of the oxide film are expanded. The anodic oxidation treatment and the pore size enlargement treatment were alternately repeated in this manner. Each of the anodic oxidation treatment and the pore size enlargement treatment was performed five times. The stamper thus obtained was immersed in a 0.1% by mass aqueous solution of the TDP-8 (manufactured by Nikko Chemicals Co., Ltd.) for 10 minutes, then withdrawn therefrom, and dried overnight, thereby performing the mold release treatment.

The surface of the porous alumina thus obtained was observed with an electron microscope to find that a fine relief structure consisting of a substantially conical tapered concave portion having a distance between the adjacent concave portions of 180 nm and a depth of 180 nm was formed.

[Reference Example D1]

<Production of laminate>

An active energy ray-curable resin composition was prepared by mixing the following materials.

- Ethylene oxide-modified dipentaerythritol hexaacrylate ("KAYARAD DPEA-12" manufactured by Nippon Kayaku Co., Ltd., number of ethylene oxide structural unit in one molecule n = 12): 30 parts by mass,
- Aronix M-260 (trade name, manufactured by TOAGOSEI CO., LTD., average repeating unit of polyethylene glycol chain of 13): 70 parts by mass,
- IRGACURE 184 (trade name, manufactured by Ciba Specialty Chemicals Inc.): 1 part by mass,
- IRGACURE 819 (trade name, manufactured by Ciba Specialty Chemicals Inc.): 0.5 part and
- TDP-2 (trade name, manufactured by Nikko Chemicals Co., Ltd.): 0.1 part by mass

A few drops of the active energy ray-curable resin composition was dropped on the stamper and coated while spreading out with a triacetyl cellulose film (FTTD80ULM (trade name) manufactured by FUJIFILM Corporation). Subsequently, the active energy ray-curable resin composition was photocured by irradiating with ultraviolet light at the energy of 1000 mJ/cm$^2$ from the film side. Thereafter, the stamper was peeled off from the film, and the surface of the fine relief structure on the surface layer having a fine relief structure thus obtained was brush coated with the PC-3B (manufactured by Fluoro Technology) as a primer using the BEMCOT M-3II (manufactured by Asahi Kasei Fibers Corporation), dried at room temperature for 90 minutes, and the FG5070S135-0.1 (trade name, manufactured by Fluoro Technology) was then brush coated using the BEMCOT and dried at 60°C for 3 hours. Subsequently, the active energy ray-curable resin composition was photocured by irradiating with ultraviolet light at the energy of the integrated amount of photoirradiation of 1000 mJ/cm$^2$ from the film side, thereby forming the surface treatment layer. Thereafter, stamper was peeled off from the film, thereby obtaining a laminate having a fine relief structure with a distance w1 between the adjacent convex portions of 180 nm and a height dl of the convex portion of 180 nm as illustrated in Fig. 3.

<Evaluation>

The evaluation on each of the contact angle of water, the elastic modulus, and the antifouling property was performed with regard to the laminates thus obtained. The results are presented in Table 5.

[Table 5] (not in accordance with the present invention)

[Table 5]

| | Active energy ray-curable resin composition (part by mass) | | | | | | | | | | Primer | Surface treatment layer | Evaluation result | | |
| --- | --- | --- | --- | --- | --- | --- | --- | --- | --- | --- | --- | --- | --- | --- | --- |
| | Polymerizable component | | | | | | Initiator | | Mold releasing agent | | | | Contact angle of water | Elastic modulus | Antifouling property |
| | Hexafunctional | Tetrafunctional | | Bifunctional | | | | | | | | | | | |
| | DPEA-12 | BYK-3570 | TAS | M-260 | X-22-1602 | C6DA | IRG. 184 | IRG. 819 | TDP-2 | | | (°) | (MPa) | |
| Example 1 | 30 | | | 70 | | | 1 | 0.5 | 0.1 | PC-3B | FG5070S135 | 122 | 110 | ○ |
| Example 2 | 15 | 50 | | 35 | | | 1 | 0.5 | 0.1 | PC-3B | FG5070S135 | 139 | 64 | ⊙ |
| Comparative Example 1 | 30 | | | 70 | | | 1 | 0.5 | 0.1 | Absence | Absence | 6.5 | 110 | × |
| Comparative Example 2 | | | 45 | | 10 | 45 | 1 | 0.5 | 0.1 | PC-3B | FG5070S135 | 140 | 2200 | × |

Examples 1 and 2 are Reference Examples.

45

The abbreviations in Table 5 are as follows.

DPEA-12: ethylene oxide-modified dipentaerythritol hexaacrylate ("KAYARAD DPEA-12" manufactured by Nippon Kayaku Co., Ltd., number of ethylene oxide structural unit in one molecule n = 12),
BYK-3570: silicone acrylate propylene oxide-modified neopentyl glycol diacrylate diluted product (manufactured by BYK Japan KK),
TAS: mixture obtained by condensation reaction of trimethylolethane/acrylic acid/ anhydrous succinic acid at 2/4/1 (manufactured by OSAKA ORGANIC CHEMICAL INDUSTRY LTD.),
M-260: polyethylene glycol diacrylate ("Aronix M-260" manufactured by TOAGOSEI CO., LTD., average repeating unit of polyethylene glycol chain of 13),
X-22-1602: silicone acrylate (manufactured by Shin-Etsu Chemical Co., Ltd.),
C6DA: 1,6-hexanediol diacrylate (manufactured by OSAKA ORGANIC CHEMICAL INDUSTRY LTD.),
IRG. 184: hydroxycyclohexyl phenyl ketone ("IRGACURE 184" manufactured by Ciba Specialty Chemicals Inc.),
IRG. 819: phenyl bis(2,4,6-trimethylbenzoyl)-phosphine oxide ("IRGACURE 819" manufactured by Ciba Specialty Chemicals Inc.),
TDP-2: polyoxyethylene alkyl ether phosphoric acid (trade name, manufactured by Nikko Chemicals Co., Ltd.),
PC-3B: primer (trade name, manufactured by Fluoro Technology), and
FG5070S135: fluorine coating agent (trade name, manufactured by Fluoro Technology)

Meanwhile, in Table 5, Reference Examples 1 and 2 and Comparative Examples 1 and 2 denote Reference Examples D1 and D2 and Comparative Examples D1 and D2, respectively.

[Reference Example D2]

The laminate was obtained in the same manner as in Reference Example D1 except that the constitution was changed to that presented in Table 5. The results are presented in Table 5.

[Comparative Examples D1 and D2]

The laminates were obtained in the same manner as in Reference Example D1 except that the constitutions were changed to those presented in Table 5. The results are presented in Table 5.
In the laminates obtained in Reference Examples D1 and D2, the contact angle of water on the surface layer was 120° or more and thus antifouling property that it was possible to easily remove dirt without using water or an alcohol was exhibited. In the laminate obtained in Reference Example D2, significantly favorable antifouling property was exhibited since the elastic modulus was 100 MPa or less and the contact angle of water was 130° or more.
Sufficient antifouling property was not exhibited in the laminates obtained in Comparative Examples D1 and D2.

(Reference Example E) (not in accordance with the present invention)

Hereinafter, a reference embodiment will be described with reference to Reference Example E.

<Various kinds of evaluation and method for measurement>

(Determination of contact angle of water)

The contact angle of the water droplet in 7 seconds after dropping 1 $\mu$l of water on the surface of the cured resins (resin cured by active energy ray) of the active energy ray-curable composition fabricated in Reference Example E and Comparative Example E to be described below using an automatic contact angle measuring device (manufactured by KRUSS GmbH) was calculated by the $\theta/2$ method.

(Measurement of indentation elastic modulus)

A load was applied to the irradiated surface of the surface layer of the laminate using the "FISCHERSCOPE (R) HM2000" (trade name, manufactured by Fischer) while increasing the load under the condition of 100 mN/10 seconds, was held for 60 seconds at 100 mN, and was unloaded while decreasing the load under the condition of 100 mN/10 seconds. The elastic modulus was calculated by the extrapolation method using the points at which 65% and 95% of the loads were applied during the operation. Meanwhile, it is also possible that a resin which is cured by an active energy ray and has a thickness of 500 $\mu$m is fabricated by sandwiching the active energy ray-curable composition between two glasses using a Teflon sheet having a thickness of 500 $\mu$m as a spacer and irradiating with ultraviolet light at the energy of the integrated amount of photoirradiation of 3000 mJ/cm$^2$ to photocure the active energy ray-curable composition, and then the elastic modulus is calculated by performing the same measurement as the above for the irradiated surface of the cured resin.

(Antifouling property test)

The antifouling property test was performed according to the method described in JP 2006-147149 A. First, about 1 mL of the pseudo fingerprint component was taken while thoroughly stirring with a magnetic stirrer and coated on a polycarbonate substrate (diameter of 120 mm, thickness of 1.2 mm) by a spin coating method. This substrate was heated at 60°C for 3 minutes so as to completely remove methoxypropanol which is the undesirable diluent. The resultant was adopted as the original plate for pseudo fingerprint transcription.

Subsequently, the pseudo fingerprint transfer material was prepared by uniformly polishing the smaller end face of the NO. 1 silicone rubber plug (diameter of 12 mm) with #240 abrasive paper, and this polished end face was pressed against the above original plate at a load of 29 N for 10 seconds so as to shift the pseudo fingerprint component to the end face of the transfer material. Subsequently, the above end face of the transfer material was pressed against the surface of the laminate of each of the above samples at a load of 29 N for 10 seconds so as to transfer the pseudo fingerprint component. Meanwhile, the fingerprint pattern was transferred to the position in the vicinity of a radius of 40 mm of the medium.

Next, the pseudo fingerprint component was wiped off by rubbing backwards and forwards six times at a pressure of 98 KPa using the PROWIPE (trade name: Soft Super Wiper S132 manufactured by Daio Paper Corporation), and whether the dirt remained on the laminate was then visually observed under a fluorescent lamp. The evaluation was performed according to the following criteria.

⊙ dirt is not visually confirmed.

○ little dirt is visually confirmed.

× : pseudo fingerprint is spread and extended, and dirt is not wiped off.

(Evaluation on projection coalescence)

The LED light was incident from the end face side (side face side) of the film, and whether a white spot was seen when observed from the incident direction was visually observed. The evaluation was performed according to the following criteria.

○: a white spot is not seen when observed obliquely.

Δ: a white spot is seen when observed obliquely but a white spot is not seen when observed perpendicularly.

× : a white spot is seen when observed either obliquely or perpendicularly.

(Observation of sample surface by electron microscope)

The fine relief structures formed on the surfaces of the stamper and the laminate were observed using a scanning electron microscope ("JSM-7400F" manufactured by JEOL Ltd.) under the condition of an acceleration voltage of 3.00 kV. Meanwhile, with regard to the observation of the laminate, the observation was performed after depositing platinum for 10 minutes. The distance between the adjacent convex portions and the height of the convex portion were measured from the image thus obtained. Ten points were measured for each, and the average values thereof were calculated, respectively.

<Fabrication of stamper>

An electropolished aluminum disk (purity of 99.99% by mass, thickness of 2 mm, $\phi$65 mm) was used as an aluminum substrate. The aluminum substrate was immersed in a 0.3 M aqueous solution of oxalic acid adjusted to 15°C, and a current was allowed to intermittently flow to the aluminum substrate by repeating ON/OFF of the power supply of the direct current stabilization equipment so as to anodize the aluminum substrate. Next, an operation of applying a constant voltage of 80 V for 5 seconds at intervals of 30 seconds was repeated 60 times so as to form an oxide film having pores. Subsequently, the aluminum substrate having an oxide film formed thereon was immersed in an aqueous solution prepared by mixing 6% by mass of phosphoric acid and 1.8% by mass of chromic acid at 70°C for 6 hours so that the oxide film was dissolved and removed. The aluminum substrate from which the oxide film had been dissolved and removed was immersed in a 0.05 M aqueous solution of oxalic acid adjusted to 16°C to perform the anodic oxidation at 80 V for 5 seconds. Subsequently, the aluminum substrate was immersed in a 5% by mass aqueous solution of phosphoric acid adjusted to 32°C for 20 minutes to perform the pore size enlargement treatment by which the pores of the oxide film are expanded. The anodic oxidation treatment and the pore size enlargement treatment were alternately repeated in this manner. Each of the anodic oxidation treatment and the pore size enlargement treatment was performed five times. The stamper thus obtained was immersed in a 0.1% by mass aqueous solution of the TDP-8 (manufactured by Nikko Chemicals Co., Ltd.) for 10 minutes, then withdrawn therefrom, and dried overnight, thereby performing the mold release treatment.

The surface of the porous alumina thus obtained was observed with an electron microscope to find that a fine relief structure consisting of a substantially conical tapered concave portion having a distance between the adjacent concave portions of 180 nm and a depth of 150 nm was formed.

[Reference Example E1]

<Production of laminate>

An active energy ray-curable composition was prepared by mixing the following materials.

- Ethylene oxide-modified dipentaerythritol hexaacrylate ("KAYARAD DPEA-12" manufactured by Nippon Kayaku Co., Ltd., number of ethylene oxide structural unit in one molecule n = 12): 22 parts by mass,
- Aronix M-260 (trade name, manufactured by TOAGOSEI CO., LTD., average repeating unit of polyethylene glycol chain of 13): 32 parts by mass,
- APG-700 (trade name, manufactured by SHIN-NAKAMURA CHEMICAL CO., LTD., average repeating unit of polypropylene glycol chain of 12): 32 parts by mass,
- BYK-3570 (trade name, manufactured by BYK Japan KK, silicone acrylate propylene oxide-modified neopentyl glycol diacrylate diluted product): 9 pats by mass,
- Karenz MT PE1 (trade name, manufactured by SHOWADENKO K. K., compound having four SH groups): 5 parts by mass,
- IRGACURE 184 (trade name, manufactured by Ciba Specialty Chemicals Inc.): 1 part by mass,
- IRGACURE 819 (trade name, manufactured by Ciba Specialty Chemicals Inc.): 0.5 part by mass and
- TDP-2 (trade name, manufactured by Nikko Chemicals Co., Ltd.): 0.1 part by mass

A few drops of the active energy ray-curable composition was dropped on the stamper and coated while spreading out with a triacetyl cellulose film (FTTD80ULM (trade name) manufactured by FUJIFILM Corporation). Subsequently, the active energy ray-curable composition was photocured by irradiating with ultraviolet light at the energy of the integrated amount of photoirradiation of 1000 mJ/cm$^2$ from the film side. A laminate was obtained which had a fine relief structure with a distance w1 between the adjacent convex portions of 180 nm and a height dl of the convex portion of 150 nm as illustrated in Fig. 1.

<Evaluation>

The evaluation on each of the contact angle of water, the elastic modulus, the antifouling property, and the projection coalescence was performed with regard to the laminate thus obtained. The elastic modulus of the laminate thus obtained was sufficiently low of 60 MPa and the contact angle of water is 130° or more, and thus dirt can be sufficiently wiped off with dry wiping, the projection coalescence did not occur, and excellent antifouling property was exhibited. The results are presented in Table 7.

[Table 6] (not in accordance with the present invention)

[Table 6]

| | Active energy ray-curable resin composition (part by mass) | | | | | | | | | | | | | | |
| | Polyfunctional (meth)acrylate | | | | | | Silicone (meth) acrylate | | Compound having SH group | | | | In itiator | | Mold releasing agent |
| | DPHA | DPEA-12 | DPHA-30EO | M-260 | APG-700 | C6DA | BYK-3570 | X-22-1602 | PE1 | NR1 | BD1 | nOM | IRG184 | IRG819 | TDP-2 |
| Example 1 | 0 | 22 | 0 | 32 | 32 | 0 | 9 | 0 | 5 | 0 | 0 | 0 | 1 | 0.5 | 0.1 |
| Example 2 | 0 | 17 | 0 | 32 | 32 | 0 | 9 | 0 | 10 | 0 | 0 | 0 | 1 | 0.5 | 0.1 |
| Example 3 | 0 | 13 | 0 | 36 | 36 | 0 | 10 | 0 | 5 | 0 | 0 | 0 | 1 | 0.5 | 0.1 |
| Example 4 | 0 | 8 | 0 | 36 | 36 | 0 | 10 | 0 | 10 | 0 | 0 | 0 | 1 | 0.5 | 0.1 |
| Example 5 | 0 | 22 | 0 | 32 | 32 | 0 | 9 | 0 | 0 | 5 | 0 | 0 | 1 | 0.5 | 0.1 |
| Example 6 | 0 | 22 | 0 | 32 | 32 | 0 | 9 | 0 | 0 | 0 | 5 | 0 | 1 | 0.5 | 0.1 |
| Example 7 | 0 | 22 | 0 | 32 | 32 | 0 | 9 | 0 | 0 | 0 | 0 | 5 | 1 | 0.5 | 0.1 |
| Example 8 | 0 | 22 | 0 | 32 | 32 | 0 | 0 | 9 | 5 | 0 | 0 | 0 | 1 | 0.5 | 0.1 |
| Example 9 | 4 | 0 | 82 | 0 | 0 | 0 | 9 | 0 | 5 | 0 | 0 | 0 | 1 | 0.5 | 0.1 |
| Example 10 | 0 | 0 | 0 | 77 | 0 | 9 | 9 | 0 | 5 | 0 | 0 | 0 | 1 | 0.5 | 0.1 |
| Example 11 | 20 | 0 | 0 | 0 | 0 | 0 | 75 | 0 | 5 | 0 | 0 | 0 | 1 | 0.5 | 0.1 |
| Example 12 | 0 | 50 | 0 | 0 | 0 | 0 | 0 | 0 | 50 | 0 | 0 | 0 | 1 | 0.5 | 0.1 |
| Example 13 | 0 | 70 | 0 | 0 | 0 | 0 | 0 | 0 | 30 | 0 | 0 | 0 | 1 | 0.5 | 0.1 |
| Comparative Example 1 | | 70 | | 30 | | | | | | | | | 1 | 0.5 | 0.1 |
| Examples 1 to 13 are Reference Examples. | | | | | | | | | | | | | | | |

[Table 7] (not in accordance with the present invention)

[Table 7]

| | | Evaluation | | | |
|---|---|---|---|---|---|
| | | Contact angle of water | Elastic modulus | Antifouling property | Projection coalescence |
| | | (°) | (MPa) | | |
| Example 1 | | 137 | 60 | ⊙ | ○ |
| Example 2 | | 136 | 38 | ⊙ | Δ |
| Example 3 | | 136 | 45 | ⊙ | Δ |
| Example 4 | | 136 | 33 | ⊙ | Δ |
| Example 5 | | 134 | 80 | ⊙ | ○ |
| Example 6 | | 134 | 79 | ○ | ○ |
| Example 7 | | 132 | 103 | ○ | ○ |
| Example 8 | | 133 | 95 | ○ | ○ |
| Example 9 | | 137 | 118 | ○ | ○ |
| Example 10 | | 139 | 61 | ⊙ | ○ |
| Example 11 | | 137 | 444 | ○ | ○ |
| Example 12 | | 17 | 32 | ⊙ | Δ |
| Example 13 | | 12 | 119 | ○ | ○ |
| Comparative Example 1 | | 6 | 518 | × | ○ |
| Examples 1 to 13 are Reference Examples. | | | | | |

The abbreviations in Table 6 are as follows.

DPHA: dipentaerythritol hexaacrylate (manufactured by DAI-ICHI KOGYO SEIYAKU CO., LTD.),
DPEA-12: ethylene oxide-modified dipentaerythritol hexaacrylate ("KAYARAD DPEA-12" manufactured by Nippon Kayaku Co., Ltd., number of ethylene oxide structural unit in one molecule n = 12),
DPHA-30EO: ethylene oxide-modified dipentaerythritol hexaacrylate (manufactured by DAI-ICHI KOGYO SEIYAKU CO., LTD., number of ethylene oxide structural unit in one molecule n = 30),
M-260: polyethylene glycol diacrylate ("Aronix M-260" manufactured by TOAGOSEI CO., LTD., average repeating unit of polyethylene glycol chain of 13),
APG-700: (trade name, manufactured by SHIN-NAKAMURA CHEMICAL CO., LTD., average repeating unit of polypropylene glycol chain of 12),
C6DA: 1,6-hexanediol diacrylate (manufactured by OSAKA ORGANIC CHEMICAL INDUSTRY LTD.)
BYK-3570: silicone acrylate propylene oxide-modified neopentyl glycol diacrylate diluted product (manufactured by BYK Japan KK),
X-22-1602: silicone acrylate (manufactured by Shin-Etsu Chemical Co., Ltd.),
PE1: Karenz MT PE1 (trade name, manufactured by SHOWA DENKO K. K., compound having four SH groups),
NR1: Karenz MT NR1 (trade name, manufactured by SHOWA DENKO K. K., compound having three SH groups),
BD1: Karenz MT BD1 (trade name, manufactured by SHOWA DENKO K. K., compound having two SH groups)
nOM: n-octyl mercaptan (manufactured by ElfAtochem Japan, compound having one SH group),
IRG. 184: hydroxycyclohexyl phenyl ketone ("IRGACURE 184" manufactured by Ciba Specialty Chemicals Inc.),
IRG. 819: phenylbis(2,4,6-trimethylbenzoyl)phosphine oxide ("IRGACURE 819" manufactured by Ciba Specialty Chemicals Inc.), and
TDP-2: polyoxyethylene alkyl ether phosphoric acid (trade name, manufactured by Nikko Chemicals Co., Ltd.)

Meanwhile, in Tables 6 and 7, Reference Examples 1 to 13 and Comparative Example 1 denote Reference Examples E1 to E13 and Comparative Examples E1, respectively.

[Reference Examples E2 to E13 and Comparative Example E1]

The laminates were obtained in the same manner as in Reference Example E1 except that the constitutions were changed to those presented in Table 6. The results are presented in Table 7.
In the laminates obtained in Reference Examples E2 to E13, antifouling property that it was possible to easily remove dirt without using water or an alcohol was exhibited.
Reference Examples E2 to E10 exhibited favorable antifouling property since the indentation elastic modulus was less than 160 MPa and the contact angle of water was 130° or more. Among them, Reference Examples E1 to E6, E8 and E10 exhibited particularly favorable antifouling property since the indentation elastic modulus was 100 MPa or less. Reference Examples E12 and E13 exhibited favorable antifouling property although the contact angle of water was 130° or less since the addition amount of the compound having a SH group was great.

INDUSTRIAL APPLICABILITY

It is possible to utilize the laminate of the present embodiment in various kinds of displays such as television, a cellular phone, and a portable game console, a touch panel, a showcase, an outer packaging cover and the like since dirt can be easily removed therefrom while maintaining excellent optical performance, and thus the laminate is significantly useful from an industrial point of view.

EXPLANATIONS OF LETTERS OR NUMERALS

10: laminate
11: substrate
12: surface layer
13: convex portion
14: concave portion

**Claims**

1. A laminate comprising a surface layer having a surface formed in a fine relief structure,
   wherein the surface layer includes a layer composed of a cured product of an active energy ray-curable resin composition,
   wherein the active energy ray-curable resin composition contains a tri- or higher functional (meth)acrylate (A) and a bifunctional (meth)acrylate (B),
   wherein a content of the tri- or higher functional (meth)acrylate (A) is from 5 to 40 parts by mass and a content of the bifunctional (meth)acrylate (B) is from 20 to 80 parts by mass (provided that a total of polymerizable components in the active energy ray-curable resin composition is 100 parts by mass),
   wherein an elastic modulus of the surface layer is less than 160 MPa and
   a slope of a friction coefficient of the surface layer is $1.8 \times 10^{-3}$ or less, wherein the slope of the friction coefficient $\mu_s$ is calculated by the following Equation:

$$\mu_s = (\mu_{50} - \mu_1)/(50 - 1)$$

   wherein $\mu_1$ is a value of the dynamic friction coefficient at the first friction and $\mu_{50}$ is a value of the dynamic friction coefficient at the fiftieth friction, and wherein the dynamic friction coefficient of the laminate is measured by using a friction tester under the following conditions: a load of 1000 g is applied to the BEMCOT® M-3II having an area of 2 cm$^2$ which is placed on the surface of the laminate and the reciprocating friction is performed 50 times at a reciprocating distance of 30 mm and a head speed of 30 mm/sec.

2. The laminate according to claim 1, wherein the slope of the friction coefficient of the surface layer is $-2.0 \times 10^{-3}$ or more, and wherein preferably the slope of the friction coefficient of the surface layer is $-1.8 \times 10^{-3}$ or more and 1.0

$\times 10^{-3}$ or less.

3. The laminate according to claim 1 or 2, wherein the elastic modulus of the surface layer is less than 100 MPa.

4. The laminate according to any one of claims 1 to 3, wherein a contact angle of water on the surface layer is 25° or less or 130° or more.

5. The laminate according to any one of claims 1 to 4, wherein a content of the component (A) is from 10 to 30 parts by mass and a content of the component (B) is from 30 to 70 parts by mass.

6. The laminate according to any one of claims 1 to 5, wherein the active energy ray-curable resin composition further contains a silicone (meth)acrylate (C) at from 3 to 85 parts by mass (provided that a total of polymerizable components in the active energy ray-curable resin composition is 100 parts by mass and each (A) and (B) excludes (C)).

7. The laminate according to claim 5, wherein the active energy ray-curable resin composition further contains a silicone (meth)acrylate (C) at from 7 to 70 parts by mass (provided that a total of polymerizable components in the active energy ray-curable resin composition is 100 parts by mass and each (A) and (B) excludes (C)).

8. The laminate according to any one of claims 1 to 5, wherein the active energy ray-curable resin composition contains a compound (D) having a SH group.

9. The laminate according to claim 8, wherein the active energy ray-curable resin composition contains a bi- or higher functional (meth)acrylate (E) at from 0 to 95 parts by mass, a silicone (meth)acrylate (C) at from 0 to 75 parts by mass, and the compound (D) having a SH group at from 1 to 60 parts by mass (provided that a total of polymerizable components is 100 parts by mass).

10. The laminate according to any one of claims 1 to 9, wherein (i) the surface layer is constituted by a layer composed of a cured product of the active energy ray-curable resin composition or (ii) the surface layer is constituted by a layer composed of a cured product of the active energy ray-curable resin composition and a surface treatment layer formed on the layer composed of a cured product of the active energy ray-curable resin composition as an outermost surface layer.

11. The laminate according to any one of claims 1 to 9, wherein a pitch of the fine relief structure is 100 nm or more and 250 nm or less.

12. An antireflection article comprising the laminate according to any one of claims 1 to 11.

13. An image display device comprising the laminate according to any one of claims 1 to 11.

14. A touch panel comprising the laminate according to any one of claims 1 to 11.


**Patentansprüche**

1. Laminat, umfassend eine Oberflächenschicht mit einer Oberfläche, die als feine Reliefstruktur ausgebildet ist, wobei die Oberflächenschicht eine Schicht einschließt, die aus einem gehärteten Produkt einer durch aktive Energiestrahlen härtbaren Harzzusammensetzung zusammengesetzt ist, wobei die durch aktive Energiestrahlen härtbare Harzzusammensetzung ein tri- oder höherfunktionelles (Meth)acrylat (A) und ein bifunktionelles (Meth)acrylat (B) enthält, wobei ein Gehalt des tri- oder höherfunktionellen (Meth)acrylats (A) 5 bis 40 Massenteile und ein Gehalt des bifunktionellen (Meth)acrylats (B) 20 bis 80 Massenteile beträgt (mit der Maßgabe, dass die Gesamtmenge der polymerisierbaren Komponenten in der durch aktive Energiestrahlen härtbaren Harzzusammensetzung 100 Massenteile beträgt), wobei ein Elastizitätsmodul der Oberflächenschicht weniger als 160 MPa beträgt und eine Steigung eines Reibungskoeffizienten der Oberflächenschicht 1,8 x $10^{-3}$ oder weniger beträgt, wobei die Steigung des Reibungskoeffizienten $\mu_s$ durch die folgende Gleichung berechnet wird:

$$\mu_s = (\mu_{50} - \mu_1) / (50 - 1)$$

wobei $\mu_1$ ein Wert des dynamischen Reibungskoeffizienten bei der ersten Reibung und $\mu_{50}$ ein Wert des dynamischen Reibungskoeffizienten bei der fünfzigsten Reibung ist, und wobei der dynamische Reibungskoeffizient des Laminats unter Verwendung eines Reibungsprüfgeräts unter den folgenden Bedingungen gemessen wird: eine Last von 1000 g wird auf ein auf der Oberfläche des Laminats angeordnetes BEMCOT® M-3II mit einer Fläche von 2 $cm^2$ aufgebracht und eine hin- und hergehende Reibung wird 50-mal bei einem hin- und hergehenden Abstand von 30 mm und einer Kopfgeschwindigkeit von 30 mm/sec durchgeführt.

2. Laminat gemäß Anspruch 1, wobei die Steigung des Reibungskoeffizienten der Oberflächenschicht $-2{,}0 \times 10^{-3}$ oder mehr beträgt, und wobei vorzugsweise die Steigung des Reibungskoeffizienten der Oberflächenschicht $-1{,}8 \times 10^{-3}$ oder mehr und $1{,}0 \times 10^{-3}$ oder weniger beträgt.

3. Laminat gemäß Anspruch 1 oder 2, wobei der Elastizitätsmodul der Oberflächenschicht weniger als 100 MPa beträgt.

4. Laminat gemäß einem der Ansprüche 1 bis 3, wobei der Kontaktwinkel von Wasser auf der Oberflächenschicht 25° oder weniger oder 130° oder mehr beträgt.

5. Laminat gemäß einem der Ansprüche 1 bis 4, wobei der Gehalt der Komponente (A) 10 bis 30 Massenteile und der Gehalt der Komponente (B) 30 bis 70 Massenteile beträgt.

6. Laminat gemäß einem der Ansprüche 1 bis 5, wobei die durch aktive Energiestrahlen härtbare Harzzusammensetzung ferner ein Silikon(meth)acrylat (C) in einer Menge von 3 bis 85 Massenteilen enthält (mit der Maßgabe, dass die Gesamtmenge der polymerisierbaren Komponenten in der durch aktive Energiestrahlen härtbaren Harzzusammensetzung 100 Massenteile beträgt und (A) und (B) jeweils (C) ausschließen).

7. Laminat gemäß Anspruch 5, wobei die durch aktive Energiestrahlen härtbare Harzzusammensetzung ferner ein Silikon(meth)acrylat (C) in einer Menge von 7 bis 70 Massenteilen enthält (mit der Maßgabe, dass die Gesamtmenge der polymerisierbaren Komponenten in der durch aktive Energiestrahlen härtbaren Harzzusammensetzung 100 Massenteile beträgt und (A) und (B) jeweils (C) ausschließen).

8. Laminat gemäß einem der Ansprüche 1 bis 5, wobei die durch aktive Energiestrahlen härtbare Harzzusammensetzung eine Verbindung (D) mit einer SH-Gruppe enthält.

9. Laminat gemäß Anspruch 8, wobei die durch aktive Energiestrahlen härtbare Harzzusammensetzung ein bi- oder höherfunktionelles (Meth)acrylat (E) in einer Menge von 0 bis 95 Massenteilen, ein Silikon(meth)acrylat (C) in einer Menge von 0 bis 75 Massenteilen und die Verbindung (D) mit einer SH-Gruppe in einer Menge von 1 bis 60 Massenteilen enthält (mit der Maßgabe, dass die Gesamtmenge der polymerisierbaren Komponenten 100 Massenteile beträgt).

10. Laminat gemäß einem der Ansprüche 1 bis 9, wobei (i) die Oberflächenschicht gebildet ist aus einer Schicht, die aus einem gehärteten Produkt der durch aktive Energiestrahlen härtbaren Harzzusammensetzung zusammengesetzt ist, oder (ii) die Oberflächenschicht gebildet ist aus einer Schicht, die aus einem gehärteten Produkt der durch aktive Energiestrahlen härtbaren Harzzusammensetzung zusammengesetzt ist, und einer Oberflächenbehandlungsschicht, die auf der Schicht, die aus einem gehärteten Produkt der durch aktive Energiestrahlen härtbaren Harzzusammensetzung zusammengesetzt ist, als äußerste Oberflächenschicht ausgebildet ist.

11. Laminat gemäß einem der Ansprüche 1 bis 9, wobei ein Abstand der feinen Reliefstruktur 100 nm oder mehr und 250 nm oder weniger beträgt.

12. Antireflexionsgegenstand, umfassend das Laminat gemäß einem der Ansprüche 1 bis 11.

13. Bildanzeigevorrichtung, umfassend das Laminat gemäß einem der Ansprüche 1 bis 11.

14. Touchscreen, umfassend das Laminat gemäß einem der Ansprüche 1 bis 11.

**Revendications**

1. Stratifié comprenant une couche de surface ayant une surface formée dans une structure fine en relief, dans lequel la couche de surface inclut une couche composée d'un produit durci d'une composition de résine durcissable par rayons d'énergie active,

dans lequel la composition de résine durcissable par rayons d'énergie active contient un (méth)acrylate trifonctionnel ou d'une fonctionnalité supérieure (A) et un (méth)acrylate bifonctionnel (B),

dans lequel une teneur du (méth)acrylate trifonctionnel ou d'une fonctionnalité supérieure (A) est de 5 à 40 parties en masse et une teneur du (méth)acrylate bifonctionnel (B) est de 20 à 80 parties en masse (à condition qu'un total de composants polymérisables dans la composition de résine durcissable par rayons d'énergie active soit 100 parties en masse),

dans lequel un module d'élasticité de la couche de surface est inférieur à 160 MPa et une pente d'un coefficient de frottement de la couche de surface est de 1,8 x 10$^{-3}$ ou moins, dans lequel la pente du coefficient de frottement $\mu_s$ est calculée par l'équation suivante :

$$\mu_s = (\mu_{50} - \mu_1)/(50 - 1)$$

dans lequel $\mu_1$ est une valeur du coefficient de frottement dynamique au premier frottement et $\mu_{50}$ est une valeur du coefficient de frottement dynamique au cinquantième frottement, et dans lequel le coefficient de frottement dynamique du stratifié est mesuré en utilisant un testeur de frottement dans les conditions suivantes : une charge de 1000 g est appliquée au BEMCOT® M-3II ayant une aire de 2 cm$^2$ qui est placé sur la surface du stratifié et le frottement de va-et-vient est réalisé 50 fois à une distance de va-et-vient de 30 mm et une vitesse de tête de 30 mm/s.

2. Stratifié selon la revendication 1, dans lequel la pente du coefficient de frottement de la couche de surface est -2,0 x 10$^{-3}$ ou plus, et dans lequel de préférence la pente du coefficient de frottement de la couche de surface est -1,8 x 10$^{-3}$ ou plus et 1,0 x 10$^{-3}$ ou moins.

3. Stratifié selon la revendication 1 ou 2, dans lequel le module d'élasticité de la couche de surface est inférieur à 100 MPa.

4. Stratifié selon l'une quelconque des revendications 1 à 3, dans lequel un angle de contact de l'eau sur la couche de surface est 25° ou moins ou 130° ou plus.

5. Stratifié selon l'une quelconque des revendications 1 à 4, dans lequel une teneur du composant (A) est de 10 à 30 parties en masse et une teneur du composant (B) est de 30 à 70 parties en masse.

6. Stratifié selon l'une quelconque des revendications 1 à 5, dans lequel la composition de résine durcissable par rayons d'énergie active contient en outre un (méth)acrylate de silicone (C) à une teneur de 3 à 85 parties en masse (à condition qu'un total de composants polymérisables dans la composition de résine durcissable par rayons d'énergie active soit 100 parties en masse et chacun de (A) et (B) exclut (C)).

7. Stratifié selon la revendication 5, dans lequel la composition de résine durcissable par rayons d'énergie active contient en outre un (méth)acrylate de silicone (C) à une teneur de 7 à 70 parties en masse (à condition qu'un total de composants polymérisables dans la composition de résine durcissable par rayons d'énergie active soit 100 parties en masse et chacun de (A) et (B) exclut (C)).

8. Stratifié selon l'une quelconque des revendications 1 à 5, dans lequel la composition de résine durcissable par rayons d'énergie active contient un composé (D) ayant un groupe SH.

9. Stratifié selon la revendication 8, dans lequel la composition de résine durcissable par rayons d'énergie active contient un (méth)acrylate bifonctionnel ou d'une fonctionnalité supérieure (E) à une teneur de 0 à 95 parties en masse, un (méth)acrylate de silicone (C) à une teneur de 0 à 75 parties en masse, et le composé (D) ayant un groupe SH à une teneur de 1 à 60 parties en masse (à condition qu'un total de composants polymérisables soit 100 parties en masse).

10. Stratifié selon l'une quelconque des revendications 1 à 9, dans lequel (i) la couche de surface est constituée d'une couche composée d'un produit durci de la composition de résine durcissable par rayons d'énergie active ou (ii) la couche de surface est constituée d'une couche composée d'un produit durci de la composition de résine durcissable par rayons d'énergie active et d'une couche de traitement de surface formée sur la couche composée d'un produit durci de la composition de résine durcissable par rayons d'énergie active en tant que couche de surface la plus extérieure.

11. Stratifié selon l'une quelconque des revendications 1 à 9, dans lequel un pas de la structure fine en relief est 100 nm ou plus et 250 nm ou moins.

12. Article antireflet comprenant le stratifié selon l'une quelconque des revendications 1 à 11.

13. Dispositif d'affichage d'image comprenant le stratifié selon l'une quelconque des revendications 1 à 11.

14. Ecran tactile comprenant le stratifié selon l'une quelconque des revendications 1 à 11.

[Fig. 1]

[Fig. 2]

[Fig. 3]

[Fig. 4]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012135981 A
- JP 2012135983 A
- JP 2012201734 A
- JP 2012249312 A
- JP 63075702 A
- JP 2003172808 A
- JP 2005097371 A
- JP 2001183506 A
- JP 2001315247 A

- JP 11217560 A
- JP 7316468 A
- JP 2011076072 A
- EP 2128659 A1
- US 2009246494 A1
- EP 2447740 A1
- JP 2005156695 A
- JP 4689718 B
- JP 2006147149 A